(19) Europäisches Patentamt
European Patent Office
Office européen des brevets

(11) EP 4 314 107 B1

(12) **EUROPEAN PATENT SPECIFICATION**

(45) Date of publication and mention of the grant of the patent:
**25.12.2024 Bulletin 2024/52**

(21) Application number: **22718202.9**

(22) Date of filing: **25.03.2022**

(51) International Patent Classification (IPC):
***C08G 59/42*** *(2006.01)* ***C08G 63/16*** *(2006.01)*

(52) Cooperative Patent Classification (CPC):
(C-Sets available)
**C08G 59/4276; C09D 163/00; C09D 167/00; C09D 167/02** (Cont.)

(86) International application number:
**PCT/EP2022/057988**

(87) International publication number:
**WO 2022/207506 (06.10.2022 Gazette 2022/40)**

(54) **STORAGE STABLE THERMOSETTING POWDER COATING COMPOSITIONS COMPRISING AN EPOXY CROSSLINKER AND A POLYESTER RESIN PREPARED FROM CITRIC ACID AND/OR CITRIC ACID ANHYDRIDE, AND POWDER COATINGS THEREOF HAVING AT LEAST GOOD CHEMICAL RESISTANCE AND AT LEAST VERY GOOD ADHESION**

LAGERSTABILE WÄRMEHÄRTBARE PULVERBESCHICHTUNGSZUSAMMENSETZUNGEN MIT EINEM EPOXIDVERNETZER UND EINEM AUS ZITRONENSÄURE UND/ODER ZITRONENSÄUREALKYLESTERN HERGESTELLTEN POLYESTERHARZ SOWIE PULVERBESCHICHTUNGEN DARAUS MIT ZUMINDEST GUTER CHEMISCHER BESTÄNDIGKEIT UND ZUMINDEST SEHR GUTER HAFTUNG

COMPOSITIONS DE REVÊTEMENT EN POUDRE THERMODURCISSABLES STABLES AU STOCKAGE COMPRENANT UN AGENT DE RÉTICULATION ÉPOXY ET UNE RÉSINE POLYESTER PRÉPARÉE À PARTIR D’ACIDE CITRIQUE ET/OU D’ESTERS ALKYLIQUES D’ACIDE CITRIQUE ET REVÊTEMENTS EN POUDRE CORRESPONDANTS AYANT AU MOINS UNE BONNE RÉSISTANCE CHIMIQUE ET AU MOINS UNE TRÈS BONNE ADHÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2021 EP 21165562**

(43) Date of publication of application:
**07.02.2024 Bulletin 2024/06**

(73) Proprietor: **Covestro (Netherlands) B.V.**
**6167 RD Geleen (NL)**

(72) Inventors:
- **BONGAERTS, Johannes Gertrudis Christianus**
**6167RD Geleen (NL)**
- **BOS, Matthias Johannes Cornelis**
**6167RD Geleen (NL)**
- **BUIJSEN, Paulus Franciscus Anna**
**6167RD Geleen (NL)**
- **HETTINGA, Johannes Albertus**
**6167RD Geleen (NL)**
- **HUANG, Rubin**
**6167RD Geleen (NL)**

(74) Representative: **Levpat**
**c/o Covestro AG**
**Gebäude K12**
**51365 Leverkusen (DE)**

(56) References cited:
**US-B1- 6 599 993**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C09D 163/00, C08L 67/02;**
**C09D 167/00, C08L 63/00;**
**C09D 167/02, C08L 63/00**

## Description

The invention relates to thermosetting powder coating compositions comprising a constituent B which constituent B consists of an epoxy crosslinker of a particular epoxy equivalent weight and a polyester resin comprising reacted residues of citric acid, and/or citric acid anhydride, and optionally alkyl esters of citric acid. The invention further relates to cured thermosetting powder coating compositions (powder coatings), films, coatings, and articles based on or using the invention's thermosetting powder coating compositions. The invention further relates to various processes and uses of the thermosetting powder coating compositions of the invention.

Powder coating compositions that are substantially dry, finely divided, free-flowing, solid materials at room temperature, and atmospheric pressure have gained considerable popularity over liquid coating compositions for many reasons. For one, powder coatings are user and environmentally friendly materials since they are virtually free of harmful volatile organic solvents carriers that are typically present in liquid coating compositions. Therefore, powder coatings give off little, if any, volatile materials to the environment when cured; this eliminates the solvent emission problems associated with liquid coating compositions such as air pollution and dangers to workers' health employed in coating operations. Powder coating compositions (or commonly also known as powders) are also clean and convenient to use since they are applied cleanly over the substrate because they are in substantially dry solid form. The powders are easily swept up in the event of a spill and do not require special cleaning and spill containment supplies, as do liquid coating compositions. Working hygiene is thus improved. Moreover, powder coating compositions are nearly 100 % recyclable since the sprayed powders can be fully reclaimed and recombined with fresh powder feed. Recycling liquid coatings during application is often not done, leading to increased waste and hazardous waste disposal costs. In addition, powder coating compositions are ready to use since no thinning or dilution is required.

Powder coating compositions are typically finely divided particles of a polymer and a crosslinker in case of a thermosetting powder coating composition, which also usually contain pigments, fillers, and other additives. After applying to the substrate, the individual powder particles are melted in an oven and coalesce to form a continuous film typically known as a powder coating with decorative and protective properties associated with conventional organic coatings. The powder coating compositions are applied via methods that are considered fusion-coating processes; that is, at some time in the coating process, the powder particles must be fused or melted. The melting and fusion are usually carried out in a convection oven, although infrared and induction heating methods may also be used. Therefore, with minor exceptions, powder coatings are factory applied in fixed installations, essentially excluding their use in maintenance applications. Powder coating compositions are typically applied on a substrate via an electrostatic spray process; the powder coating composition is dispersed in an air stream and passed through a corona discharge field where the particles acquire an electrostatic charge. The charged particles are attracted to and deposited on the grounded object to be coated. The object -usually at room temperature-, is then placed in an oven where the powder melts and forms a powder coating. Alternatively, triboelectric spray application methods can also be applied, whilst a hybrid process based on a combination of high voltage electrostatic charging and fluidized-bed application techniques (electrostatic fluidized bed) may also be used. Powder coating compositions and their application process are the preferred coating compositions and process for coating many everyday items such as lawn and garden equipment, patio and other metal furniture, electrical cabinets, lighting, shelving and store fixtures, and many automotive components. Today, powder coating compositions are widely accepted, with thousands of installations in the factories of original equipment manufacturers (OEMs) and custom coating job shops.

Powder coating compositions can be thermosetting or thermoplastic. The present invention relates to the field of thermosetting powder coating compositions. Misev describes the preparation of thermosetting powder coating compositions in 'Powder Coatings, Chemistry and Technology' (pp. 224-300; 1991, John Wiley).

The citric acid (or equally 2-hydroxypropane-1,2,3-tricarboxylic acid) (CAS No 77-92-9) is a tribasic acid that has the molecular formula $C_6H_8O_7$ and the following chemical formula:

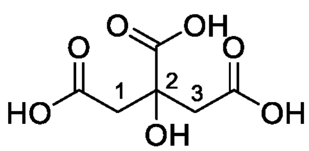

**2-hydroxypropane-1,2,3-tricarboxylic acid**

**(also known as citric acid)**

Citric acid can be obtained as an anhydrous form or as a monohydrate. The anhydrous form crystallizes from hot water while the monohydrate crystallizes from cold water. The citric acid monohydrate is converted to an anhydrous form at

about 78 °C. In the context of this specification (and invention), the term 'citric acid' encompasses both the anhydrous and the monohydrate. Citric acid exists in various fruits and vegetables, most notably citrus fruits, e.g. lemons and limes. Citric acid is a biobased monomer, making its use attractive to prepare products such as thermosetting powder coating compositions aiming to improve their biobased footprint.

US 6599993 B1 disclosed powder coating compositions for low gloss, textured coatings. The powder coating compositions of US 6599993 B1 include at least 9 wt% based on the total vehicle weight, of a branched carboxylic acid-functional polyester having a number average molecular weight ($M_n$) of from 425 to 1050 Da, an average functionality of at least 2.2 and at most 6, and at least one vehicle component reactive with carboxylic acid groups comprising an epoxy-functional material. Given the ranges of the $M_n$ and average functionality (f), the calculated acid value (AV) [AV= 56100 x (f/$M_n$)] of the branched carboxylic acid-functional polyesters ranges from 118 to 792 mg KOH/g resin.

Noordover, B. A. J. (abbreviated as Noordover), in chapter 4.3.6 of his thesis entitled 'Biobased step-growth polymers: Chemistry, Functionality and Applicability' (TU/e Eindhoven University of Technology; ISBN 978-90-386-1179-2; published on 01 January 2008) used polyester resins comprising reacted residues of citric acid in formulating thermosetting powder coating compositions. More particularly, Noordover prepared a thermosetting powder coating composition using a polyester resin prepared from citric acid, succinic acid and isosorbide (the amount of citric acid used was 8.5 mol% based on the polyester) with an epoxy crosslinker Araldite® PT 912 (epoxy equivalent weight of 141- 154 g/eq; supplied by Huntsman) which is a solid mixture (at 23± 1 °C and at atmospheric pressure) of two epoxy monomers, namely 60 wt% diglycidyl terephthalate and 40 wt% triglycidyl trimellitate (cf. Noordover, Ch. 4, p. 78, ll. 4-5; Ch. 4, p. 97, Scheme 4-8, structures III and IV; and Ch. 4, p. 105, Table 4-5, Example 7, footnote 1), the structures of which are provided below. Noordover was silent about the physical storage stability of these thermosetting powder coating compositions and the adhesion of powder coatings derived upon curing of said thermosetting powder coating compositions.

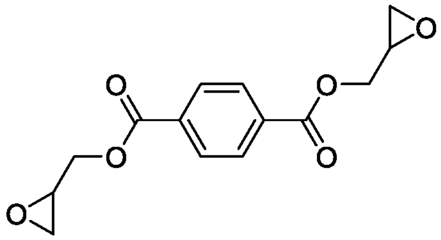

Diglycidyl terephthalate

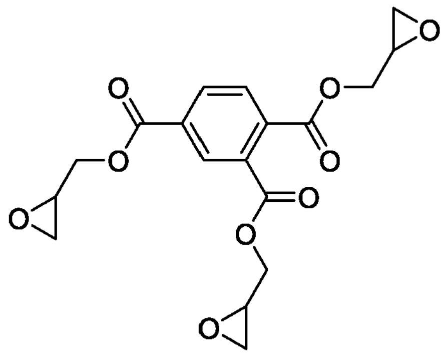

Triglycidyl trimellitate

Unfortunately, the use of polyester resins that contain reacted (polycondensed) residues of citric acid and/or citric anhydride, in commercial thermosetting powder coating compositions is somewhat limited, if any at all. One of the main reasons is that thermosetting powder coating compositions, which comprise polyester resins that contain reacted (polycondensed) residues of citric acid and/or citric anhydride, perform very poorly in physical storage stability even when are stored for short times, e.g. 7 days, and at low storage temperatures, e.g. 23-30 °C. This drawback -the very poor physical storage stability- is especially pronounced when said thermosetting powder coating compositions need to be stored for a prolonged time such as several weeks, e.g. 28 days; storage for a prolonged time is typically encountered during, for example, overseas shipping of these thermosetting powder coating compositions. During the shipping, said thermosetting powder coating compositions need to be stored at relatively low temperatures, typically lower than 15 °C. Such poor physical storage stability adds significantly to the logistics and the complexity of commercializing such thermosetting powder coating compositions due to special storage requirements. Furthermore, it is generally undesirable by the paint manufacturer and the end-user alike since poor physical storage stability of powder paints results in blocking or sintering during storage that typically results in an aesthetically undesirable orange peel finish when said thermosetting powder coating compositions are cured. This poor performance in physical storage stability severely limits the use of citric acid in commercially attractive thermosetting powder coating compositions, thus hampering the efforts to improve on the biobased footprint of powder coatings.

The complexity of this task -that is to develop thermosetting powder coating compositions which comprise polyester resins that contain polycondensed residues of citric acid and/or citric anhydride, having enhanced physical storage stability (especially at elevated temperatures, e.g. 40 °C and for a prolonged storage time, e.g. 28 days)- becomes

even more complicated when one wishes to obtain powder coatings upon heat-curing of said thermosetting powder coating compositions that also have at least good chemical resistance. Powder coatings with insufficient or poor chemical resistance are not suitable for several end-applications, such as kitchen appliances, kitchen cupboards, automotive articles, office furniture, shelves, metal cabinets, whitegoods, e.g. washing machines, dishwashers.

The complexity of the task to develop thermosetting powder coating compositions which comprise polyester resins that contain polycondensed residues of citric acid and/or citric anhydride, having enhanced physical storage stability (especially at elevated temperatures, e.g. 40 °C and for a prolonged storage time, e.g. 28 days) that are able to prepare upon heat-curing powder coatings which have at least good chemical resistance, becomes even more complicated when one wishes to obtain powder coatings upon heat-curing of said thermosetting powder coating compositions that also have at least very good -preferably excellent- adhesion. In various end-applications, such as white goods (e.g. fridges, freezers, washing machines, dishwashers), furniture (e.g. tables, chairs), cable covers, docking stations, tractors, crane, forklifts, bulldozers, powder coatings with very good adhesion is a key requirement. Powder coatings - otherwise suitable for such applications- without very good adhesion are unattractive for such applications.

Therefore, thermosetting powder coating compositions, which comprise polyester resins that contain polycondensed residues of citric acid and/or citric anhydride, having enhanced physical storage stability (especially at elevated temperatures, e.g. 40 °C and for a prolonged storage time, e.g. 28 days) that would be able to prepare upon heat-curing powder coatings which would have at least good chemical resistance and at least very good -preferably excellent-adhesion, are required since such a technical achievement would also render said thermosetting powder coating compositions attractive for a variety of uses and applications.

However, the preparation of thermosetting powder coating compositions comprising polyester resins which comprise reacted residues of citric acid and/or citric anhydride, where said thermosetting powder coating compositions have enhanced physical storage stability (especially at elevated temperatures, e.g. 40 °C and for a prolonged storage time, e.g. 28 days) and are able to produce powder coatings having at least good chemical resistance and at least very good -preferably excellent-adhesion, poses a severe technical challenge that has not been satisfactorily tackled so far. From as far as the inventors are aware, this technical challenge is severe since the combination of all these properties for thermosetting powder coating compositions, which comprise polyester resins that contain polycondensed residues of citric acid and/or citric anhydride, and powder coatings thereof, is not known in the art.

Therefore, the combination of enhanced physical storage stability (especially at elevated temperatures, e.g. 40 °C and for a prolonged storage time, e.g. 28 days) and at least good chemical resistance and at least very good -preferably excellent- adhesion for thermosetting powder coating compositions comprising polyester resins which comprise reacted residues of citric acid and/or citric anhydride poses a severe challenge to one of ordinary skill in the art.

Hence, there is a desire for preparing thermosetting powder coating compositions comprising polyester resins which comprise reacted residues of citric acid and/or citric anhydride, where said thermosetting powder coating compositions have enhanced physical storage stability (especially at elevated temperatures, e.g. 40 °C and for a prolonged storage time, e.g. 28 days) and are able to produce powder coatings having at least good chemical resistance and at least very good -preferably excellent-adhesion.

It is, therefore, the object of the invention to provide for thermosetting powder coating compositions comprising polyester resins which comprise reacted residues of citric acid and/or citric anhydride, where said thermosetting powder coating compositions have at least good -preferably very good, more preferably excellent-physical storage stability at elevated temperature (40 °C) and for a prolonged storage time (28 days) and are able to produce upon heat-curing (at 220 °C for 15 min) powder coatings which have at least good chemical resistance and at least very good -preferably excellent- adhesion.

This object was surprisingly achieved by the thermosetting powder coating compositions, as described in the claims and disclosed in the specification. The thermosetting powder coating compositions of the invention had at least good -preferably at least very good, more preferably excellent- physical storage stability (as this is defined in the specification; 40 °C for 28 days) and were able to produce upon heat-curing at 220 °C for 15 min) powder coatings having at least good chemical resistance and at least very good -preferably excellent- adhesion (as the storage stability, chemical resistance and adhesion are defined and determined in the specification). This constitutes a significant technological achievement in the field of thermosetting powder coating compositions since it renders commercially attractive and opens up the otherwise restricted (if currently any) use of a biobased monomer such as the citric acid in the preparation of polyester resins suitable for the preparation of thermosetting powder coating compositions and powder coatings with an improved biobased footprint. The reason being this invention significantly enhanced the physical storage stability performance of the thermosetting powder coating compositions comprising polyester resins which comprise reacted residues of citric acid and/or citric anhydride, maintaining at least good chemical resistance and at least very good -preferably excellent- adhesion.

The invention provides for thermosetting powder coating compositions as described in the claims and as disclosed in the entire specification.

The invention provides for a cured thermosetting powder coating composition as described in the claims and

as disclosed in the specification.

The invention provides for a film as described in the claims and as disclosed in the specification.

The invention provides for a coating as described in the claims and as disclosed in the specification.

The invention provides for an article as described in the claims and as disclosed in the specification.

The invention provides for an additive manufacturing process as described in the claims and as disclosed in the specification and for a product obtained by said process.

The invention provides for a process for making a composition and/or a product as described in the claims and as disclosed in the specification, and for a composition and/or product obtained by said process.

The invention provides for process for making objects as described in the claims and as disclosed in the specification, and for objects obtained by said processes.

The invention provides for uses as described in the claims and as disclosed in the specification.

**Explicit Preferments & Embodiments of the invention**

The invention provides for thermosetting powder coating compositions according to claim 1.

The following numbered paragraphs 1 to 40 in this section, constitute certain explicit preferments of the thermosetting powder coating compositions according to claim 1 (paragraphs 1 to 24), and certain further explicit embodiments of the invention of claim 1 (paragraphs 25 to 40). Many other variations, combinations or embodiments of the invention are apparent to those skilled in the art; these variations, combinations and embodiments of the invention are contemplated within the scope of the claimed invention. The antecedent basis for specific terms shown in the preferments (paragraphs 1 to 24) and the embodiments (25 to 40) is found in preceding preferments or embodiments mentioned in the section 'Preferments & Embodiments' of the specification. Any reference to components includes their preferments and preferred ranges as disclosed in the entire specification. Thus, according to claim 1 and/or according to any combination derived from i) the claims, ii) the disclosure in sections 1 to 5 of the specification (especially the sections relevant to the preferments and/or embodiments mentioned below), iii) the numbered paragraphs 1 to 40 , the invention provides for:

**1.** A thermosetting powder coating composition (abbreviated as TPCC) comprising a constituent B (abbreviated as B) in an amount of at least 25 and at most 100 pph of TPCC, wherein the B consists of a polyester resin component (abbreviated as PRC) and an epoxy crosslinker (abbreviated as EPX) that is able to react with the PRC, wherein:

- the PRC consists of one or more carboxylic acid functional polyester resins (each one of them abbreviated as CAPR), each of which has:
  - an acid value (abbreviated as AV) determined titrimetrically according to the ISO 2144:2000, of at least 38 and at most 84 mg KOH/g, and a hydroxyl value (abbreviated as OHV) determined titrimetrically according to the ISO 4629-2:2016, that is lower than the AV,
  - a glass transition temperature (abbreviated as $T_g$) determined according to the method described in the description, of at least 40 and at most 90 °C,
  - a number average molecular weight (abbreviated as $M_n$) determined via Size Exclusion Chromatography according to the

method described in the description, of at least 1400 and at most 10000 Da, and

wherein the CAPR is the polycondensation reaction product of:

- at least components A1 and A2, and optionally one or any combination of components A2', A3 and A4, or
- at least components A1, A2' and A3, and optionally one or any combination of components A2 and A4,

and wherein the CAPR comprises polycondensed residues of the components A1, A2, A2', A3 and A4 as mentioned above, and as each one of the components A1, A2, A2', A3 and A4 is described below:

- component A1 is selected from the group consisting of diols, and mixtures thereof,
- component A2 is selected from the group consisting of citric acid, citric acid anhydride, and mixtures thereof,
- component A2' is selected from the group consisting of C1-alkyl monoesters of citric acid, C2-alkyl monoesters of citric acid, C1-alkyl diesters of citric acid, C2-alkyl diesters of citric acid, C1-alkyl-C2-alkyl diesters of citric acid, C1-alkyl triester of citric acid, C2-alkyl triester of citric acid, C1-alkyl-C2-alkyl triesters of citric acid, and mixtures thereof,

- component A3 is selected from the group consisting of dicarboxylic acids, dicarboxylic acid anhydrides, and mixtures thereof, and
- component A4 is selected from the group consisting of tricarboxylic acids other than citric acid, tricarboxylic acid anhydrides other than citric acid anhydride, tetracarboxylic acids, tetracarboxylic acid anhydrides, trialcohols, tetralcohols, hexalcohols, and mixtures thereof,

wherein the total amount of the polycondensed residues of A2 (abbreviated as $W_{A2}$) when present in the CAPR, is at least 2.0 and at most 8.0 mol% based on CAPR, and wherein the total amount of the polycondensed residues of A2' (abbreviated as $W_{A2'}$) when present in the CAPR, is at least 2.0 and at most 8.0 mol% based on CAPR, and wherein the total amount of the polycondensed residues of A2 and A2' (abbreviated as $W_{A2/A2'}$) when both polycondensed residues of A2 and A2' are present in the CAPR, is at least 2.0 and at most 8.0 mol% based on CAPR, and wherein the total amount of monomers used for the preparation of the CAPR is 100 mol %, and
wherein the PRC has an acid value (abbreviated as $AV_{PRC}$) determined titrimetrically according to the ISO 2144:2000, of at least 38 and at most 84 mg KOH/g, and a hydroxyl value (abbreviated as $OHV_{PRC}$) determined titrimetrically according to the ISO 4629-2:2016, that is lower than the $AV_{PRC}$, and

- the EPX consists of one or more epoxy compounds (abbreviated as CEPX) selected from the group consisting of i) epoxy resins and ii) epoxy monomers, wherein each of the epoxy resins and each of the epoxy monomers :

  - is solid at 23±1 °C and atmospheric pressure,
  - is able to react with the PRC,
  - has more than one oxirane groups, and

  wherein the EPX has an epoxy equivalent weight (abbreviated as $EEW_{EPX}$) determined via manual titration according to the ASTM D1652-11(2019), of at least 560 and at most 950 g/eq,
  and

  wherein the ratio R is at least 0.8 and at most 2.0, and wherein the ratio R is determined according to the following equation:

$$R= (56100 \text{ x } W_{EPX})/ (W_{PRC} \text{ x } AV_{PRC} \text{ x } EEW_{EPX})$$

  wherein
  each of the $EEW_{EPX}$ and $AV_{PRC}$ is as determined above in paragraph 1,
  $W_{EPX}$: is the amount of EPX in the constituent B (in pph of B),
  $W_{PRC}$: is the amount of PRC in the constituent B (in pph of B),
  and
  wherein
  the aggregate of $W_{EPX}$ and $W_{PRC}$ is equal to 100 pph of B.

**2.** The thermosetting powder coating composition as disclosed in paragraph 1, wherein the $EEW_{EPX}$ is at least 590 and at most 900, preferably at least 630 and at most 880, for example at least 650 and at most 850 g/eq.
**3.** The thermosetting powder coating composition as disclosed in paragraph 1, wherein each of the epoxy resins and each of the epoxy monomers has an epoxy equivalent weight (abbreviated as $EEW_{CEPX}$) determined via manual titration according to the ASTM D1652-11(2019), of at least 560 and at most 950 g/eq, preferably at least 590 and at most 900 g/eq, more preferably at least 630 and at most 880 g/eq, for example at least 650 and at most 850 g/eq.
**4.** The thermosetting powder coating composition as disclosed in paragraph 1, wherein the $EEW_{EPX}$ is at least 560 and at most 950 g/eq and wherein each of the epoxy resins and each of the epoxy monomers has an epoxy equivalent weight (abbreviated as $EEW_{CEPX}$) determined via manual titration according to the ASTM D1652-11(2019), of at least 560 and at most 950 g/eq, preferably the $EEW_{EPX}$ is at least 590 and at most 900 g/eq and wherein each of the epoxy resins and each of the epoxy monomers has an epoxy equivalent weight (abbreviated as $EEW_{CEPX}$) determined via manual titration according to the ASTM D1652-11(2019), of at least 590 and at most 900 g/eq, more preferably the $EEW_{EPX}$ is at least 630 and at most 880 g/eq and wherein each of the epoxy resins and each of the epoxy monomers has an epoxy equivalent weight (abbreviated as $EEW_{CEPX}$) determined via manual titration according to the ASTM D1652-11(2019), of at least 630 and at most 880 g/eq, for example the $EEW_{EPX}$ is at least

650 and at most 850 g/eq and wherein each of the epoxy resins and each of the epoxy monomers has an epoxy equivalent weight (abbreviated as $EEW_{CEPX}$) determined via manual titration according to the ASTM D1652-11(2019), of at least 650 and at most 850 g/eq.

**5.** The thermosetting powder coating composition as disclosed in any one of the preceding paragraphs 1 to 4, wherein each of the CEPX is selected from the group consisting of epoxy resins, preferably each of the CEPX is selected from the group consisting of bisphenol-A based epoxy resins, bisphenol-F based epoxy resins, novolac epoxy resins, and halogenated epoxy resins, preferably each of the CEPX is selected from the group consisting of bisphenol-A based epoxy resins, bisphenol-F based epoxy resins, epoxyphenol novolac resins, and epoxycresol novolac resins, preferably each of the CEPX is selected from the group consisting of bisphenol-A based epoxy resins and bisphenol-F based epoxy resins, preferably each of the CEPX is selected from the group consisting of bisphenol-A based epoxy resins.

**6.** The thermosetting powder coating composition as disclosed in any one of the preceding paragraphs 1 to 5, wherein the ratio R is at least 0.8 and at most 2.0, for example at least 0.8 and at most 1.8, for example at least 0.8 and at most 1.6, for example at least 0.8 and at most 1.5, for example at least 0.8 and at most 1.4, for example at least 0.9 and at most 2.0, for example at least 0.9 and at most 1.8, for example at least 0.9 and at most 1.6, for example at least 0.9 and at most 1.5, for example at least 0.9 and at most 1.4, for example at least 0.95 and at most 2.0, for example at least 0.95 and at most 1.8, for example at least 0.95 and at most 1.6, for example at least 0.95 and at most 1.5, for example at least 0.95 and at most 1.4, for example at least 1.0 and at most 2.0, for example at least 1.0 and at most 1.8, for example at least 1.0 and at most 1.6, for example at least 1.0 and at most 1.5, for example at least 1.0 and at most 1.4.

**7.** The thermosetting powder coating composition as disclosed in any one of the preceding paragraphs 1 to 6, wherein

- the $W_{A2}$ is at least 2.0 and at most 7.8, and the $W_{A2'}$ is at least 2.0 and at most 7.8, and the $W_{A2/A2'}$ is at least 2.0 and at most 7.8 mol% based on CAPR,
- preferably the $W_{A2}$ is at least 2.0 and at most 7.6, and the $W_{A2'}$ is at least 2.0 and at most 7.6, and the $W_{A2/A2'}$ is at least 2.0 and at most 7.6 mol% based on CAPR,
- more preferably the $W_{A2}$ is at least 2.2 and at most 8.0, and the $W_{A2'}$ is at least 2.2 and at most 8.0, and the $W_{A2/A2'}$ is at least 2.2 and at most 8.0 mol% based on CAPR,
- for example the $W_{A2}$ is at least 2.2 and at most 7.8, and the $W_{A2'}$ is at least 2.2 and at most 7.8, and the $W_{A2/A2'}$ is at least 2.2 and at most 7.8 mol% based on CAPR
- for example the $W_{A2}$ is at least 2.2 and at most 7.6, and the $W_{A2'}$ is at least 2.2 and at most 7.6, and the $W_{A2/A2'}$ is at least 2.2 and at most 7.6 mol% based on CAPR,
- for example the $W_{A2}$ is at least 2.3 and at most 8.0, and the $W_{A2'}$ is at least 2.3 and at most 8.0, and the $W_{A2/A2'}$ is at least 2.3 and at most 8.0 mol% based on CAPR,
- for example the $W_{A2}$ is at least 2.3 and at most 7.8, and the $W_{A2'}$ is at least 2.3 and at most 7.8, and the $W_{A2/A2'}$ is at least 2.3 and at most 7.8 mol% based on CAPR,
- for example the $W_{A2}$ is at least 2.3 and at most 7.6, and the $W_{A2'}$ is at least 2.3 and at most 7.6, and the $W_{A2/A2'}$ is at least 2.3 and at most 7.6 mol% based on CAPR.

**8.** The thermosetting powder coating composition as disclosed in any one of the preceding paragraphs 1 to 7, wherein:

- the thermosetting powder coating composition comprises the constituent B in an amount of at least 35 and at most 100, for example at least 45 and at most 100, for example at least 50 and at most 100, for example at least 60 and at most 100, for example at least 65 and at most 100 pph of TPCC,
  and/or
- the AV is at least 38 and at most 84, for example the AV is at least 39 and most 84 and the $AV_{PRC}$ is at least 39 and at most 84, for example the AV is at least 40 and most 84 and the $AV_{PRC}$ is at least 40 and at most 84, for example the AV is at least 38 and most 82 and the $AV_{PRC}$ is at least 38 and at most 82, for example the AV is at least 39 and most 82 and the $AV_{PRC}$ is at least 39 and at most 82, for example the AV is at least 40 and most 82 and the $AV_{PRC}$ is at least 40 and at most 82, for example the AV is at least 38 and most 80 and the $AV_{PRC}$ is at least 38 and at most 80, for example the AV is at least 39 and most 80 and the $AV_{PRC}$ is at least 39 and at most 80, for example the AV is at least 40 and most 80 and the $AV_{PRC}$ is at least 40 and at most 80, for example the AV is at least 38 and most 79 and the $AV_{PRC}$ is at least 38 and at most 79, for example the AV is at least 39 and most 79 and the $AV_{PRC}$ is at least 39 and at most 79, for example the AV is at least 40 and most 79 and the $AV_{PRC}$ is at least 40 and at most 79 mg KOH/g,
  and/or
- the $T_g$ is at least 45 and at most 90, for example at least 50 and at most 90, for example at least 40 and at most 85, for example at least 45 and at most 85, for example at least 50 and at most 85, for example at least 40 and

at most 80, for example at least 45 and at most 80, for example at least 50 and at most 80 °C, and/or

- the $M_n$ is at least 1400 and at most 10000, for example at least 1400 and at most 9000, for example at least 1500 and at most 10000, for example at least 1500 and at most 9000, for example at least 1600 and at most 10000, for example at least 1600 and at most 9000, for example at least 1650 and at most 10000, for example at least 1650 and at most 9000, for example at least 1700 and at most 10000, for example at least 1700 and at most 9000 Da.

**9.** The thermosetting powder coating composition as disclosed in any one of the preceding paragraphs 1 to 8, wherein the CAPR is the polycondensation reaction product of:

- at least components A1, A2, A3, and optionally one or any combination of components A2' and A4, or
- at least components A1, A2' and A3, and optionally one or any combination of components A2 and A4.

**10.**The thermosetting powder coating composition as disclosed in any one of the preceding paragraphs 1 to 8, wherein the CAPR is the polycondensation reaction product of:

- at least components A1 and A2, and optionally one or any combination of components A3 and A4.

**11.**The thermosetting powder coating composition as disclosed in any one of the preceding paragraphs 1 to 8, wherein the CAPR is the polycondensation reaction product of:

- at least components A1, A2 and A3 and optionally component A4.

**12.**The thermosetting powder coating composition as disclosed in any one of the preceding paragraphs 1 to 8, wherein the CAPR is the polycondensation reaction product of:

- only components A1, A2, A3, and optionally one or any combination of components A2' and A4, or
- only components A1, A2' and A3, and optionally one or any combination of components A2 and A4.

**13.**The thermosetting powder coating composition as disclosed in any one of the preceding paragraphs 1 to 8, wherein the CAPR is the polycondensation reaction product of:

- only components A1 and A2, and optionally one or any combination of components A3 and A4.

**14.**The thermosetting powder coating composition as disclosed in any one of the preceding paragraphs 1 to 8, wherein the CAPR is the polycondensation reaction product of:

- only components A1, A2 and A3 and optionally component A4.

**15.**The thermosetting powder coating composition as disclosed in any one of the preceding paragraphs 1 to 14, wherein the amount of the polycondensed residue of A4 -when polycondensed residue of A4 is present in the CAPR-, is at most 5, preferably at most 4.5, for example at most 4, for example at most 3.5, for example at most 3, for example at most 2.5, for example at most 2, for example at most 1.5, for example at most 1, for example at most 0.5, for example at most 0.2 mol% based on CAPR; for example the CAPR does not contain a polycondensed residue of A4.

**16.**The thermosetting powder coating composition as disclosed in any one of the preceding paragraphs 1 to 15, wherein the A1 component is selected from the group consisting of ethane-1,2-diol, 2,2-dimethylpropane-1,3-diol, 1,2-propanediol, 1,3-propanediol, 2-methyl-1,3-propanediol, 1,2-butanediol, 1,3-butanediol, 1,4-butanediol, 2,3-butanediol, 2-butyl-2-ethyl-1,3-propanediol, 1,3-butylethyl propanediol, 1,3-isobutanediol, 1,2-isobutanediol, 2,3-butanediol, 2-butenediol(1,4), 1,6-hexanediol, isosorbide, 2,2,4-trimethyl-1,3-pentanediol, 1,2-cyclopentanediol, 1,3-cyclopentanediol, 1,4-cyclopentanediol, 1,6-hexanediol, 1,4-dimethoxy cylcohexane, 1,2-cyclohexanediol, 1,3-cyclohexanediol, 1,4-cyclohexanediol, 1,4-cyclohexanedimethanol, 4,4'-methylene-bis(cyclohexanol), 4,4'-isopropylidene-bis(cyclohexanol), 1,3-isobutanediol, 1,2-isobutanediol, 2,3-butanediol, 2-butenediol(1,4), 1,4-bis(hydroxymethyl)cyclohexane, 1,3-bis(hydroxyethyl) cyclohexane, 1,3-bis(hydroxypropyl) cyclohexane, 1,3-bis(hydroxyisopropyl) cyclohexane, 1,12-dodecanediol,1,4-dimethylolbenzene, 1,3-isobutanediol, 1,2-isobutanediol, 2,3-butanediol, 2-butenediol(1,4), 1,12-dodecanediol,1,4-dimethylolbenzene, and mixtures thereof.

**17.** The thermosetting powder coating composition as disclosed in any one of the preceding paragraphs 1 to 16, wherein the component A3 is selected from the group consisting of terephthalic acid, isophthalic acid, succinic acid, adipic acid, sebacic acid, 2,6-naphthalene dicarboxylic acid, 4,4'-oxybisbenzoic acid, cyclohexane dicarboxylic acid, maleic acid, phthalic anhydride, maleic anhydride, fumaric acid, itaconic acid, and mixtures thereof, preferably the component A3 is selected from the group consisting of terephthalic acid, isophthalic acid, succinic acid, adipic acid, sebacic acid, cyclohexane dicarboxylic acid, maleic acid, phthalic anhydride, maleic anhydride, fumaric acid, itaconic acid, and mixtures thereof, for example the component A3 is selected from the group consisting of terephthalic acid, isophthalic acid, succinic acid, adipic acid, sebacic acid, cyclohexane dicarboxylic acid, phthalic anhydride, and mixtures thereof.

**18.** The thermosetting powder coating composition as disclosed in any one of the preceding paragraphs 1 to 17, wherein the A4 component is selected from the group consisting of trimellitic acid, trimellitic anhydride, pyromellitic acid, pyromellitic dianhydride, benzene-1,3,5-tricarboxylic acid, trimethylolpropane, trimethylolethane, glycerol, pentaerythritol, dipentaerythritol, and mixtures thereof, preferably from the group consisting of trimellitic anhydride, pyromellitic dianhydride, benzene-1,3,5-tricarboxylic acid, trimethylolpropane, trimethylolethane, pentaerythritol, dipentaerythritol, and mixtures thereof.

**19.** The thermosetting powder coating composition as disclosed in any one of the preceding paragraphs 1 to 18, wherein the CAPR does not contain any polycondensed residue of glycerol, and the trialcohols of component A4 do not include glycerol.

**20.** The thermosetting powder coating composition as disclosed in any one of the preceding paragraphs 1 to 19, wherein the TPCC comprises the constituent B in an amount of at least 45 and at most 100 pph of TPCC, and wherein:

- the AV is at least 38 and at most 79 and the $AV_{PRC}$ is at least 38 and at most 79 mg KOH/g, preferably the AV is at least 40 and at most 79 and the $AV_{PRC}$ is at least 40 and at most 79 mg KOH/g,
- the $T_g$ is at least 50 and at most 85, preferably at least 50 and at most 80 °C,
- the $M_n$ is at least 1400 and at most 10000, preferably at least 1400 and at most 9000 Da,
- each of the epoxy resins and each of the epoxy monomers has an epoxy equivalent weight (abbreviated as $EEW_{CEPX}$) determined via manual titration according to the ASTM D1652-11(2019), of at least 650 and at most 850 g/eq, and wherein the EPX has an epoxy equivalent weight (abbreviated as $EEW_{EPX}$) of at least 650 and at most 850 g/eq,
  and
- the ratio R is at least 0.8 and at most 2.0, for example at least 0.8 and at most 1.8, for example at least 0.8 and at most 1.6, for example at least 0.8 and at most 1.5, for example at least 0.8 and at most 1.4, for example at least 0.9 and at most 2.0, for example at least 0.9 and at most 1.8, for example at least 0.9 and at most 1.6, for example at least 0.9 and at most 1.5, for example at least 0.9 and at most 1.4, for example at least 0.95 and at most 2.0, for example at least 0.95 and at most 1.8, for example at least 0.95 and at most 1.6, for example at least 0.95 and at most 1.5, for example at least 0.95 and at most 1.4, for example at least 1.0 and at most 2.0, for example at least 1.0 and at most 1.8, for example at least 1.0 and at most 1.6, for example at least 1.0 and at most 1.5, for example at least 1.0 and at most 1.4.

**21.** The thermosetting powder coating composition as disclosed in any one of the preceding paragraphs 1 to 20, wherein the CAPR does not comprise any urethane groups, and/or any hydrocarbyl group having more than 19 carbon atoms, and/or any hydrocarbylene group having more than 19 carbon atoms.

**22.** The thermosetting powder coating composition as disclosed in any one of the preceding paragraphs 1 to 21, wherein the thermosetting powder coating composition further comprises a pigment.

**23.** The thermosetting powder coating composition as disclosed in any one of the preceding paragraphs 1 to 22, wherein the thermosetting powder coating composition further comprises waxes, and/or degassing agents, and/or smoothness enhancing agents, and/or appearance enhancing agents, and/or UV stabilizers, and/or visible light stabilizers.

**24.** The thermosetting powder coating composition as disclosed in any one of the preceding paragraphs 1 to 23, in any combination.

**25.** A cured thermosetting powder coating composition as the thermosetting powder coating composition is disclosed in any one of the preceding paragraphs 1 to 24.

**26.** A film comprising a cured thermosetting powder coating composition as the cured thermosetting powder coating composition is disclosed in paragraph 25.

**27.** A coating comprising a cured thermosetting powder coating composition as the cured thermosetting powder coating composition is disclosed in paragraph 25.

**28.** An article having either i) coated thereon a thermosetting powder coating composition as the thermosetting powder coating composition is disclosed in any one of the paragraphs 1 to 24, or ii) coated and cured thereon a

thermosetting powder coating composition, as the thermosetting powder coating composition is disclosed in any one of the paragraphs 1 to 24.

**29.**An additive manufacturing process comprising the steps of providing a thermosetting powder coating composition as disclosed in any one of the paragraphs 1 to 24, and sintering and/or melting and/or extruding and/or jetting and/or ultrasonic welding and/or irradiating the thermosetting powder coating composition.

**30.** A process for making a composition or a product suitable for any one of the applications selected from the group consisting of powder coatings, powder in-mould coatings, 3D-printing applications, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications, wherein the process comprises the steps of providing a TPCC as disclosed in any one of the paragraphs 1 to 24, and reacting the PRC and EPX components of the constituent B of the thermosetting powder coating composition.

**31.**A process for making an object, wherein the process comprises the steps of i) providing a TPCC as disclosed in any one of the paragraphs 1 to 24, ii) providing a mould, iii) coating the interior surface of the mould with the TPCC via, for example, coating application methods suitable for powder coatings, e.g. electrostatic spray, triboelectric spray , iv) introducing into the mould another composition different than the TPCC, e.g. a fibre-containing composition, v) closing the mould and optionally applying pressure and/or vacuum and/or heating the mould at any temperature in the range of 70 to 250 °C, preferably in the range of 100 to 250 °C range, preferably in the range of 120 to 250 °C preferably in the range of 140 to 220 °C, for at most 1 h -preferably at most 30 minutes- to form the object, and vi) collect the object from the mould.

**32.** A process for making an object, wherein the process comprises the steps of i) providing a TPCC as disclosed in any one of the paragraphs 1 to 24, ii) providing a preheated mould or press (collectively mentioned as 'preheated shaper') at any temperature in the range of 50 to 250 °C, iii) either coating an article with the TPCC via for example coating application methods suitable for powder coatings, e.g. electrostatic spray, triboelectric spray, electrostatic fluidized bed, flame spray, or scattering the TPCC over an article, iv) introducing the article prepared at the end of step iii), into the preheated shaper, v) closing the shaper and optionally applying pressure (via for example a recurring press or a continuous press, e.g. roller and/or belt), and/or applying vacuum and/or heating the shaper at any temperature in the range of 70 to 250 °C, preferably in the range of 100 to 250 °C range, preferably in the range of 120 to 250 °C preferably in the range of 140 to 220 °C, for at most 1 h -preferably at most 30 minutes- to form the object, and vi) collect the object from the shaper.

**33.**A process for making an object, wherein the process comprises the steps of i) providing a TPCC as disclosed in any one of the paragraphs 1 to 24, ii) providing a mould, iii) introducing the TPCC into the mould, iv) applying pressure and/or vacuum and/or heating the mould at any temperature in the range of 70 to 250 °C, preferably in the range of 100 to 250 °C range, preferably in the range of 120 to 250 °C preferably in the range of 140 to 220 °C, for at most 1 h -preferably at most 30 minutes- to form the object, and v) collect the object from the mould.

**34.**A use of:

i) a TPCC as disclosed in any one of the paragraphs 1 to 24; or
ii) a cured TPCC as disclosed in paragraph 25; or
iii) a film as disclosed in paragraph 26; or
iv) a coating as disclosed in paragraph 27; or
v) an article as disclosed in paragraph 28;

in powder coatings, powder-in-mould coatings, 3D-printing, automotive applications (car parts, agricultural machines, composite structures, ceramic structures), marine applications (ships, boats), aerospace applications (planes, helicopters, composite structures, ceramic structures), medical compositions, medical products, medical devices (artificial joints, meshes, woven or non-woven sheets, tapes, ribbons, bands, cables, tube-like products for e.g. ligament replacement, composite structures, ceramic structures), defence applications (ballistic protection, body armour, ballistic vests, ballistic helmets, ballistic vehicle protection, composite structures, ceramic structures), sports/recreational applications (fencing, skates, skateboarding, snowboarding, suspension lines on sport parachutes, paragliders, kites, kite lines for kite sports, climbing equipment, composite structures, ceramic structures), architectural applications (windows, doors, (pseudo-)walls, cables, bottling applications, household applications (household appliances, white goods, furniture, computer housings), machinery applications (can and bottle handling machine parts, moving parts on weaving machines, bearings, gears, composite structures, ceramic structures, computer housings), can applications, coil applications, energy applications for e.g. generators for wind, tide or solar energy, textile applications for e.g. fabrics, this can be very broad from impregnation technical textiles to for example complete composites both as coating and as a binder for composites, and electrical applications (cabinets for electrical wire

or switch boards).

**35.** A use of:

i) a TPCC as disclosed in any one of the paragraphs 1 to 24; or
ii) a cured TPCC as disclosed in paragraph 25; or
iii) a film as disclosed in paragraph 26; or
iv) a coating as disclosed in paragraph 27; or
v) an article as disclosed in paragraph 28;

in powder coatings, powder-in-mould coatings, 3D-printing, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications.

**36.** A product obtained by the process of paragraph 29.

**37.** A composition or a product obtained by the process of paragraph 30.

**38.** An object obtained by the process of paragraph 31.

**39.** An object obtained by the process of paragraph 32.

**40.** An object obtained by the process of paragraph 33.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in any one of numbered paragraphs 1 to 40 , shown above can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

All combinations of minimum and maximum values of the parameters disclosed in the specification may be used to define the parameter ranges for various preferments or embodiments of the invention.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification can be combined with each other.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects of the invention as these are disclosed in sections 1 to 5 can be combined with each other.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 1 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 2 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 3 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

Unless otherwise explicitly stated, any feature, element, component, embodiment, aspect, range and especially

any preferred feature, preferred element, preferred embodiment, preferred aspect, preferred range, preferred combination of ranges, preferments, embodiments and aspects in connection with any piece of the disclosure disclosed in section 4 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 5 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects of the invention as these are disclosed in sections 1 to 5 can be combined with each other and with any feature, element, component, embodiment, aspect, range and especially any preferred feature, preferred element, preferred embodiment, preferred aspect, preferred range, preferred combination of ranges, preferments, embodiments and aspects of the invention as these are disclosed in numbered paragraphs 1 to 40 .

**Definitions**

By 'TPCC' is meant in the specification the thermosetting powder coating compositions of the invention as disclosed in the entire specification and in the claims.

By '$M_n$' is meant the number average molecular weight. The $M_n$ is determined via Size Exclusion Chromatography (SEC) as described in the specification.

By '$M_w$' is meant the weight average molecular weight. The $M_w$ is determined via Size Exclusion Chromatography (SEC) as described in the specification.

By 'polydispersity (D)' is meant in the specification: $D= M_w/M_n$ wherein $M_w$ and $M_n$ are the weight average molecular weight and the number average molecular weight, respectively.

By '$T_g$' is meant in the specification the glass transition temperature. The $T_g$ is determined via DSC (Differential Scanning Calorimetry) as described in the specification.

By 'ratio R' (or equally 'R') is meant in the specification the ratio described in paragraph 6.7 in the Examples section.

By 'carboxylic acid functional polyester resin' is meant a polyester resin that has an acid value that is higher than its hydroxyl value. A carboxylic acid functional polyester resin has predominantly carboxylic acid functional groups.

By 'hydrocarbon' is meant in the specification a chemical compound consisting of carbon and hydrogen only.

By 'hydrocarbyl' is meant in the specification a univalent organic group formed by removing a hydrogen atom from a saturated or unsaturated hydrocarbon. Exemplary hydrocarbyls include but are not limited to methyl, ethyl, propyl, butyl, pentyl, hexyl, octyl, nonyl, decyl, eicosyl, triantacosyl, tetracontyl, pentacontyl, hexacontyl, phenyl, naphthyl, benzyl.

By 'composition' is meant in the specification the combining and/or mixture of distinct chemical substances and/or components to form a whole.

By 'powder' is meant in the specification, a substantially dry solid substance at room temperature and at atmospheric pressure reduced to a state of fine, loose particles wherein the individual particles have preferably a maximum particle size of at most 200, more preferably of at most 180, even more preferably of at most 160, most preferably of at most 150, especially of at most 140, more especially of at most 130, most especially of at most 120, for example of at most 110, for example of at most 100, for example of at most 90 μm at 23 °C and at atmospheric pressure; the individual particles have preferably a minimum particle size of at least 10, more preferably of at least 15, even more preferably of at least 20, most preferably of at least 25, especially of at least 30, more especially of at least 35, most especially of at least 40, for example of at least 45, for example of at least 50, for example of at least 60, for example of at least 70 μm at 23 °C and at atmospheric pressure. A particle is defined as a small object that: a) has mean linear dimensions as described in the specification after and b) behaves as a whole unit in terms of its transport and properties. The particle size distribution (PSD) of a powder is a list of values or a mathematical function that defines the relative amounts of particles present, sorted according to size. The terms 'particle size' and 'particle size distribution' will be used interchangeably in the context of the invention when used in relation to a powder. The method used to measure the particle size of the thermosetting powder coating compositions of the invention is sieve analysis. According to it, the powder is separated on sieves of different sizes. Thus, the PSD is defined in terms of discrete size ranges: e.g. 'weight% of sample

powder has a particle size in the range of 75 microns to 90 microns', when sieves of these sizes are used. Preferably, 90 weight% of the thermosetting powder coating composition of the invention has a particle size in the range of 20 to 200 micron. The PSD can be determined, for example, by the following method: a certain amount of thermosetting powder coating composition, for example, 100 g, is brought onto a a vibratory sieve shaker sieving apparatus, e.g. Analysette 3 model Spartan (supplied by Fritsch GmbH) equipped with a 200-micron sieve. The sample is sieved for 15 minutes at a 2.5 mm amplitude. The fraction of the sample which remained on the sieve was weighed after sieving. The fraction of the sample that went through the sieve (sieved fraction) is collected and is placed on a 160-micron sieve and is sieved as mentioned herein above. Once the same measurements (weighing) are performed as mentioned herein above, the same procedure is repeated using sequentially a 140, a 125, a 112, a 100, a 90, a 75, a 50 and a 20-micron sieve; the last sieved fraction with a size smaller than 20 microns is also weighed. Summing up the various weight fractions, this should yield the initial amount of sample, in this example 100 g. The various weight fractions represent the PSD as a list of values representing the relative amounts of particles present, sorted according to sieves used.

By 'substantially dry' is meant in the specification that a powder, e.g. a thermosetting powder composition, or a polyester resin, does not comprise any deliberately added organic solvent and/or aqueous solvent, e.g. water or moisture, but the powder or the polyester resin may comprise moisture absorbed from the atmosphere in an amount of up to 30, preferably up to 20, more preferably up to 10, even more preferably up to 5, most preferably up to 3, especially up to 2, more especially up to 1 % w/w based on the total weight of the thermosetting powder composition or that of the polyester resin.

By 'thermosetting powder coating compositions' or 'powders' is meant in the specification, a mixture of components in the form of a powder and which compositions have the ability to form an irreversible crosslinked network (the so-called 'cured form' or 'cured composition') upon curing, preferably via heat and/or radiation curing, more preferably via heat curing. For clarity, a reference to any one of the terms 'thermosetting powder coating compositions' or 'powders' is to be understood as uncured thermosetting powder coating compositions or equally uncured powders.

By 'components of a thermosetting powder coating composition' is meant in the specification constituent elements, their preferred embodiments and combinations thereof, that constitute part of the thermosetting powder coating composition of the invention; said components, their preferred embodiments and combinations thereof, should be construed in view of the entire disclosure.

By 'room temperature' is meant in the specification a temperature of 2311 °C.

By 'atmospheric pressure' is meant in the specification pressure of 1 atm (1 atm= 101325 Pa).

By 'PSS' of a thermosetting powder coating composition is meant in the specification the physical storage stability of a thermosetting powder coating composition as the physical storage stability is determined in the specification (see Examples; the physical storage stability (PSS) of the thermosetting powder coating compositions is tested according to ISO 8130-8:2010 at 40 ºC for a total of 28 days). By 'thermosetting powder coating composition having excellent PSS' is meant in the specification that a thermosetting powder coating composition has a physical storage stability (PSS) of at least 9 and at most 10. By 'thermosetting powder coating composition having very good PSS' is meant in the specification that a thermosetting powder coating composition has a physical storage stability (PSS) of at least 7 and at most 8. By 'thermosetting powder coating composition having good PSS' is meant in the specification that a thermosetting powder coating composition has a physical storage stability (PSS) of 6. By 'thermosetting powder coating composition having insufficient PSS' is meant in the specification that a thermosetting powder coating composition has a physical storage stability (PSS) of at least 4 and at most 5. By 'thermosetting powder coating composition having poor PSS' is meant in the specification that a thermosetting powder coating composition has a physical storage stability (PSS) of at least 2 and at most 3. By 'thermosetting powder coating composition having very poor PSS' is meant in the specification that a thermosetting powder coating composition has a physical storage stability (PSS) of 1.

By 'very poor chemical resistance' referring to a powder coating, is meant that said powder coating can withstand at most 39 acetone double rubs. By 'poor chemical resistance' referring to a powder coating is meant that said powder coating can withstand at least 40 and at most 69 acetone double rubs. By 'insufficient chemical resistance' referring to a powder coating is meant that said powder coating can withstand at least 70 and at most 99 acetone double rubs. By 'good chemical resistance' referring to a powder coating is meant that said powder coating can withstand at least 100 and at most 200 acetone double rubs. By 'very good chemical resistance' referring to a powder coating is meant that said powder coating can withstand at least 201 and at most 499 acetone double rubs. By 'excellent chemical resistance' referring to a powder coating is meant that said powder coating can withstand at least 500 acetone double rubs. The acetone double rubs (abbreviated as ADR) are measured according to the relevant method described in the Examples.

By 'AH' of a powder coating is meant in the specification the adhesion of a powder coating as the adhesion is determined in the specification. By 'powder coating having excellent adhesion' is meant in the specification that a powder coating has an adhesion of 0. By 'powder coating having very good adhesion' is meant in the specification that a powder coating has an adhesion of 1. By 'powder coating having good adhesion' is meant in the specification that a powder coating has an adhesion of 2. By 'powder coating having insufficient adhesion' is meant in the specification that a powder coating has an adhesion of 3. By 'powder coating having poor adhesion' is meant in the specification that the a powder

coating has an adhesion of 4. By ’powder coating having very poor adhesion’ is meant in the specification that a powder coating has an adhesion of 5.

Certain moieties, species, groups, repeat units, monomers, resins, polymers, materials, mixtures, compositions and/or formulations which comprise and/or are used in some or all of the invention as described in the specification may exist as one or more different forms such as any of those in the following non-exhaustive list: stereoisomers [such as enantiomers, diastereoisomers (e.g. cis/trans isomers, conformers, rotamers)], and/or constitutional isomers. The invention comprises and/or uses all such forms which are effective as defined in the specification.

By ‘mol% based on a polyester resin’ (e.g. mol% based on CAPR) is meant in the specification the total amount of moles of monomers reacted to produce said polyester resin. For clarity, the total amount of monomers reacted to produce the polyester resin is (allowing for rounding errors) 100 mol%. For example, the total amount of the specific components -as described in the claims and as disclosed in the entire specification- that are used to prepare the polyester resins CAPR is 100 mol%.

By ‘pph’ is meant weight parts per hundred weight parts.

By ‘lower than’ is meant to specify that the relevant maximum boundary value is not included in the range.

By ’higher than’ is meant to specify that the relevant minimum boundary value is not included in the range.

By ’rpm’ is meant revolutions per minute.

By ’article’ is meant in the specification an individual object or item or element of a class designed to serve a purpose or perform a particular function and can stand alone; the article can be in any size, form or shape. A substrate is an example of an article. Preferably, said article is selected from the group consisting of heat-sensitive articles, non-heat sensitive articles and combinations thereof; more preferably said article is selected from the group of non-heat sensitive articles, even more preferably said article is selected from the group consisting of thermoplastic composite, thermoset composite, fibre reinforced composites, sandwich materials, e.g. sandwich materials comprising heat sensitive foam core, metal and combinations thereof. Typical examples of non-heat-sensitive articles include glass, ceramic, composite, fibre cement board, or metal, such as aluminium, copper or steel articles, such as carbon steel, where the main alloying constituent is carbon. Carbon steel usually contains carbon 0.2 and 1.5 % w/w based on the total alloy composition and often contains other constituents such as manganese, chromium, nickel, molybdenum, copper, tungsten, cobalt, or silicon, depending on the desired steel properties. Steel has properties similar to iron if the amount of carbon is not too high, for example, not more than 1.5 % w/w based on the total alloy composition. The steel may be surface treated (treatment with zinc, or zinc phosphate or iron phosphate) or non-surface treated. Heat-sensitive articles, for example, heat-sensitive substrates, include plastic articles, wood articles, for example, solid wood, such as hardwood, softwood, plywood; veneer, particleboard, low-density fibreboard, medium-density fibreboard and high-density fibreboard, OSB (Oriented Strand Board) wood laminates, chipboard and other articles in which wood is an important constituent, such as foil covered wooden articles, engineered wood, plastic modified wood, plastic articles or wood plastic compounds (WPC); articles with cellulosic fibres, for example, cardboard or paper articles; textile and leather articles. Examples of plastic articles include unsaturated polyester resin-based compositions, ABS (acrylonitrile butadiene styrene), melamine-formaldehyde resins, polycarbonate, polyethylene, polypropylene, ethylene-propylene-diene monomer (EPDM), thermoplastic olefin (TPO), polyurethane (PU), polypropylene oxide (PPO), polyethylene oxide (PEO), polyethylene terephthalate and nylon, for example, polyamide 6,6 and combinations thereof, for example, polycarbonate-ABS. Other heat-sensitive articles include objects that are a combination of a non-heat-sensitive part such as metal parts with a heat-sensitive part, such as any one of the aforementioned, for example, plastic hosing with heavy metal parts, strips, for example, aluminium frames with heat strips. The article can be a piece of domestic furniture, such as tables, chairs, cabinets, bedroom and bathroom furniture, office furniture, contract furniture such as school and child furniture, hospital furniture, restaurant and hotel furniture, kitchen cabinets and furniture, (flat) panels for interior design, interior and exterior windows and doors, interior and exterior window frames and door frames, exterior and interior sidings and flooring, articles for automotive applications, such as interior car parts, wheel covers, bumpers, under the hood parts, flexible flooring, sporting goods, cosmetics, audio-visual applications, such as TV sets, computer housing, phones, household appliances and satellite dishes.

For all upper and lower boundaries of any parameters given in the specification, the boundary value is included in each range for each parameter. All combinations of minimum and maximum values of the parameters described in the specification may be used to define the parameter ranges for various embodiments and preferences of the invention. In the context of the present invention unless stated to the contrary, the disclosure of alternative values for the upper or lower limit of the permitted range of a parameter, coupled with an indication that one of the said values is more highly preferred than the other, is to be construed as an implied statement that each intermediate value of the said parameter, lying in between the more preferred and the less preferred of said alternatives, is itself preferred to said less preferred value and also to each value lying between said less preferred value and said intermediate value. The terms ’effective’, ’acceptable’, ’active’ and/or ’suitable’ (for example, with reference to any process, use, method, application, preparation, product, material, formulation, compound, composition, monomer, oligomer, polymer precursor, and/or polymers of the present invention and/or described in the specification as appropriate) will be understood to refer to those features of

the invention which if used in the correct manner provide the required properties to that which they are added and/or incorporated to be of utility as described in the specification. Such utility may be direct, for example, where a material has the required properties for the aforementioned uses and/or indirect, for example, where a material has use as a synthetic intermediate and/or diagnostic tool in preparing other materials of direct utility. As used in the specification, these terms also denote that a functional group is compatible with producing effective, acceptable, active and/or suitable end products.

The term 'comprising' as used in the specification means that the list that immediately follows is non-exhaustive and may or may not include any other additional suitable items, for example, one or more additional feature(s), component(s) and/or substituent(s) as appropriate. The term 'comprising' is used interchangeably with the term 'containing'.

The term 'consisting of' as used in the specification mean that the list that follows is exhaustive and does not include additional items. It is understood that the total sum of any quantities expressed in the specification as percentages cannot (allowing for rounding errors) exceed 100 %. However, where a list of components is non-exhaustive, the sum of the percentage for each of such components may be less than 100 % to allow a certain percentage for additional amount(s) of any additional component(s) that may not be explicitly described in the specification.

Unless the context indicates otherwise, as used in the specification, plural forms of the terms in the specification (for example, resin, agent, crosslinker, component, minute) are construed as including the singular form and vice versa.

Any characterization of the physical state, e.g. liquid, solid, powder, of any entity such as an epoxy resin, an epoxy monomer refers to said physical state as this is observed at 23± 1 °C and atmospheric pressure. For example, if it is said that an epoxy resin is solid, this means that the epoxy resin is solid at 23± 1 °C and atmospheric pressure.

The decimal separator in numbers (also known as the radix character) is indicated with a period ('.').

**1. The thermosetting powder coating compositions of the invention (abbreviated as TPCC)**

The TPCC is as described in the entire specification and as described in the claims. The term 'TPCC' as used in the specification includes any and all of its preferments, combinations of its features and ranges, as well as combinations of any and all of its preferments with any and all of the combinations of its features and ranges. Thus, any and all of the TPCC disclosed in this section 1 -and its subsections- includes any and all of their preferments, combinations of their features and ranges, as well as combinations of any and all of their preferments with any and all of the combinations of their features and ranges, are collectively referred to -in the entire specification- as the TPCC. Every and all components of the TPCC are described in detail in section 1.

The TPCC of the invention is described in detail in the various relevant passages disclosed in the section entitled 'Explicit Preferments & Embodiments of the invention' of this specification. These preferments are incorporated in this section by reference to the section entitled 'Explicit Preferments & Embodiments of the invention' of this specification.

The constituent B (abbreviated as B) of the TPCC is as described in the section entitled 'Explicit Preferments & Embodiments of the invention' of this specification in the context of the TPCC. The constituent B is present in an amount of at least 25 and at most 100 pph of TPCC, wherein the B consists of a polyester resin component (abbreviated as PRC) and an epoxy crosslinker (abbreviated as EPX) that is able to react with the PRC. Obviously, the aggregate of $W_{EPX}$ (which is the amount of EPX in the constituent B, expressed in pph of B) and $W_{PRC}$ (which is the amount of PRC in the constituent B, expressed in pph of B) is equal to 100 pph of B. Preferably, the TPCC comprises the constituent B in an amount of at least 35 and at most 100, for example at least 45 and at most 100, for example at least 50 and at most 100, for example at least 60 and at most 100, for example at least 65 and at most 100 pph of TPCC.

The PRC consists of one or more carboxylic acid functional polyester resins (each one of them abbreviated as CAPR) as disclosed in this specification.

The PRC is as described in the section entitled 'Explicit Preferments & Embodiments of the invention' of this specification in the context of the TPCC. The PRC has an acid value (abbreviated as $AV_{PRC}$) determined as described in the specification, of at least 38 and at most 84 mg KOH/g, and a hydroxyl value (abbreviated as $OHV_{PRC}$) as described in the specification, that is lower than the $AV_{PRC}$. The carboxylic acid functional polyester resin (abbreviated as CAPR) has:

- an acid value (abbreviated as AV) determined titrimetrically according to the ISO 2144:2000, of at least 38 and at most 84 mg KOH/g, and a hydroxyl value (abbreviated as OHV) determined titrimetrically according to the ISO 4629-2:2016, that is lower than the AV,
- a glass transition temperature (abbreviated as $T_g$) determined according to the method described in the description, of at least 40 and at most 90 °C,
- a number average molecular weight (abbreviated as $M_n$) determined via Size Exclusion Chromatography according to the method described in the description, of at least 1400 and at most 10000 Da, and

wherein the CAPR is the polycondensation reaction product of:

- at least components A1 and A2, and optionally one or any combination of components A2', A3 and A4, or
- at least components A1, A2' and A3, and optionally one or any combination of components A2 and A4,

and wherein the CAPR comprises polycondensed residues of the components A1, A2, A2', A3 and A4 as mentioned above, and as each one of the components A1, A2, A2', A3 and A4 is described below:

- component A1 is selected from the group consisting of diols, and mixtures thereof,
- component A2 is selected from the group consisting of citric acid, citric acid anhydride, and mixtures thereof,
- component A2' is selected from the group consisting of C1-C2 alkyl monoesters of citric acid, C1-C2 alkyl diesters of citric acid, C1-C2 alkyl triester of citric acid, and mixtures thereof,
- component A3 is selected from the group consisting of dicarboxylic acids, dicarboxylic acid anhydrides, and mixtures thereof, and
- component A4 is selected from the group consisting of tricarboxylic acids, tricarboxylic acid anhydrides (e.g. trimellitic anhydride), tetracarboxylic acids, tetracarboxylic acid anhydrides, trialcohols, tetralcohols, pentalcohols, hexalcohols, and mixtures thereof,

wherein the total amount of the polycondensed residues of A2 (abbreviated as $W_{A2}$) when present in the CAPR, is at least 2.0 and at most 8.0 mol% based on CAPR, and wherein the total amount of the polycondensed residues of A2' (abbreviated as $W_{A2'}$) when present in the CAPR, is at least 2.0 and at most 8.0 mol% based on CAPR, and wherein the total amount of the polycondensed residues of A2 and A2' (abbreviated as $W_{A2/A2'}$) when both polycondensed residues of A2 and A2' are present in the CAPR, is at least 2.0 and at most 8.0 mol% based on CAPR, and wherein the total amount of monomers used for the preparation of the CAPR is 100 mol %.

Preferably, the CAPR has a $W_{A2}$ of at least 2.0 and at most 7.8, and a $W_{A2'}$ of at least 2.0 and at most 7.8, and a $W_{A2/A2'}$ of at least 2.0 and at most 7.8 mol% based on CAPR. Preferably, the CAPR has a $W_{A2}$ of at least 2.0 and at most 7.6, and a $W_{A2'}$ of at least 2.0 and at most 7.6, and a $W_{A2/A2'}$ of at least 2.0 and at most 7.6 mol% based on CAPR. Preferably the CAPR has a $W_{A2}$ of at least 2.2 and at most 8.0, and a $W_{A2'}$ of at least 2.2 and at most 8.0, and a $W_{A2/A2'}$ of at least 2.2 and at most 8.0 mol% based on CAPR. Preferably, the CAPR has a $W_{A2}$ of at least 2.2 and at most 7.8, and a $W_{A2'}$ of at least 2.2 and at most 7.8, and a $W_{A2/A2'}$ of at least 2.2 and at most 7.8 mol% based on CAPR. Preferably, the CAPR has a $W_{A2}$ of at least 2.2 and at most 7.6, and a $W_{A2'}$ of at least 2.2 and at most 7.6, and a $W_{A2/A2'}$ of at least 2.2 and at most 7.6 mol% based on CAPR. Preferably, the CAPR has a $W_{A2}$ of at least 2.3 and at most 8.0, and a $W_{A2'}$ of at least 2.3 and at most 8.0, and a $W_{A2/A2'}$ of at least 2.3 and at most 8.0 mol% based on CAPR. Preferably, the CAPR has a $W_{A2}$ of at least 2.3 and at most 7.8, and a $W_{A2'}$ of at least 2.3 and at most 7.8, and a $W_{A2/A2'}$ of at least 2.3 and at most 7.8 mol% based on CAPR. Preferably, the CAPR has a $W_{A2}$ of at least 2.3 and at most 7.6, and a $W_{A2'}$ of at least 2.3 and at most 7.6, and a $W_{A2/A2'}$ of at least 2.3 and at most 7.6 mol% based on CAPR.

Preferably, the CAPR is the polycondensation reaction product of:

- at least components A1, A2, A3, and optionally one or any combination of components A2' and A4, or
- at least components A1, A2' and A3, and optionally one or any combination of components A2 and A4.

Preferably, the CAPR is the polycondensation reaction product of:

- at least components A1 and A2, and optionally one or any combination of components A3 and A4.

Preferably, the CAPR is the polycondensation reaction product of:

- at least components A1, A2 and A3 and optionally component A4.

Preferably, the CAPR is the polycondensation reaction product of:

- only components A1, A2, A3, and optionally one or any combination of components A2' and A4, or
- only components A1, A2' and A3, and optionally one or any combination of components A2 and A4.

Preferably, the CAPR is preferably the polycondensation reaction product of:

- only components A1 and A2, and optionally one or any combination of components A3 and A4.

Preferably, the CAPR is preferably the polycondensation reaction product of:

- only components A1, A2 and A3 and optionally component A4.

The component A1 is selected from the group consisting of diols, and mixtures thereof. Preferably, the A1 component is selected from the group consisting of ethane-1,2-diol, 2,2-dimethylpropane-1,3-diol, 1,2-propanediol, 1,3-propanediol, 2-methyl-1,3-propanediol, 1,2-butanediol, 1,3-butanediol, 1,4-butanediol, 2,3-butanediol, 2-butyl-2-ethyl-1,3-propanediol, 1,3-butylethyl propanediol, 1,3-isobutanediol, 1,2-isobutanediol, 2,3-butanediol, 2-butenediol(1,4), 1,6-hexanediol, isosorbide, 2,2,4-trimethyl-1,3-pentanediol, 1,2-cyclopentanediol, 1,3-cyclopentanediol, 1,4-cyclopentanediol, 1,6-hexanediol, 1,4-dimethoxy cylcohexane, 1,2-cyclohexanediol, 1,3-cyclohexanediol, 1,4-cyclohexanediol, 1,4-cyclohexanedimethanol, 4,4'-methylene-bis(cyclohexanol), 4,4'-isopropylidene-bis(cyclohexanol), 1,3-isobutanediol, 1,2-isobutanediol, 2,3-butanediol, 2-butenediol(1,4), 1,4-bis(hydroxymethyl)cyclohexane, 1,3-bis(hydroxyethyl) cyclohexane, 1,3-bis(hydroxypropyl) cyclohexane, 1,3-bis(hydroxyisopropyl) cyclohexane, 1,12-dodecanediol,1,4-dimethylolbenzene, 1,3-isobutanediol, 1,2-isobutanediol, 2,3-butanediol, 2-butenediol(1,4), 1,12-dodecanediol,1,4-dimethylolbenzene, and mixtures thereof.

The component A2 is selected from the group consisting of citric acid, citric acid anhydride, and mixtures thereof.

The component A2' is selected from the group consisting of C1-alkyl monoesters of citric acid, C2-alkyl monoesters of citric acid, C1-alkyl diesters of citric acid, C2-alkyl diesters of citric acid, C1-alkyl-C2-alkyl diesters of citric acid, C1-alkyl triester of citric acid, C2-alkyl triester of citric acid, C1 -alkyl-C2-alkyl triesters of citric acid, and mixtures thereof. By 'C1-alkyl monoesters of citric acid' is meant any isomer of methyl citrate. Examples of C1-alkyl monoesters of citric acid are 1-methyl citrate, 2-methyl citrate. By 'C2-alkyl monoesters of citric acid' is meant any isomer of ethyl citrate. Examples of C2-alkyl monoesters of citric acid are 1-ethyl citrate, 2-ethyl citrate. By 'C1-alkyl diesters of citric acid' is meant any isomer of dimethyl citrate. Examples of C1 -alkyl diesters of citric acid are 1-methyl-2-methyl citrate, 1-methyl-3-methyl citrate. By 'C2-alkyl diesters of citric acid' is meant any isomer of diethyl citrate. Examples of C2-alkyl diesters of citric acid are 1-ethyl-2-ethyl citrate, 1-ethyl-3-ethyl citrate. By 'C1-alkyl-C2-alkyl diesters of citric acid' is meant any isomer of diesters of citric acid that has a combination of methyl and ethyl groups. Examples of C1-alkyl-C2-alkyl diesters of citric acid are 1-methyl-2-ethyl citrate, 1-methyl-3-ethyl citrate, 2-methyl-3-ethyl citrate, 1-ethyl-2-methyl citrate. The C1-alkyl triester of citric acid is trimethyl citrate. The C2-alkyl triester of citric acid is triethyl citrate. By 'C1-alkyl-C2-alkyl triesters of citric acid' is meant any isomer of triesters of citric acid that has a combination of methyl and ethyl groups. Examples of C1-alkyl-C2-alkyl triesters of citric acid are 1,3-methyl-2-ethyl citrate, 1,2-ethyl-3-methyl citrate.

The component A3 is selected from the group consisting of dicarboxylic acids, dicarboxylic acid anhydrides, and mixtures thereof. Preferably, the component A3 is selected from the group consisting of terephthalic acid, isophthalic acid, succinic acid, adipic acid, sebacic acid, 2,6-naphthalene dicarboxylic acid, 4,4'-oxybisbenzoic acid, cyclohexane dicarboxylic acid, maleic acid, phthalic anhydride, maleic anhydride, fumaric acid, itaconic acid, and mixtures thereof, preferably the component A3 is selected from the group consisting of terephthalic acid, isophthalic acid, succinic acid, adipic acid, sebacic acid, cyclohexane dicarboxylic acid, maleic acid, phthalic anhydride, maleic anhydride, fumaric acid, itaconic acid, and mixtures thereof, for example the component A3 is selected from the group consisting of terephthalic acid, isophthalic acid, succinic acid, adipic acid, sebacic acid, cyclohexane dicarboxylic acid, phthalic anhydride, and mixtures thereof.

The component A4 is selected from the group consisting of tricarboxylic acids other than citric acid, tricarboxylic acid anhydrides other than citric acid anhydride, tetracarboxylic acids, tetracarboxylic acid anhydrides, trialcohols, tetralcohols, hexalcohols, and mixtures thereof. Preferably, the A4 component is selected from the group consisting of trimellitic acid, trimellitic anhydride, pyromellitic acid, pyromellitic dianhydride, benzene-1,3,5-tricarboxylic acid, trimethylolpropane, trimethylolethane, glycerol, pentaerythritol, dipentaerythritol, and mixtures thereof, preferably from the group consisting of trimellitic anhydride, pyromellitic dianhydride, benzene-1,3,5-tricarboxylic acid, trimethylolpropane, trimethylolethane, pentaerythritol, dipentaerythritol, and mixtures thereof. Preferably, the polycondensed residue of A4 - when polycondensed residue of A4 is present in the CAPR-, is at most 5, preferably at most 4.5, for example at most 4, for example at most 3.5, for example at most 3, for example at most 2.5, for example at most 2, for example at most 1.5, for example at most 1, for example at most 0.5, for example at most 0.2 mol% based on CAPR; for example the CAPR does not contain a polycondensed residue of A4.

The CAPR has an $M_n$, as this is determined in the specification, of at least 1400 and at most 10000 Da. For example the CAPR has an $M_n$ of at least 1400 and at most 9000, for example at least 1600 and at most 10000, for example at least 1600 and at most 9000, for example at least 1650 and at most 10000, for example at least 1650 and at most 9000, for example at least 1700 and at most 10000, for example at least 1700 and at most 9000 Da.

The CAPR has a $T_g$, as this is determined in the specification, of at least 40 and at most 90, for example at least 45 and at most 90, for example at least 50 and at most 90, for example at least 40 and at most 85, for example at

least 45 and at most 85, for example at least 50 and at most 85, for example at least 40 and at most 80, for example at least 45 and at most 80, for example at least 50 and at most 80 °C.

The CAPR has an acid value (AV), as this is determined in the specification, of at least 38 and at most 84 and the $AV_{PRC}$ is at least 38 and at most 84. For example the AV is at least 39 and at most 84 and the $AV_{PRC}$ is at least 39 and at most 84, for example the AV is at least 40 and at most 84 and the $AV_{PRC}$ is at least 40 and at most 84, for example the AV is at least 38 and at most 82 and the $AV_{PRC}$ is at least 38 and at most 82, for example the AV is at least 39 and at most 82 and the $AV_{PRC}$ is at least 39 and at most 82, for example the AV is at least 40 and at most 82 and the $AV_{PRC}$ is at least 40 and at most 82, for example the AV is at least 38 and at most 80 and the $AV_{PRC}$ is at least 38 and at most 80, for example the AV is at least 39 and most 80 and the $AV_{PRC}$ is at least 39 and at most 80, for example the AV is at least 40 and at most 80 and the $AV_{PRC}$ is at least 40 and at most 80, for example the AV is at least 38 and most 79 and the $AV_{PRC}$ is at least 38 and at most 79, for example the AV is at least 39 and at most 79 and the $AV_{PRC}$ is at least 39 and at most 79, for example the AV is at least 40 and at most 79 and the $AV_{PRC}$ is at least 40 and at most 79 mg KOH/g.

The CAPR has a hydroxyl value (OHV), as this is determined in the specification, that is lower than the CAPR's AV, and the $OHV_{PRC}$ -as this is determined in the specification- that is lower than the $AV_{PRC}$.

Obviously, when the PRC consists of only one CAPR then the $AV_{PRC}$ is equal to the AV, and the $OHV_{PRC}$ is equal to the OHV.

The CAPR may be prepared according to conventional condensation polymerization procedures by esterification or transesterification, optionally in the presence of customary esterification catalysts, for example, dibutyltin oxide, butyl stanoic acid or tetrabutyl titanate. The preparation conditions and the -COOH/-OH ratio may be selected so as to obtain a CAPR that has an acid value and/or a hydroxyl value within a targeted range of values. Preferably the CAPR is prepared in bulk without the use of a solvent. The condensation polymerization reaction may occur at a temperature of from 100 to 350 °C, preferably 290 °C or less, more preferably from 150 to 270 °C. Reaction times may range from 2 to 96 hours, preferably less than 72 hours, more preferably less than 60 hours. The condensation polymerization reaction is preferably carried out in a reactor vessel (the term reactor vessel is used in the entire specification interchangeably with the term reactor). The condensation polymerization reaction is preferably carried out in a nitrogen atmosphere. Preferably the reaction is carried out under vacuum to remove water produced during the condensation polymerization reaction whilst vacuum is typically applied at the last stage of the synthesis of a CAPR in order to achieve the desired specifications of the CAPR. Once prepared, and while still in the reactor at temperatures in the range of 130 to 240 °C, the CAPR is in a liquid state. The CAPR solidifies as soon as it is brought to a temperature below its glass transition temperature, for example, when the CAPR is discharged from a reactor onto a cooling belt which is kept at room temperature or lower temperatures or on a metal tray that may be at a room temperature or below. Typical temperatures of the cooling belt or tray are 15-25 °C. A substantially dry CAPR can be isolated in any known way, including direct discharge from a reactor, from a temperature as high as for example 205 °C and as low as 140 °C, any known way of spray drying, freeze-drying, flashing or through devolatilization after the condensation polymerization reaction or combinations thereof.

The CAPR may be obtained in two-steps comprising mixing and reacting the polyacid constituent with an excess of the polyalcohol constituent to form a hydroxyl functional polyester resin (precursor of the CAPR) at the end of the first step; next, the hydroxyl functional polyester resin is reacted further with an excess of carboxylic functional monomers to obtain the CAPR. Alternatively, the CAPR may be obtained in three-steps comprising mixing and reacting the polyacid constituent with an excess of the polyalcohol constituent to form a hydroxyl functional polyester resin at the end of the first step; next, the hydroxyl functional polyester resin is reacted further with polyacid to form a hydroxyl functional polyester resin (precursor of the CAPR) at the end of the second step; next, the hydroxyl functional polyester resin (precursor of the CAPR) is reacted further with an excess of carboxylic functional monomers to obtain the CAPR. Preferably, the CAPR does not comprise any urethane groups, and/or any hydrocarbyl group having more than 19 carbon atoms, and/or any hydrocarbylene group having more than 19 carbon atoms. The CAPR is solid at $23\pm1$ °C and at atmospheric pressure. Preferably the CAPR is substantially dry. Even more preferably the CAPR is substantially dry and solid at $23\pm1$ °C and at atmospheric pressure. Typically and depending on the reaction set up, one skilled in the art knows that an additional amount of alcohols, e.g. diols, during the synthesis of a polyester resin such as a CAPR, may be necessary to compensate for alcohol losses that may take place during the synthesis of a CAPR; one skilled in the art knows and can easily calculate said amount of alcohols, e.g. diols, given the experimental setup, the composition of the CAPR, said CAPR's desired (targeted) AV and desired (targeted) OHV. Typically and depending on the reaction set up, one skilled in the art knows that an additional amount of acids, e.g. diacids, during the synthesis of a polyester resin such as a CAPR, may be necessary to compensate in case of an alcohol excess during the synthesis of a CAPR; one skilled in the art knows and can easily calculate said the amount of acids, e.g. diacids, given the experimental setup, the composition of the CAPR, said CAPR's desired (targeted) AV and desired (targeted) OHV. Preferably, the CAPR does not contain any polycondensed residue of glycerol, and the trialcohols of component A4 do not include glycerol.

If desired, additives such as anti-oxidants, flow additives, tribo additives can be added to the CAPR whilst the CAPR is in the reactor vessel and prior the CAPR is discharged as mentioned in the specification; this addition typically takes place at temperatures in the range of 160-210 °C. If said additives are mixed within the CAPR, a reasonable

amount of time to ensure proper mixing of the additive into the CAPR is carried out; for example, the mixing can last from 15 to 60 min at temperatures in the range of 160-210 °C; subsequently, the CAPR is ready for being discharged.

The EPX is as described in the section entitled 'Explicit Preferments & Embodiments of the invention' of this specification in the context of the TPCC. The EPX consists of one or more epoxy compounds (abbreviated as CEPX) selected from the group consisting of i) epoxy resins and ii) epoxy monomers, wherein each of the epoxy resins and each of the epoxy monomers:

- is solid at 23±1 °C and atmospheric pressure ,
- is able to react with the PRC,
- has more than one oxirane groups,

and

wherein the EPX has an epoxy equivalent weight (abbreviated as $EEW_{EPX}$) determined via manual titration according to the ASTM D1652-11(2019), of at least 560 and at most 950 g/eq,
and
wherein the ratio R is at least 0.8 and at most 2.0, and wherein the ratio R is determined according to the following equation:

$$R= (56100 \times W_{EPX})/ (W_{PRC} \times AV_{PRC} \times EEW_{EPX})$$

wherein
each of the $EEW_{EPX}$ and $AV_{PRC}$ is as disclosed in the specification,
$W_{EPX}$: is the amount of EPX in the constituent B (in pph of B),
$W_{PRC}$: is the amount of PRC in the constituent B (in pph of B),
and
wherein
the aggregate of $W_{EPX}$ and $W_{PRC}$ is equal to 100 pph of B.

Preferably, the EPX has an $EEW_{EPX}$ of at least 590 and at most 900, preferably at least 630 and at most 880, for example at least 650 and at most 850 g/eq.

Preferably, each of the epoxy resins and each of the epoxy monomers has an epoxy equivalent weight (abbreviated as $EEW_{CEPX}$) determined via manual titration according to the ASTM D1652-11(2019), of at least 560 and at most 950 g/eq, preferably at least 590 and at most 900 g/eq, more preferably at least 630 and at most 880 g/eq, for example at least 650 and at most 850 g/eq.

Preferably, the EPX has an $EEW_{EPX}$ of at least 560 and at most 950 g/eq and wherein each of the epoxy resins and each of the epoxy monomers has an epoxy equivalent weight (abbreviated as $EEW_{CEPX}$) determined via manual titration according to the ASTM D1652-11(2019), of at least 560 and at most 950 g/eq, preferably the $EEW_{EPX}$ is at least 590 and at most 900 g/eq and wherein each of the epoxy resins and each of the epoxy monomers has an epoxy equivalent weight (abbreviated as $EEW_{CEPX}$) determined via manual titration according to the ASTM D1652-11(2019), of at least 590 and at most 900 g/eq, more preferably the $EEW_{EPX}$ is at least 630 and at most 880 g/eq and wherein each of the epoxy resins and each of the epoxy monomers has an epoxy equivalent weight (abbreviated as $EEW_{CEPX}$) determined via manual titration according to the ASTM D1652-11(2019), of at least 630 and at most 880 g/eq, for example the $EEW_{EPX}$ is at least 650 and at most 850 g/eq and wherein each of the epoxy resins and each of the epoxy monomers has an epoxy equivalent weight (abbreviated as $EEW_{CEPX}$) determined via manual titration according to the ASTM D1652-11(2019), of at least 650 and at most 850 g/eq.

Preferably, the EPX consists of one or more epoxy compounds (abbreviated as CEPX) selected from the group consisting of i) epoxy resins and ii) epoxy monomers, wherein each of the epoxy resins and each of the epoxy monomers:

- is solid at 23±1 °C and atmospheric pressure,
- is able to react with the PRC,
- has more than one oxirane groups,

and

wherein the EPX has an epoxy equivalent weight (abbreviated as $EEW_{EPX}$) determined via manual titration according to the ASTM D1652-11(2019), of at least 560 and at most 950 preferably at least 590 and at most 900, preferably

at least 630 and at most 880, for example at least 650 and at most 850 g/eq,
and
wherein the ratio R is at least 0.8 and at most 2.0, and wherein the ratio R is determined according to the following equation:

$$R= (56100 \times W_{EPX})/ (W_{PRC} \times AV_{PRC} \times EEW_{EPX})$$

wherein
$EEW_{EPX}$: is as disclosed in this preferment,
$AV_{PRC}$: is as disclosed in the specification,
$W_{EPX}$: is the amount of EPX in the constituent B (in pph of B),
$W_{PRC}$: is the amount of PRC in the constituent B (in pph of B),
and
wherein
the aggregate of $W_{EPX}$ and $W_{PRC}$ is equal to 100 pph of B.

Preferably, the EPX consists of one or more epoxy compounds (abbreviated as CEPX) selected from the group consisting of i) epoxy resins and ii) epoxy monomers, wherein each of the epoxy resins and each of the epoxy monomers :

- is solid at 23±1 °C and atmospheric pressure,
- is able to react with the PRC,
- has more than one oxirane groups, and
- has an epoxy equivalent weight (abbreviated as $EEW_{CEPX}$) determined via manual titration according to the ASTM D1652-11(2019), of at least 560 and at most 950 g/eq, preferably at least 590 and at most 900 g/eq, more preferably at least 630 and at most 880 g/eq, for example at least 650 and at most 850 g/eq.

and

wherein the EPX has an epoxy equivalent weight (abbreviated as $EEW_{EPX}$) determined via manual titration according to the ASTM D1652-11 (2019), of at least 560 and at most 950 g/eq,
and
wherein the ratio R is at least 0.8 and at most 2.0, and wherein the ratio R is determined according to the following equation:

$$R= (56100 \times W_{EPX})/ (W_{PRC} \times AV_{PRC} \times EEW_{EPX})$$

wherein
$EEW_{EPX}$: is as disclosed in this preferment,
$AV_{PRC}$: is as disclosed in the specification,
$W_{EPX}$: is the amount of EPX in the constituent B (in pph of B),
$W_{PRC}$: is the amount of PRC in the constituent B (in pph of B),
and
wherein the aggregate of $W_{EPX}$ and $W_{PRC}$ is equal to 100 pph of B.

Preferably, the EPX consists of one or more epoxy compounds (abbreviated as CEPX) selected from the group consisting of i) epoxy resins and ii) epoxy monomers, wherein each of the epoxy resins and each of the epoxy monomers :

- is solid at 23±1 °C and atmospheric pressure,
- is able to react with the PRC,
- has more than one oxirane groups, and

wherein the EPX has an epoxy equivalent weight (abbreviated as $EEW_{EPX}$) determined via manual titration according to the ASTM D1652-11(2019) of at least 560 and at most 950 g/eq and wherein each of the epoxy resins and each of the epoxy monomers has an epoxy equivalent weight (abbreviated as $EEW_{CEPX}$) determined via manual titration according to the ASTM D1652-11 (2019), of at least 560 and at most 950 g/eq, preferably the $EEW_{EPX}$ is at least 590 and at most 900 g/eq and wherein each of the epoxy resins and each of the epoxy monomers has an epoxy

equivalent weight (abbreviated as $EEW_{CEPX}$) determined via manual titration according to the ASTM D1652-11 (2019), of at least 590 and at most 900 g/eq, more preferably the $EEW_{EPX}$ is at least 630 and at most 880 g/eq and wherein each of the epoxy resins and each of the epoxy monomers has an epoxy equivalent weight (abbreviated as $EEW_{CEPX}$) determined via manual titration according to the ASTM D1652-11(2019), of at least 630 and at most 880 g/eq, for example the $EEW_{EPX}$ is at least 650 and at most 850 g/eq and wherein each of the epoxy resins and each of the epoxy monomers has an epoxy equivalent weight (abbreviated as $EEW_{CEPX}$) determined via manual titration according to the ASTM D1652-11 (2019), of at least 650 and at most 850 g/eq,
and
wherein the ratio R is at least 0.8 and at most 2.0, and wherein the ratio R is determined according to the following equation:

$$R= (56100 \times W_{EPX})/ (W_{PRC} \times AV_{PRC} \times EEW_{EPX})$$

wherein
$EEW_{EPX}$: is as disclosed in this preferment,
$AV_{PRC}$: is as disclosed in the specification,
$W_{EPX}$: is the amount of EPX in the constituent B (in pph of B),
$W_{PRC}$: is the amount of PRC in the constituent B (in pph of B),
and
wherein the aggregate of $W_{EPX}$ and $W_{PRC}$ is equal to 100 pph of B.

Obviously, when the EPX consists of only one CEPX, then the $EEW_{EPX}$ is equal to the $EEW_{CEPX}$.

Epoxy monomers are typically produced by the reaction of a compound with hydroxy groups and epichlorohydrin. First a hydroxy group reacts in a coupling reaction upon treatment with a base like NaOH with epichlorohydrin, followed by dehydrohalogenation. Epoxy resins produced from such epoxy monomers are called glycidyl-based epoxy resins. The hydroxy group may be derived from aliphatic diols, polyols (polyether polyols), phenolic compounds or dicarboxylic acids. Phenols can be compounds such as bisphenol A and phenol. Polyols can be compounds such as 1,4-butanediol. Di- and polyols lead to diglycidyl polyethers. Dicarboxylic acids such as hexahydro phthalic acid are used for diglycidyl ester resins. The other production route for epoxy resins is the conversion of aliphatic or cycloaliphatic alkenes with peracids. In contrast to glycidyl-based epoxy resins, this production of such epoxy monomers does not require an acidic hydrogen atom but an aliphatic double bond. The most common epoxy resins are based on reacting epichlorohydrin (ECH) with bisphenol A, resulting in a different chemical substance known as bisphenol A diglycidyl ether (commonly known as BADGE or DGEBA). Bisphenol A-based epoxy resins are the most widely commercialised epoxy resins but also other bisphenols are analogously reacted with epichlorohydrin, for example Bisphenol F. Higher molecular weight diglycidyl ethers are formed by the reaction of the bisphenol A diglycidyl ether formed with further bisphenol A, this is called prepolymerization. A product comprising a few repeat units is typically a viscous, clear liquid; this is called a liquid epoxy resin. A product comprising more repeating units is at room temperature (23±1 °C) a solid, which is correspondingly referred to as solid epoxy resin. Instead of bisphenol A, other bisphenols (especially bisphenol F) or brominated bisphenols (e.g. tetrabromobisphenol A) can be used for the said epoxidation and prepolymerization. Bisphenol F may undergo epoxy resin formation in a similar fashion to bisphenol A. Important epoxy resins are produced from combining epichlorohydrin and bisphenol A to give bisphenol A diglycidyl ethers. Increasing the ratio of bisphenol A to epichlorohydrin during manufacture, produces higher molecular weight linear polyethers with glycidyl end groups, which are solid to hard crystalline materials at 23±1 °C and at atmospheric pressure depending on the molecular weight achieved. This route of synthesis is known as the "taffy" process. Another category of epoxy resins are novolacs; novolacs are produced by reacting phenol or cresol with methanal (formaldehyde). The reaction of epichlorohydrin and novolacs produces novolacs with glycidyl residues (herein novolac epoxy resins), such as epoxyphenol novolac resins (EPN) or epoxycresol novolac resins (ECN). Another category of epoxy resins are the aliphatic epoxy resins; there are two common types of aliphatic epoxy resins: those obtained by epoxidation of double bonds (cycloaliphatic epoxides and epoxidized vegetable oils) and those formed by reaction with epichlorohydrin (glycidyl ethers and esters). Cycloaliphatic epoxides contain one or more aliphatic rings in the molecule on which the oxirane ring is contained (e.g. 3,4-epoxycyclohexylmethyl-3',4'-epoxycyclohexane carboxylate). They are produced by the reaction of a cyclic alkene with a peracid (see above). Epoxidized vegetable oils are formed by epoxidation of unsaturated fatty acids by reaction with peracids. Aliphatic glycidyl epoxy resins of low molar mass (mono-, bi- or polyfunctional) are formed by the reaction of epichlorohydrin with aliphatic alcohols or polyols (glycidyl ethers are formed) or with aliphatic carboxylic acids (glycidyl esters are formed). The reaction is carried out in the presence of a base such as sodium hydroxide, analogous to the formation of bisphenol A-diglycidyl ether. Another category of epoxy resins are the halogenated epoxy resins such as brominated and fluorinated epoxy resins. Epoxy resins have a variable chain length which is the result from the polymerisation reaction used to produce

them. Epoxy resins are also described in the book entitled 'Organic Coatings, Science And Technology' (Wicks, Jr. Z. W., Jones, F. N., Pappas, S. P., Chapter 11, paragraph 11.1 (including subparagraphs 11.1.1 and 11.1.2), pp. 208-214).

An important parameter for epoxy monomers and epoxy resins is the oxirane group content. This is expressed as the 'epoxide equivalent weight' (EEW) (unit: g/eq which stands for gram/equivalent).

The epoxy resins and the epoxy monomers suitable for this invention are solid at 23±1 °C and at atmospheric pressure.

Preferably, each of the CEPX is selected from the group consisting of epoxy resins, preferably each of the CEPX is selected from the group consisting of bisphenol-A based epoxy resins, bisphenol-F based epoxy resins, novolac epoxy resins, and halogenated epoxy resins, preferably each of the CEPX is selected from the group consisting of bisphenol-A based epoxy resins, bisphenol-F based epoxy resins, epoxyphenol novolac resins, and epoxycresol novolac resins, preferably each of the CEPX is selected from the group consisting of bisphenol-A based epoxy resins and bisphenol-F based epoxy resins, preferably each of the CEPX is selected from the group consisting of bisphenol-A based epoxy resins.

Exemplary CEPX suitable for the TPCC include but are not limited to the following epoxy resins D.E.R.™ 662E, D.E.R.™ 664UE, D.E.R.™ 692, D.E.R.™ 6224, D.E.R.™ 6225, D.E.R.™ 662UH, D.E.R.™ 692H, D.E.R.™ 663U, D.E.R.™ 672U, (all of them supplied by Olin Corporation); EPON™ 1183 (supplied by Hexion); Nan Ya NPES-904 (supplied by Nan Ya Plastics Corporation); Araldite® GT 7004 N and Araldite® GT 7072 N [all of them supplied by Jubail Chemical Industries Co. (Jana)]; Araldite® GT 7004 and Araldite® GT 7072 (all of them supplied by Huntsman).

The ratio R is at least 0.8 and at most 2.0, preferably at least 0.8 and at most 1.8, for example at least 0.8 and at most 1.6, for example at least 0.8 and at most 1.5, for example at least 0.8 and at most 1.4, for example at least 0.9 and at most 2.0, for example at least 0.9 and at most 1.8, for example at least 0.9 and at most 1.6, for example at least 0.9 and at most 1.5, for example at least 0.9 and at most 1.4, for example at least 0.95 and at most 2.0, for example at least 0.95 and at most 1.8, for example at least 0.95 and at most 1.6, for example at least 0.95 and at most 1.5, for example at least 0.95 and at most 1.4, for example at least 1.0 and at most 2.0, for example at least 1.0 and at most 1.8, for example at least 1.0 and at most 1.6, for example at least 1.0 and at most 1.5, for example at least 1.0 and at most 1.4.

Preferably, the TPCC is as disclosed in this section 1 and as disclosed in the section entitled 'Explicit Preferments & Embodiments of the invention' wherein the TPCC comprises the constituent B in an amount of at least 45 and at most 100 pph of TPCC, and wherein:

- the AV is at least 38 and at most 79 and the $AV_{PRC}$ is at least 38 and at most 79 mg KOH/g, preferably the AV is at least 40 and at most 79 and the $AV_{PRC}$ is at least 40 and at most 79 mg KOH/g,
- the $T_g$ is at least 50 and at most 85, preferably at least 50 and at most 80 °C,
- the $M_n$ is at least 1400 and at most 10000, preferably at least 1400 and at most 9000 Da,
- each of the epoxy resins and each of the epoxy monomers has an epoxy equivalent weight (abbreviated as $EEW_{CEPX}$) determined via manual titration according to the ASTM D1652-11(2019), of at least 650 and at most 850 g/eq, and wherein the EPX has an epoxy equivalent weight (abbreviated as $EEW_{EPX}$) of at least 650 and at most 850 g/eq, and

the wherein the ratio R is at least 0.8 and at most 2.0, preferably at least 0.9 and at most 2.0, for example at least 1.0 and at most 2.0, for example at least 1.0 and at most 1.8, for example at least 1.0 and at most 1.6, and wherein the ratio R is determined according to the following equation:

$$R= (56100 \times W_{EPX})/ (W_{PRC} \times AV_{PRC} \times EEW_{EPX})$$

wherein

$EEW_{EPX}$: is as disclosed in this preferment,
$AV_{PRC}$: is as disclosed in this preferment,
$W_{EPX}$: is the amount of EPX in the constituent B (in pph of B),
$W_{PRC}$: is the amount of PRC in the constituent B (in pph of B),
and
wherein the aggregate of $W_{EPX}$ and $W_{PRC}$ is equal to 100 pph of B.

The TPCC may optionally comprise well-known catalysts suitable to catalyze the reaction between an oxirane group and a carboxyl or anhydride group, in an amount of at least 0 and at most 8, for example, at least 0 and at most 7, for example, at least 0 and at most 6, for example at least 0 and at most 5, for example at least 0 and at most 4, for example at least 0 and at most 3, for example at least 0 and at most 2 pph of B. Exemplary catalysts include but are not

limited to organic compounds derivatives of ammonia, organophosphorus compounds and metal salts. Amines are organic compounds and derivatives of ammonia, wherein one or more hydrogen atoms of the ammonia have been replaced by an organic substituent such as, for example, an alkyl or aryl or a phenyl group. It is also possible to have four organic substituents on the nitrogen of ammonia. These compounds are not amines but are called quaternary ammonium salts and have a positively charged nitrogen centre, and a counter anion. The preferred counter anion is a halide anion, and the preferred halide ion in a quaternary ammonium salt is bromine or chlorine. Exemplary amines include primary, secondary and tertiary amines; tertiary amines are particularly preferred. Examples of tertiary amines include but are not limited to octyldimethylamine, decyldimethylamine, dodecyl dimethylamine, tetradecyldimethylamine, hexadecyl dimethylamine octadecyldimethylamine, didodecylmonomethylamine, ditetradecylmonomethylamine, dihexadecylmonomethylamine, di-tallow alkylmonomethylamine, (hydrogenated tallow alkyl)-dimethylamine, trioctylamine, tridecyl amine, tri-dodecyl amine and mixtures thereof. Preferably the tertiary amine is selected from the group consisting of hexadecyl dimethylamine, dodecyl dimethylamine, tetradecyl dimethyl amine, and mixtures thereof; preferably the tertiary amine is hexadecyl dimethylamine. Examples of quaternary ammonium salts include but are not limited to octyl dimethyl ammonium halides, decyl dimethyl ammonium halides, dodecyl trimethyl ammonium halides, tetradecyl trimethyl ammonium halides, hexadecyltrimethylammonium halides, octadecyl trimethyl ammonium halides, di-dodecyl dimethyl ammonium halides, di-tetradecyl dimethyl ammonium halides, dihexadecyldimethyl ammonium halides, ditallowalkyldimethyl ammonium halides, tetraoctyl ammonium halides, tetradecyl ammonium halides, tetradodecyl ammonium halides and mixtures thereof. Preferably the quaternary ammonium salt is selected from the group consisting of hexadecyltrimethylammonium bromide, cetyl triethyl ammonium bromide, cetyl trimethyl ammonium bromide, and mixtures thereof. By "organophosphorus compound" is meant in the specification an organic compound of molecular weight lower than 1500 that contains a direct phosphorous carbon bond, and said organophosphorus compound is chemically distinct from the polyester. Preferably the organophosphorus compound has a molecular weight lower than 1200, even more preferably lower than 1000, most preferably lower than 800, for example, lower than 600. Preferably the organophosphorus compound is selected from the group consisting of phosphonium salts having at least one phosphorous carbon bond, and organophosphines having at least three phosphorous carbon bonds. Preferably the organophosphorus compound is selected from the group consisting of organophosphines having three phosphorus carbon bonds, and quaternary phosphonium salts having four phosphorus carbon bonds. Preferably, the organophosphorus compound is selected from the group consisting of quaternary phosphonium salts, and tertiary organophosphines. Preferably, the organophosphorus compound is selected from the group consisting of quaternary phosphonium halides and tertiary organophosphines. Organophosphorus compounds having at least one covalently bound aromatic group (e.g. phenyl, tolyl) to the phosphorus are preferred. Preferably, the organophosphorus compound is a quaternary phosphonium salt comprising at least three phenyl groups covalently bonded with phosphorous; preferably, the organophosphorus compound is a quaternary phosphonium salt comprising at least two phenyl groups each one of them is covalently bonded to the same phosphorous; preferably, the organophosphorus compound is a quaternary phosphonium salt comprising at least three phenyl groups each one of them is covalently bonded to the same phosphorous, for example, the organophosphorus compound is triphenylethyl phosphonium halide, for example, the organophosphorus compound is triphenylethyl phosphonium chloride, for example, the organophosphorus compound is triphenylethyl phosphonium bromide. The preferred counter anion in any of the above mentioned preferred group of organophosphorus compounds is a halide counter anion. Especially the preferred counter anion in a quaternary phosphonium salt is bromide or chloride. Examples of quaternary phosphonium salts include but are not limited to dodecyltriphenyl phosphonium halides, decyltriphenyl phosphonium halides, octyl diphenyl phosphonium halides, trioctyl phosphonium halides, triphenylethyl phosphonium bromide, tetraphenylphosphonium chloride, tetramethyl phosphonium iodide and mixtures thereof. Organophosphines having at least one phosphorous carbon bond are alkyl and/or aryl and/or phenyl derivatives of phosphine. Tertiary organophosphines are compounds of the formula $R'_3P$, wherein R' is, for example alkyl, aryl, phenyl group. Examples of tertiary organophosphines include but are not limited to dodecyl diphenylphosphine, decyldiphenyl phosphine, octyl diphenylphosphine, trioctyl phosphine, triphenylphosphine and mixtures thereof. Preferably the tertiary phosphine is selected from the group consisting of triphenylphosphine, tritolyl phosphine and mixtures thereof. Thus, preferably the catalyst if present in the TPCC of the invention is selected from the group consisting of organic compounds derivatives of ammonia, organophosphorus compounds and metal salts

The TPCC may optionally comprise a pigment in an amount of at least 0 and at most 75, preferably at least 0 and at most 70, more preferably at least 0 and at most 60, even more preferably at least 0 and at most 50, for example at least 0 and at most 40, for example at least 0 and at most 35 pph of TPCC. Pigments are divided into four broad classes: white, colour, inert (also known as inerts, fillers or extenders) and functional pigments. Consequently, the pigment may be selected from the group consisting of white pigments, colour pigments, inert pigments, functional pigments, and mixtures thereof. Examples of pigments include white lead [basic lead carbonate $2PbCO_3.Pb(OH)_2$], zinc oxide (ZnO), zinc sulfide (ZnS), lithopone ($ZnS/BaSO_4$), $TiO_2$ (titanium dioxide; examples of which include products supplied by Kronos Titan GmbH under certain trade names using the registered trademark Kronos® such as Kronos® 2360 (which is a typical white pigment widely used in powder coatings), Kronos® 2310, Kronos® 2300, Kronos® 2190,

Kronos® 2160, Kronos® 2066, Kronos® 2064, Kronos® 2056, Kronos® 2047, Kronos® 2044, Kronos® 2043, Kronos® 4045, Kronos® 4311), iron oxide yellows [FeO(OH)], lead chromate ($PbCrO_4$), redder yellows (cocrystals of lead chromate with PbO), primrose yellow and lemon yellows (cocrystals of lead chromate with lead sulfate), molybdate oranges [cocrystals of lead chromate with lead molybdate ($PbMoO_4$) and lead sulfate], titanium yellows, organic oranges and yellows e.g. diarylide yellows (bisazo pigments derived from 3,3'-dichlorobenzidene (PY 13), monoarylide (monoazo) yellow pigments [such as PY 74, nickel azo yellow (PG 10), vat yellow pigments e.g. isoindoline yellow PY139, benzimidazolone orange pigments e.g. PO36], $Fe_2O_3$, tolouidine red pigment, PR3 bright red azo pigment (azo derivative of β-naphthol), permanent Red 2B red azo pigment (available as the calcium, barium or manganese salt), naphthol reds (azo pigments with various ring substituents (Cl, $-OCH_3$, $NO_2$), quinacridone pigments, iron blue, ferric ammonium ferrocyanide [$FeNH_4Fe(CN)_6$], copper phthalocyanine (CPC) pigments (known also as phthalo blue and phthalo green), carbon blacks, metallic pigments (such as aluminum flake pigments, bronze flake pigments, nickel flake pigments, stainless steel flake pigments, interference pigments which are flake pigments that lead to color by interference e.g. pearlescent pigments platelets of mica having thin surface treatment layers of $TiO_2$ or $Fe_2O_3$), synthetic calcium carbonate ($CaCO_3$), calcium carbonate derived from ground limestone or dolomite, clays (aluminum silicates), magnesium silicate minerals, silicon dioxide, barytes (barium sulfate), complex zinc chromate pigments, red lead, zinc phosphate, zinc oxide, cuprous oxide, organotin pigments, antimony oxide.

The TPCC may also contain other components in addition to the components mentioned above in this section, such as waxes and/or the usual (processing) additives, for example, degassing agents, smoothness, appearance enhancing agents or (light) stabilizers. Suitable stabilizers include, for example, primary and/or secondary antioxidants and UV stabilizers, for example, quinones, (sterically hindered) phenolic compounds, phosphonites, phosphites, thioethers and HALS (hindered amine light stabilizers). Examples of suitable degassing agents include cyclohexane dimethanol bisbenzoate, benzoin and benzoin derivatives such as for example those described in WO02/50194. Other additives, such as additives for improving tribo-chargeability may also be added. Some of these additives may be added to the CAPR when the CAPR is being prepared in a chemical reactor but before the CAPR is discharged from the chemical reactor. Alternatively, some of these additives may be added in the premix of the thermosetting powder coating composition as described above or in the extruder for instance by liquid injection.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of disclosure disclosed in section 1 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

## 2. The Process for making the TPCC

The TPCC may be prepared by mixing the separately weighed-out components in a mixer, heat the obtained premix, for example in a kneader, preferably in an extruder to obtain an extrudate, cool down the obtained extrudate until it solidifies and grind it into granules or flakes that are further ground to reduce the particle size followed by appropriate classification to obtain a thermosetting powder coating composition of the right particle size.

Alternatively, the TPCC may be prepared by mixing the separately weighed-out components of constituent B to form a first premix. Subsequently, the premix is mixed together with the separately weighed-out perhaps other components of the TPCC- to obtain a second premix, heat the obtained premix, for example, in a kneader, preferably in an extruder to obtain an extrudate, cool down the obtained extrudate until it solidifies and grind it into granules or flakes that are further ground to reduce the particle size followed by appropriate classification to obtain a thermosetting powder coating composition of the desired particle size.

Preferably, the TPCC is prepared by a process comprising the steps of:

a. mixing the components of the constituent B -that is, the EPX and the PRC- and optionally other components of the TPCC, to obtain a premix;
b. heating the premix, preferably in an extruder, to obtain an extrudate;
c. cooling down the extrudate to obtain a solidified extrudate; and
d. grinding the solidified extrudate into smaller particles to obtain the TPCC.

If the premix is heated in an extruder or mixer/kneader, it is preferred to use a temperature control in order to avoid too high temperatures that could lead to the curing of the TPCC in the extruder. The temperature should be set so that good mixing is ensured by melting/kneading/mixing of all components to get a homogeneous mass. Typical temperatures for ensuring a good mixing by melting/kneading/mixing may range from 90 up to and including 120 °C,

preferably from 100 up to and including 120 °C, more preferably from 110 up to and including 120 °C, most preferably 120 °C, for example, 110 °C.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 2 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

**3. The cured TPCC, the process for curing the TPCC, and an object obtained by said process**

In accordance with the invention, there is provided a cured TPCC, as the TPCC is described in the specification. The cured TPCC is derived upon curing of the TPCC, as the TPCC is described in the specification. Preferably the cured TPCC is a powder coating; said powder coating can be a primer, topcoat or an intermediate coating.

In accordance with the invention, there is provided a process for curing the TPCC comprising the steps of:

i) providing the TPCC, and
ii) heating the TPCC to partially or fully cure it.

In accordance with the invention, there is provided an object obtained by the aforementioned process for curing the TPCC; the said object is the cured TPCC and said cured TPCC is preferably a powder coating, said powder coating can be a primer, topcoat or an intermediate coating.

In order to cure the TPCC via heating, the heating of the TPCC can be carried out at a temperature and for a time suitable to cure the TPCC.

Heating of the TPCC may be done using conventional methods, such as with a convection oven and/or with an (N)IR lamp and/or infrared laser and/or microwave equipment may be used to heat the TPCC.

The temperature at which the TPCC is cured is preferably in the range of 120 to 250 °C, more preferably from 140 to 220 °C.

Preferably the curing time of the TPCC is at most 60, more preferably at most 45, even more preferably at most 30, most preferably at most 20, especially at most 15, for example at most 10, for example at most 5, for example at most 2 minutes.

Preferably the TPCC is cured at a temperature in the range of 120-250 °C for a time in the range of 1-60 minutes, more preferably the TPCC is cured at a temperature in the range of 140-220 °C for a time in the range of 1-60 minutes, for example, the TPCC is cured at a temperature in the range of 140-220 °C for a time in the range of 1-30 minutes, the TPCC is cured at a temperature in the range of 140-220 °C for a time in the range of 1-20 minutes, the TPCC is cured at a temperature in the range of 140-220 °C for a time in the range of 5-20 minutes, the TPCC is cured at a temperature in the range of 140-220 °C for a time in the range of 10-20 minutes, the TPCC is cured at a temperature in the range of 140-220 °C for 15 minutes.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 3 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification

**4. The process for coating an article with the TPCC and the process for coating and curing an article having the TPCC coated and cured thereon**

The invention also relates to a process for making an article having coated thereon the TPCC, comprising the step of applying the TPCC to an article to obtain the article having coated thereon the TPCC.

The invention further relates to a process for making an article having coated and cured thereon the thermosetting powder coating composition B, comprising the steps of:

a. applying the TPCC to an article;
b. heating the TPCC for enough time (curing time) and at a suitable temperature (curing temperature) to cure the TPCC to obtain the article having coated and cured thereon the TPCC.

The TPCC may be applied to an article using the techniques known to the person skilled in the art, for example, using an electrostatic spray or triboelectric spray, or electrostatic fluidized bed or flame spray.

Once applied to an article, the TPCC may be cured via heating.

The temperature at which the TPCC is cured is preferably in the range of 120 to 250 °C, more preferably from 140 to 220 °C.

Preferably the curing time of the TPCC is at most 60, more preferably at most 45, even more preferably at most 30, most preferably at most 20, especially at most 15, for example at most 10, for example at most 5, for example at most 2 minutes.

Preferably the TPCC is cured at a temperature in the range of 120-250 °C for a time in the range of 1-60 minutes, more preferably the TPCC is cured at a temperature in the range of 140-220 °C for a time in the range of 1-60 minutes, for example, the TPCC is cured at a temperature in the range of 140-220 °C for a time in the range of 1-30 minutes, the TPCC is cured at a temperature in the range of 140-220 °C for a time in the range of 1-20 minutes, the TPCC is cured at a temperature in the range of 140-220 °C for a time in the range of 5-20 minutes, the TPCC is cured at a temperature in the range of 140-220 °C for a time in the range of 10-20 minutes, the TPCC is cured at a temperature in the range of 140-220 °C for 15 minutes.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 4 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

**5. Further embodiments of the invention**

In accordance with the invention, there is provided a process for making a composition or an article, each one of them suitable for any one of the applications selected from the group consisting of powder coating applications, powder-in-mould coating applications, 3D-printing applications, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications, wherein the process comprises the step of using (providing) a TPCC as described in the claims and as disclosed in the specification.

The invention further provides for the use of:

i) the TPCC as described in the claims and as disclosed in the specification; and/or
ii) a cured TPCC as described in the claims and as disclosed in the specification; and/or
iii) a film as described in the claims and as disclosed in the specification; and/or
iv) a coating as described in the claims and as disclosed in the specification; and/or
v) an article as described in the claims and as disclosed in the specification,

in powder coatings, powder-in-mould coatings, 3D-printing, automotive applications (car parts, agricultural machines, composite structures, ceramic structures), marine applications (ships, boats), aerospace applications (planes, helicopters, composite structures, ceramic structures), medical compositions, medical products, medical devices (artificial joints, meshes, woven or non-woven sheets, tapes, ribbons, bands, cables, tube-like products for e.g. ligament replacement, composite structures, ceramic structures), defence applications (ballistic protection, body armour, ballistic vests, ballistic helmets, ballistic vehicle protection, composite structures, ceramic structures), sports/recreational applications (fencing, skates, skateboarding, snowboarding, suspension lines on sport parachutes, paragliders, kites, kite lines for kite sports, climbing equipment, composite structures, ceramic structures), architectural applications (windows, doors, (pseudo-)walls, cables, bottling applications, household applications (household appliances, white goods, furniture, computer housings), machinery applications (can and bottle handling machine parts, moving parts on weaving machines, bearings, gears, composite structures, ceramic structures, computer housings), can applications, coil applications, energy applications for e.g. generators for wind, tide or solar energy, textile applications for e.g. fabrics, this can be very broad from impregnation technical textiles to for example complete composites both as coating and as a binder for composites, and electrical applications (cabinets for electrical wire or switch boards).

In accordance with the invention, there is provided a use of:

i) a TPCC as described in the claims and as disclosed in the specification; and/or
ii) a cured TPCC as described in the claims and as disclosed in the specification; and/or

iii) a film as described in the claims and as disclosed in the specification; and/or
iv) a coating as described in the claims and as disclosed in the specification; and/or
v) an article as described in the claims and as disclosed in the specification, in powder coatings, powder-in-mould coatings, 3D-printing, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications.

In accordance with the invention, there is provided:

i) a TPCC as described in the claims and as disclosed in the specification; and/or
ii) a cured TPCC as described in the claims and as disclosed in the specification; and/or
iii) a film as described in the claims and as disclosed in the specification; and/or
iv) a coating as described in the claims and as disclosed in the specification; and/or
v) an article as described in the claims and as disclosed in the specification, for use in powder coatings, powder-in-mould coatings, 3D-printing, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications.

In accordance with the invention there is provided an additive manufacturing process comprising the steps of providing a TPCC, and sintering and/or melting and/or extruding and/or jetting and/or ultrasonic welding and/or irradiating the thermosetting powder coating composition.
In accordance with the invention there is provided a product obtained by the process of the just above paragraph.
In accordance with the invention there is provided a process for making a composition or a product suitable for any one of the applications selected from the group consisting of powder coatings, powder in-mould coatings, 3D-printing applications, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications, wherein the process comprises the steps of providing a TPCC and reacting the PRC and EPX components of the constituent B of the thermosetting powder coating composition.
In accordance with the invention there is provided a composition or a product obtained by the process of the just above paragraph.
In accordance with the invention there is provided a process for making an object wherein the process comprises the steps of i) providing a TPCC, ii) providing a mould, iii) coating the interior surface of the mould with the TPCC via, for example, coating application methods suitable for powder coatings, e.g. electrostatic spray, triboelectric spray , iv) introducing into the mould another composition different than the TPCC, e.g. a fibre-containing composition, v) closing the mould and optionally applying pressure and/or vacuum and/or heating the mould at any temperature in the range of 70 to 250 °C, preferably in the range of 100 to 250 °C range, preferably in the range of 120 to 250 °C preferably in the range of 140 to 220 °C, for at most 1 h -preferably at most 30 minutes- to form the object, and vi) collect the object from the mould.
In accordance with the invention there is provided an object obtained by the process of the just above paragraph.
In accordance with the invention there is provided a process for making an object wherein the process comprises the steps of i) providing a TPCC, ii) providing a preheated mould or press (collectively mentioned as 'preheated shaper') at any temperature in the range of 50 to 250 °C, iii) either coating an article with the TPCC via for example coating application methods suitable for powder coatings, e.g. electrostatic spray, triboelectric spray, electrostatic fluidized bed, flame spray or scattering the TPCC over an article, iv) introducing the article prepared at the end of step iii) into the preheated shaper, v) closing the shaper and optionally applying pressure (via for example a recurring press or a continuous press, e.g. roller and/or belt), and/or applying vacuum and/or heating the shaper at any temperature in the range of 70 to 250 °C, preferably in the range of 100 to 250 °C range, preferably in the range of 120 to 250 °C preferably in the range of 140 to 220 °C, for at most 1 h -preferably at most 30 minutes- to form the object, and vi) collect the object from the shaper.
In accordance with the invention there is provided an object obtained by the process of the just above paragraph.
In accordance with the invention there is provided a process for making an object wherein the process comprises the steps of i) providing a TPCC, ii) providing a mould, iii) introducing the TPCC into the mould, iv) applying pressure and/or vacuum and/or heating the mould at any temperature in the range of 70 to 250 °C, preferably in the range of 100 to 250 °C range, preferably in the range of 120 to 250 °C preferably in the range of 140 to 220 °C, for at most 1 h -preferably at most 30 minutes- to form the object, and v) collect the object from the mould.
In accordance with the invention there is provided an object obtained by the process of the just above paragraph.

Unless otherwise explicitly stated, any feature, element, component, embodiment, aspect, range and especially any preferred feature, preferred element, preferred embodiment, preferred aspect, preferred range, preferred combination of ranges, preferments, embodiments and aspects in connection with any piece of the disclosure disclosed in section 5 can be combined with each other and with any other feature, element, component, embodiment, aspect, range and especially any preferred feature, preferred element, preferred embodiment, preferred aspect, preferred range, preferred combination of ranges, preferments, embodiments and aspects of the invention as these are disclosed in the entire specification.

Each of the thermosetting powder coating compositions according to the invention (or equally inventive thermosetting powder coating compositions) shown in the Examples constitute further preferments of the thermosetting powder coating compositions of the invention.

Each of the cured thermosetting powder coating compositions (powder coatings) derived upon curing of the thermosetting powder coating compositions according to the invention (or equally inventive powder coatings) shown in the Examples constitute further aspects of the thermosetting powder coating compositions of the invention.

Further preferments and aspects of the invention (with respect to those disclosed in the specification) are given in the claims in the specification.

Many other variations and embodiments of the invention are apparent to those skilled in the art, and such variations are contemplated within the scope of the claims.

Any feature, element, component, embodiment, range and especially any preferred feature, preferred element, preferred embodiment, preferred range, preferred combination of ranges, preferment described in the entire specification can be combined with each other.

The invention is described in detail with reference to the following non-limiting examples, which are by way of illustration only.

## 6. Examples

The invention is explained in more detail with reference to the following non-limiting examples.

In the Examples section:

- the abbreviation 'InvP' (followed by an indexing number) represents polyester resins according to the invention;
- the abbreviation 'CompP' (followed by an indexing number) represents polyester resins not according to the invention;
- the abbreviation 'Inv-TPCC' (followed by an indexing number) represents thermosetting powder coating compositions according to the invention (or equally mentioned in the Examples as inventive thermosetting powder coating compositions);
- the abbreviation 'Comp-TPCC' (followed by an indexing number) represents thermosetting powder coating compositions not according to the invention (or equally mentioned in the Examples as comparative thermosetting powder coating compositions);
- the abbreviation 'Inv-PC' (followed by an indexing number) represents powder coatings according to the invention;
- the abbreviation 'Comp-PC' (followed by an indexing number) represents powder coating compositions not according to the invention.

The powder coatings shown in the Examples were derived upon heat curing of their corresponding thermosetting powder coating compositions at 220 °C for 15 min and had a coating thickness of 75 $\pm$ 10 microns.

By 'inventive examples' is meant in the specification examples which are according to the invention.

By 'comparative examples' is meant in the specification examples which are not according to the invention.

All the examples shown in this section were carried out in a controlled laboratory environment at standard conditions (defined in the specification), a relative humidity of 5011 %, and airflow of $\leq$ 0.1 m/s.

### 6.1. Chemicals, raw materials and other materials used in the examples

Isosorbide (purity > 99 %; under the trade name POLYSORB®) was supplied by Roquette. Succinic acid was supplied by Roquette. Citric acid (purity> 99.7 %) was supplied by Möller Chemie. Neopentyl glycol (purity> 99 %) was supplied by Sigma-Aldrich®. Ethylene glycol (purity> 99.9 %) was supplied by Sigma-Aldrich®. Terephthalic acid (purity> 99.9 %) was supplied by Sigma-Aldrich®. Butyltin hydroxide-oxide (also known as butyl stanoic acid) (purity 98 %; CAS No. 2273-43-0) was used as a polycondensation catalyst, and it was supplied by Sigma-Aldrich Chemie N.V. 3,9-Bis(octadecyloxy)-2,4,8,10-tetraoxa-3,9-diphosphaspiro[5.5]undecane (also known as distearyl pentaerythritol diphosphate) (purity 90-100 %; CAS No. 3806-34-6) was used as an antioxidant, and it was supplied by Sigma-Aldrich Chemie N.V. Araldite® GT 7004 N is a solid (at 23$\pm$1 °C and atmospheric pressure) medium molecular weight epoxy resin based on bisphenol-A and was supplied by Jubail Chemical Industries Co. (JANA) [technical info as provided by the supplier:

epoxy value (ASTM D-1652): 1.33- 1.40 eq/Kg; weight per epoxide (ASTM D-1652): 714- 752 g/eq; viscosity at 25 °C (ISO 12058-1): 500-600 mPa.s; colour, Gardner in 40 wt% in butyl carbitol (ASTM D-1544): max. 1; appearance JCTM 001): clear; softening point, Mettler (ASTM D-3461): 95-101 °C; density at 25 °C (ISO 8130): 1.19 g/cm$^3$; flashpoint (ISO 2592): ≥ 200 °C; form: flakes (5 mm sieve); odor: none). The Araldite® GT 7004 N is an epoxy crosslinker according to the invention, and its EEW [determined via manual titration according to the ASTM D1652-11(2019)] was 730 g/eq. Nan Ya NPES-904 is a solid (at 23±1 °C and atmospheric pressure) medium molecular weight epoxy resin based on bisphenol-A and was supplied by Nan Ya Plastics Corporation [technical info as provided by the supplier: weight per epoxy: 780-850 g/eq; colour, Gardner: 1.0 max: softening point: 96-107 °C; melting viscosity at 150 °C: 4500-8000 cps; density at 25 °C: 1.18 g/cm$^3$, flash point: > 200 °C. The Nan Ya NPES-904 is an epoxy crosslinker according to the invention, and its EEW [determined via manual titration according to the ASTM D1652-11(2019)] was 808 g/eq. Olin™ D.E.R.™ 692 is a solid (at 23±1 °C and atmospheric pressure) low molecular weight epoxy resin based on bisphenol-A and was supplied by Olin™ [technical info as provided by the supplier: weight per epoxide (ASTM D-1652): 660-720 g/eq; ICI Melt Viscosity at 150 °C (ASTM D4287): 1700- 2500 mPa.s; colour; softening point (ASTM D3104): 89.0-97.0 °C. The Olin™ D.E.R.™ 692 is an epoxy crosslinker according to the invention, and its EEW [determined via manual titration according to the ASTM D1652-11(2019) was 665 g/eq. Olin™ D.E.R.™ 663UE is a solid (at 23±1 °C and atmospheric pressure) medium molecular weight epoxy resin based on bisphenol-A and was supplied by Olin™ [technical info as provided by the supplier: weight per epoxide (ASTM D-1652): 740- 800 g/eq; epoxide percentage (ASTM D-1652): 5.4-8.0 %; epoxide group content (ASTM D-1652): 2250-1350 mmol/kg; colour, Pt-Co (ASTM D-1209): max 90; melt viscosity at 150 °C (ASTM D-445): 2600- 4700 cSt; melt viscosity at 150 °C (ASTM D-4287): 3100- 5200 mPa.s; solution viscosity at 25 °C (ASTM D-445): 440- 550 cSt; softening point (ASTM D3104): 98-104 °C. The Olin™ D.E.R.™ 663UE is an epoxy crosslinker according to the invention, and its EEW [determined via manual titration according to the ASTM D1652-11(2019)] was 755 g/eq. Nan Ya NPES-901 is a solid (at 23±1 °C and atmospheric pressure) low molecular weight epoxy resin based on epichlorohydrin and bisphenol-A and was supplied by Nan Ya Plastics Corporation [technical info as provided by the supplier: weight per epoxy: 450- 500 g/eq; colour, Gardner: max. 1.0: softening point: 64-74 °C; solution Vis: D- F at 25 °C. The Nan Ya NPES-901 is not an epoxy crosslinker according to the invention, and its EEW [determined via manual titration according to the ASTM D1652-11(2019)] was 472 g/eq. Araldite® PT 912 is a solid (at 23±1 °C and atmospheric pressure) mixture of 60 wt% diglycidyl terephthalate and 40 wt% triglycidyl trimellitate (cf. Noordover, Ch. 4, p. 78, II. 4-5; Ch. 4, p. 97, Scheme 4-8, structures III and IV; and Ch. 4, p. 105, Table 4-5, Example 7, footnote 1), (each of which is an epoxy monomer in the language of the specification) and was supplied by HUNTSMAN [technical info as provided by the supplier: epoxy index (ISO 3001): 6.5- 7.10 eq/Kg; epoxy equivalent weight (ISO 3001): 141- 154 g/eq; melting point (DSC, ISO 11357-1): 82- 96 °C; density at 25 °C (ISO 8130): 1.32 g/cm$^3$; flashpoint (ISO 2592): ≥ 150 °C; form: white waxy granules ≤3 mm; odor: very slight). The Araldite® PT 912 is an epoxy crosslinker not according to the invention, and its EEW [determined via manual titration according to the ASTM D1652-11 (2019)] was 149 g/eq. EPON™ Resin 1007F [CAS No.: 25036-25-3; chemical designation: phenol, 4,4'-(1-methylethylidene)bis-,polymer with 2,2'-[(1-methylethylidene)bis(4,1-phenyleneoxymethylene)]bis(oxirane)] is a moderately high molecular weight solid epoxy resin (at 23±1 °C and atmospheric pressure) derived from a liquid epoxy resin and bisphenol-A and was supplied by Hexion Inc. [technical info as provided by the supplier: weight per epoxide (ASTM D1652): 1700-2300 g/eq; bulk density: 36-40 lbs/ft$^3$ (1 Kg/m$^3$= 0.062428 lbs/ft$^3$); esterification equivalent weight (g of resin required to esterify completely 1 gram equivalent of monobasic acid, e.g. 280 g of C18 fatty acid or 60 g of acetic acid): 200; hydroxyl content: 0.33; melting point (ASTM D3461): 120-130 °C; color (ASTM D1209): 200 Pt-Co; viscosity (ASTM D445): 50-100 cP at 25 °C; sodium content: 2 ppm; weight per gallon: 10.3 lbs at 20 °C (1 gallon= 4.54 L; 1 lbs= 0.45 Kg). The EPON™ Resin 1007F is an epoxy crosslinker not according to the invention, and its EEW [determined via manual titration according to the ASTM D1652-11(2019)] was 1800 g/eq. Resiflow® PV-5 (supplied by Worlée-Chemie GmbH) was used as a flow control agent. Benzoin (supplied by Sigma Aldrich) was used as degassing agent.

### 6.2. Determination of the acid value

The acid values AV and $AV_{PRC}$ were measured titrimetrically according to ISO 2114:2000. Each of the AV and $AV_{PRC}$ is given as the mass of potassium hydroxide (KOH) in milligrams that are required to neutralize one gram of the tested substance and are used as a measure of the concentration of carboxylic acid groups present.

### 6.3. Determination of the hydroxyl value

The hydroxyl values OHV and $OHV_{PRC}$ were measured titrimetrically in tetrahydrofuran according to ISO 4629-2:2016 [version used for the catalyzed method and tetrahydrofuran instead of N-methyl pyrrolidone (NMP)]. Each of the OHV and $OHV_{PRC}$ is given as the mass of potassium hydroxide (KOH) in milligrams that are required to neutralize one gram of the tested substance and is used as a measure of the concentration of hydroxyl groups present.

### 6.4. Determination of the number average molecular weight ($M_n$), the weight average molecular weight ($M_w$) and the polydispersity (D) of the polyester resins (abbreviated as 'SEC-Method')

The number average molecular weight ($M_n$) and the weight average molecular weight ($M_w$) were measured via Size Exclusion Chromatography (SEC) calibrated with a set of polystyrene standards with a molecular weight range of from 500 up to 7 $\times 10^6$ g/mol and using as an eluent stabilized tetrahydrofuran [THF with 0.007-0.015% w/w butyl-hydroxytoluene (BHT)] modified with 0.8 % acetic acid, at a flow rate of 1 mL/min at 40 °C. More specifically, 50 mg of a solid sample of a polyester resin were dissolved in 5 mL eluent for 16 hours at room temperature without shaking. Next, the solution thus prepared was filtrated through a VWR® syringe filter [European Article No. 514-0071; PTFE (polytetrafluoroethylene) syringe filter of 25 mm and 0.45 μm pore size], supplied from VWR International, LLC. 10 μL of the solution thus prepared after the filtration were injected into the system for the measurement. The SEC measurements were carried out on a Waters Acquity® APC™ system which consisted of: i) a Waters Acquity® UPLC RI refractive index detector at 40 °C, ii) a Waters Acquity® APC™ Column Manager - S with three different Acquity® APC™ columns (450Å, 125Å and 45Å pore size) with l/d = 150/4.6 mm and are filled with particles having a particle size of 2.5 (the 450Å and the 125Å column) or 1.7 μm (the 45Å column) (1 μm= $1\times10^{-6}$ m), (supplied by Waters), iii) an Acquity® APC™ Sample Manager - pFTN injection system and iv) an Acquity® APC™ p-Isocratic Solvent Manager isocratic pump. The $M_n$ and $M_w$ were determined by the use of Empower 3 software from Waters.

The polydispersity (D) was determined according to the following equation:

$$D= M_w/M_n$$

wherein $M_n$ and $M_w$ are the number average molecular weight and the weight average molecular weight, respectively.

### 6.5. Determination of the $T_g$ of polyester resins ('DSC Method-Tg)

The glass transition temperature ($T_g$ in °C) of the polyester resins was measured via Differential Scanning Calorimetry (DSC) on a TA Instruments DSC Q20 apparatus, in $N_2$ atmosphere calibrated with indium, as follows: a sample of 7.5±0.5 mg of the polyester resin placed in the DSC cell at room temperature. The sample was heated up to 150 °C at a heating rate of 40°C/minute (thermograph A). Once the sample has reached 150 °C, the temperature was maintained at 150 °C for 10 minutes. Subsequently, the sample was cooled down to 0 ºC at a heating rate of 30 °C/minute (thermograph B); once the sample has reached 0 °C, the temperature was maintained at 0 °C for 1 minute. Subsequently, the sample was heated up to 150 ºC at a heating rate of 5 ºC/minute (thermograph C). Thermographs A, B and C were processed as the Y-axis of the thermographs representing the heat flow having exotherm up and endotherm down. Thermograph C was used to measure the inflection point (glass transition temperature, $T_g$) of the polyester resins. The glass transition temperature of the polyester resins was the inflection point temperature of the temperature range over which the glass transition took place; said inflection point temperature was the point on the thermal curve corresponding to the peak of the first derivative (with respect to time) of the parent thermal curve. This point corresponds to the inflection point of the parent thermal curve, as defined in §3.2.1.3 in ASTM E 1356-2008. The processing of the signal (DSC thermogram, Heat Flow vs Temperature) was carried out using Universal Analysis 2000 software version 4.5a provided by TA instruments.

### 6.6. Determination of the epoxy equivalent weight (EEW)

The epoxy equivalent weight values $EEW_{EPX}$ and $EEW_{CEPX}$ were determined via manual titration according to the ASTM D1652-11 (2019).

### 6.7. Determination of the ratio R

The ratio R is determined according to the following equation:

$$R= (56100 \text{ x } W_{EPX})/ (W_{PRC} \text{ x } AV_{PRC} \text{ x } EEW_{EPX})$$

wherein

the $EEW_{EPX}$ is the epoxy equivalent weight of the epoxy crosslinker (abbreviated as EPX) determined via manual titration according to the ASTM D1652-11(2019) (see also paragraph 6.6),

the $AV_{PRC}$ is the acid value of the polyester resin component that is determined titrimetrically according to the ISO 2144:2000 (see also paragraph 6.2),
$W_{EPX}$: is the amount of EPX in the constituent B (in pph of B),
$W_{PRC}$: is the amount of PRC in the constituent B (in pph of B).

It is reminded that the aggregate of $W_{EPX}$ and $W_{PRC}$ is equal to 100 pph of B.

### 6.8. Assessment of the thermosetting powder coating compositions and their corresponding powder coatings

#### 6.8.1. Assessment of the physical storage stability (PSS) of the thermosetting powder coating compositions

The physical storage stability (PSS) of the thermosetting powder coating compositions shown in the Examples was tested according to ISO 8130-8:2010 at 40 ºC for a total of 28 days. The measurement of the PSS of said thermosetting powder coating compositions was initiated upon extrusion, milling, sieving and cooling down at room temperature for about 30 minutes. The greater the extent of agglomeration or sintering, the poorer the PSS, thus the lower it is the ranking according to the following scale. The extent of agglomeration was visually assessed and ranked according to the following rating on a 1-10 scale (1 representing the worst PSS and 10 the best PSS):

10: No change.
9: No agglomeration; very good fluidity.
8: No agglomeration; good fluidity.
7: Very low agglomeration; agglomeration can be dispersed by one light tap into a fine powder.
6: Very low agglomeration; agglomeration can be dispersed by several taps into a fine powder.
5: Low agglomeration; agglomeration can be dispersed by hand pressure into a fine powder.
4: Low agglomeration; agglomeration cannot be dispersed by hand pressure in a fine powder.
3: Severe agglomeration into several large lumps; material is pourable.
2: Severe agglomeration into several large lumps; material is not pourable.
1: product sintered to one lump, volume reduced.

#### 6.8.2. Assessment of the adhesion of the powder coatings

The adhesion as determined below should be assessed on powder coatings having a coating thickness in the range of 75 ± 10 micron -on the type of panels used in the Examples- and which powder coatings were derived upon heat curing at 220 °C for 15 minutes of their corresponding thermosetting powder coating compositions.

The adhesion was determined using a cross-cut test ('Gitterschnitt') in accordance with ISO 2409:2020. The degree of adhesion of the coating onto the substrate was classified with a scale from 0 to 5 as reported in Table 1 of the ISO 2409:2020 (0 representing the best possible adhesion recorded with this test method and 5 the worst adhesion recorded with this test method). By 'powder coating having excellent adhesion' is meant in the specification that a powder coating has an adhesion of 0. By 'powder coating having very good adhesion' is meant in the specification that a powder coating has an adhesion of 1. By 'powder coating having good adhesion' is meant in the specification that a powder coating has an adhesion of 2. By 'powder coating having insufficient adhesion' is meant in the specification that a powder coating has an adhesion of 3. By 'powder coating having poor adhesion' is meant in the specification that the a powder coating has an adhesion of 4. By 'powder coating having very poor adhesion' is meant in the specification that a powder coating has an adhesion of 5.

The powder coatings of the invention have at least very good adhesion; by "very good adhesion" is meant in the specification that the adhesion of powder coatings derived upon curing of thermosetting powder coating compositions is equal to 1. Preferably, the powder coatings of the invention have excellent adhesion; by "excellent adhesion" is meant in the specification that the adhesion of powder coatings derived upon curing of thermosetting powder coating compositions is equal to 0.

#### 6.8.3. Chemical Resistance- Acetone Double Rubs (ADR)

The chemical resistance as determined below should be assessed on powder coatings having a coating thickness in the range of 75 ± 10 micron -on the type of panels used in the Examples- and which powder coatings were derived upon heat curing at 220 °C for 15 minutes of their corresponding thermosetting powder coating compositions.

The chemical resistant was assessed via acetone double rubs (ADR). With one acetone double rub (ADR) is meant one continuous back and forward movement, in a cycle time of about one second, over the surface of a powder coating using a cotton cloth drenched in acetone, which cotton cloth covers a hammerhead having a weight of about

980 grams and a contact surface area with the powder coating of about 2 $cm^2$. Every 10 rubs, the cloth was drenched in acetone. The measurement was carried out at room temperature, and it was performed on coatings that were left at room temperature for at most 24 hours before been tested; the measurement was continued either until the coating was removed and the number of ADR at which the coating was removed was reported, or until 500 ADR were reached. A result reported as 30 ADR indicates that there was no coating left after 30 ADR. A result reported as 120 ADR indicates that there was no coating left after 120 ADR. A result reported as 500 ADR indicates that there was coating left after 500 ADR.

### 6.8.4. Coating thickness of the powder coatings

The coating thickness of the powder coatings derived upon heat curing of the corresponding thermosetting powder coating compositions was measured with a PosiTector 6000 coating thickness gauge from DeFelsko Corporation according to EN ISO 2808:2007. The coating thickness of the powder coatings shown in the examples was in the range of 75 ± 10 microns.

### 6.9. Synthesis of polyester resins

The composition of the polyester resins shown below refers to a yield of 1.0 Kg of polyester resin. The polyester resins shown below were prepared via a two-phase (or two-steps) polycondensation reaction. At the end of the first step, a hydroxyl functional polyester resin (in the case of the synthesis of all polyester resins but polyester resin Inv5), or a carboxylic acid functional polyester resin (in case of the synthesis of the polyester resin Inv5) was obtained (mentioned herein as a precursor); next, the precursor was reacted further as detailed in the examples to obtain the end polyester resins of the examples.

All the polyester resins shown in the examples were carboxylic acid functional polyester resins.

Each of the polyester resins shown in the examples was solid at room temperature and at atmospheric pressure.

### 6.9.1. Synthesis of polyester resin InvP1 (Example A1)

A reactor vessel fitted with a thermometer, a stirrer and a distillation device for the removal of water formed during the synthesis was filled with butyl stanoic acid (0.5 g) (catalyst), distearyl pentaerythritol diphosphate (0.8 g) (anti-oxidant), isosorbide (583.7 g, 3.99 mol) under nitrogen flow. The vessel was heated up to 150 °C until the mixture was molten. Then succinic acid (439.0 g, 3.72 mol) was added and under a nitrogen flow, the temperature was gradually increased to 230 °C while distilling off the reaction water until the acid value of the precursor of the polyester was 97.7 mg KOH/g. A vacuum was applied at 230 °C until the polyester reached an acid value 12.9 mg KOH/g; that marked the completion of the first step. For the second step, the reaction mixture was cooled to 185 °C, and subsequently, the citric acid (119.9 g, 0.62 mol) was added. The temperature was raised to 170 °C, and the polyester was stirred for one hour at 170°C. A vacuum was applied at 170 °C until the polyester reached an acid value of 75.3 mg KOH/g; that marked the completion of the last step, prior to being discharged onto an aluminium foil that was kept at room temperature [properties: AV= 75.3 mg KOH/g, OHV= 9.8 mg KOH/g, $M_n$= 1795 Da, $M_w$= 3593 Da, D= 2.0, $T_g$= 63 °C, the amount of the polycondensed residues of citric acid (component A2 in the language of the claims) present in the polyester resin InvP1 was 7.5 mol% based on polyester resin InvP1]. This is a polyester resin, according to the invention.

### 6.9.2. Synthesis of polyester resin InvP2 (Example A2)

A reactor vessel fitted with a thermometer, a stirrer and a distillation device for the removal of water formed during the synthesis was filled with butyl stanoic acid (0.5 g) (catalyst), distearyl pentaerythritol diphosphate (0.8 g) (anti-oxidant), neopentyl glycol (355.0 g, 3.41 mol) and ethylene glycol (40.5g, 0.65 mol) under nitrogen flow. The vessel was heated up to 150 °C until the mixture was molten. Then terephthalic acid (629.7g, 3.79 mol) was added and under a nitrogen flow, the temperature was gradually increased to 260 °C while distilling off the reaction water until the acid value of the precursor of the polyester was 11.1 mg KOH/g. A vacuum was applied at 220 °C until the polyester reached an acid value 6.5 mg KOH/g; that marked the completion of the first step. For the second step, the reaction mixture was cooled to 160 °C, and subsequently, the citric acid (120.0 g, 0.62 mol) was added and the mixture was stirred for 30 minutes at 160 °C. The temperature was raised to 170 °C, and the polyester was stirred for 30 minutes at 170 °C. A vacuum was applied at 170 °C until the polyester reached an acid value of 73.9 mg KOH/g; that marked the completion of the last step, prior to being discharged onto an aluminium foil that was kept at room temperature [properties: AV= 73.9 mg KOH/g, OHV= 42.8 mg KOH/g, $M_n$= 2693 Da, $M_w$= 7411 Da, D= 2.8, $T_g$= 63.8 °C, the amount of the polycondensed residues of citric acid (component A2 in the language of the claims) present in the polyester resin InvP2 was 7.4 mol% based on polyester resin InvP2]. This is a polyester resin, according to the invention.

#### 6.9.3. Synthesis of polyester resin InvP3 (Example A3)

A reactor vessel fitted with a thermometer, a stirrer and a distillation device for the removal of water formed during the synthesis was filled with butyl stanoic acid (0.5 g) (catalyst), distearyl pentaerythritol diphosphate (0.8 g) (anti-oxidant), neopentyl glycol (410.7 g, 3.94 mol) under nitrogen flow. The vessel was heated up to 150 °C until the mixture was molten. Then terephthalic acid (610.3g, 3.67 mol) was added and under a nitrogen flow, the temperature was gradually increased to 260 °C while distilling off the reaction water until the acid value of the precursor of the polyester was 10.5 mg KOH/g. A vacuum was applied at 220 °C until the polyester reached an acid value 5.5 mg KOH/g; that marked the completion of the first step. For the second step, the reaction mixture was cooled to 160 °C, and subsequently, the citric acid (120.0 g, 0.62 mol) was added and the mixture was stirred for 30 minutes at 160 °C. The temperature was raised to 170 °C, and the polyester was stirred for 30 minutes at 170 °C. A vacuum was applied at 170 °C until the polyester reached an acid value of 74.6 mg KOH/g; that marked the completion of the last step, prior to being discharged onto an aluminium foil that was kept at room temperature [properties: AV= 74.6 mg KOH/g, OHV= 51.2 mg KOH/g, $M_n$= 2928 Da, $M_w$= 8499 Da, D= 2.9, $T_g$= 62.9 °C, the amount of the polycondensed residues of citric acid (component A2 in the language of the claims) present in the polyester resin InvP3 was 7.6 mol% based on polyester resin InvP3]. This is a polyester resin, according to the invention.

#### 6.9.4. Synthesis of polyester resin InvP4 (Example A4)

A reactor vessel fitted with a thermometer, a stirrer and a distillation device for the removal of water formed during the synthesis was filled with butyl stanoic acid (0.5 g) (catalyst), distearyl pentaerythritol diphosphate (0. 8g) (anti-oxidant), isosorbide (586.5 g, 4.01 mol). The vessel was heated up to 150 °C until the mixture was molten. Then succinic acid (466.1 g, 3.95 mol) was added and under a nitrogen flow, the temperature was gradually increased to 230 °C while distilling off the reaction water until the acid value of the precursor of the polyester was 112.2 mg KOH/g. A vacuum was applied at 230 °C until the polyester reached an acid value of 25.8 mg KOH/g); that marked the completion of the first step. For the second step, the reaction mixture was cooled to 170 °C, and subsequently, the citric acid (89.3 g, 0.46 mol) was added. The temperature was raised to 170 °C, and the polyester was stirred for one hour at 170 °C. A vacuum was applied at 170 °C until the polyester reached an acid value of 79.0 mg KOH/g; that marked the completion of the last step, prior to being discharged onto an aluminium foil that was kept at room temperature [properties: AV= 79.0 mg KOH/g, OHV= 32.7 mg KOH/g, $M_n$= 1848 Da, $M_w$= 3482 Da, D= 1.9, $T_g$= 55.7 °C, the amount of the polycondensed residues of citric acid (component A2 in the language of the claims) present in the polyester resin InvP4 was 5.5 mol% based on polyester resin InvP4]. This is a polyester resin, according to the invention.

#### 6.9.5. Synthesis of polyester resin InvP5 (Example A5)

A reactor vessel fitted with a thermometer, a stirrer and a distillation device for the removal of water formed during the synthesis was filled with butyl stanoic acid (0.5 g) (catalyst), distearyl pentaerythritol diphosphate (0. 8g) (anti-oxidant), isosorbide (605.1 g, 4.14 mol). The vessel was heated up to 150 °C until the mixture was molten. Then succinic acid (500.4 g, 4.24 mol) was added and under a nitrogen flow, the temperature was gradually increased to 230 °C while distilling off the reaction water until the acid value of the precursor of the polyester was 130.7 mg KOH/g. A vacuum was applied at 230 °C until the polyester reached an acid value of 24.8 mg KOH/g); that marked the completion of the first step. For the second step, the reaction mixture was cooled to 170 °C, and subsequently, the citric acid (41.5 g, 0.22 mol) was added. The temperature was raised to 170 °C, and the polyester was stirred for one hour at 170 °C. A vacuum was applied at 170 °C until the polyester reached an acid value of 59.3 mg KOH/g; that marked the completion of the last step, prior to being discharged onto an aluminium foil that was kept at room temperature [properties: AV= 59.3 mg KOH/g, OHV= 10.5 mg KOH/g, $M_n$= 1969 Da, $M_w$= 3654 Da, D= 1.9, $T_g$= 58.7 °C, the amount of the polycondensed residues of citric acid (component A2 in the language of the claims) present in the polyester resin InvP5 was 2.5 mol% based on polyester resin InvP5]. This is a polyester resin, according to the invention.

#### 6.9.6. Synthesis of polyester resin CompP1 (Example B1)

A reactor vessel fitted with a thermometer, a stirrer and a distillation device for the removal of water formed during the synthesis was filled with butyl stanoic acid (0.5 g) (catalyst), distearyl pentaerythritol diphosphate (0.08g) (anti-oxidant), isosorbide (582.9 g, 3.99 mol). The vessel was heated up to 150°C until the mixture was molten. Then succinic acid (413.2g, 3.50 mol) was added and under a nitrogen flow, the temperature was gradually increased to 230°C while distilling off the reaction water until the acid value of the precursor of the polyester was 65.2 mg KOH/g. A vacuum was applied at 230 °C until the polyester reached an acid value of 10.1 mg KOH/g); that marked the completion of the first step. For the second step, the reaction mixture was cooled to 185 °C, and subsequently, the citric acid (134.4 g,

0.70 mol) was added. The temperature was raised to 170 °C, and the polyester was stirred for one hour at 170 °C. A vacuum was applied at 170 °C until the polyester reached an acid value of 102.3 mg KOH/g; that marked the completion of the last step, prior to being discharged onto an aluminium foil that was kept at room temperature [properties: AV= 102.3 mg KOH/g, OHV= 59.3 mg KOH/g, $M_n$= 1322 Da, $M_w$= 2408 Da, D= 1.8, $T_g$= 58.6 °C, the amount of the polycondensed residues of citric acid present in the polyester resin CompP1 was 8.5 mol% based on polyester resin CompP1].

This is a polyester resin not according to the invention; this is a reproduction of the polyester resin shown as entry 4 in Table 4-3 (entitled: Properties of CA-modified polyesters used for coating application) on p. 102 (chapter 4.3.6) of the thesis of Noordover, B. A. J. entitled 'Biobased step-growth polymers: Chemistry, Functionality and Applicability' (TU/e Eindhoven University of Technology; ISBN 978-90-386-1179-2; published on 01 January 2008).

### 6.9.7. Synthesis of polyester resin CompP2 (Example B4)

A reactor vessel fitted with a thermometer, a stirrer and a distillation device for the removal of water formed during the synthesis was filled with butyl stanoic acid (0.5 g) (catalyst), distearyl pentaerythritol diphosphate (0.8g) (antioxidant), isosorbide (615.4 g, 4.21 mol). The vessel was heated up to 150 °C until the mixture was molten. Then succinic acid (491.9 g, 4.17 mol) was added and under a nitrogen flow, the temperature was gradually increased to 230 °C while distilling off the reaction water until the acid value of the precursor of the polyester was 115.8 mg KOH/g. A vacuum was applied at 230 °C until the polyester reached an acid value of 59.8 mg KOH/g); that marked the completion of the first step. For the second step, the reaction mixture was cooled to 170 °C, and subsequently, the citric acid (22.4 g, 0.12 mol) was added. The temperature was raised to 170 °C, and the polyester was stirred for one hour at 170 °C. A vacuum was applied at 170 °C until the polyester reached an acid value of 69.4 mg KOH/g; that marked the completion of the last step, prior to being discharged onto an aluminium foil that was kept at room temperature [properties: AV= 69.4 mg KOH/g, OHV= 55.0 mg KOH/g, $M_n$= 1527 Da, $M_w$= 2616 Da, D= 1.7, $T_g$= 44.9 °C, the amount of the polycondensed residues of citric acid present in the polyester resin CompP2 was 1.4 mol% based on polyester resin CompP2].

### 6.9.8. Synthesis of polyester resin CompP3 (Example B5)

A reactor vessel fitted with a thermometer, a stirrer and a distillation device for the removal of water formed during the synthesis was filled with butyl stanoic acid (0.5 g) (catalyst), distearyl pentaerythritol diphosphate (0.8g) (antioxidant), isosorbide (610.4 g, 4.18 mol). The vessel was heated up to 150 °C until the mixture was molten. Then succinic acid (452.6 g, 3.83 mol) was added and under a nitrogen flow, the temperature was gradually increased to 230 °C while distilling off the reaction water until the acid value of the precursor of the polyester was 84.3 mg KOH/g. A vacuum was applied at 230 °C until the polyester reached an acid value of 63.0 mg KOH/g); that marked the completion of the first step. For the second step, the reaction mixture was cooled to 160 °C, and subsequently, the citric acid (67.6 g, 0.35 mol) was added. The temperature was raised to 170 °C, and the polyester was stirred for one hour at 170 °C. A vacuum was applied at 170 °C until the polyester reached an acid value of 78.8 mg KOH/g; that marked the completion of the last step, prior to being discharged onto an aluminium foil that was kept at room temperature [properties: AV= 78.8 mg KOH/g, OHV= 62.6 mg KOH/g, $M_n$= 1336 Da, $M_w$= 2195 Da, D= 1.6, $T_g$= 44.9 °C, the amount of the polycondensed residues of citric acid present in the polyester resin CompP3 was 4.2 mol% based on polyester resin CompP3].

### 6.9.9. Synthesis of polyester resin CompP4 (Example B6)

A reactor vessel fitted with a thermometer, a stirrer and a distillation device for the removal of water formed during the synthesis was filled with butyl stanoic acid (0.5 g) (catalyst), distearyl pentaerythritol diphosphate (0.8g) (antioxidant), isosorbide (617.8 g, 4.23 mol). The vessel was heated up to 150 °C until the mixture was molten. Then succinic acid (493.7 g, 4.18 mol) was added and under a nitrogen flow, the temperature was gradually increased to 230 °C while distilling off the reaction water until the acid value of the precursor of the polyester was 104.2 mg KOH/g. A vacuum was applied at 230 °C until the polyester reached an acid value of 13.0 mg KOH/g); that marked the completion of the first step. For the second step, the reaction mixture was cooled to 160 °C, and subsequently, the citric acid (35.1 g, 0.18 mol) was added. The temperature was raised to 170 °C, and the polyester was stirred for one hour at 170 °C. A vacuum was applied at 170 °C until the polyester reached an acid value of 34.9 mg KOH/g; that marked the completion of the last step, prior to being discharged onto an aluminium foil that was kept at room temperature [properties: AV= 34.9 mg KOH/g, OHV= 8.6 mg KOH/g, $M_n$= 2154 Da, $M_w$= 4241 Da, D= 2.0, $T_g$= 59.2 °C, the amount of the polycondensed residues of citric acid present in the polyester resin CompP4 was 2.1 mol% based on polyester resin CompP4].

### 6.10. Preparation of the thermosetting powder coating compositions of Tables 1-6

#### 6.10.1. General Procedure

The components used to prepare the thermosetting powder coating compositions of Tables 1-6 are described in Tables 1-6.

The thermosetting powder coating compositions of Tables 1-6 were prepared by mixing their components in a blender and subsequently extruding the obtained mixture in a PRISM TSE16 PC twin-screw at 110 °C with a screw speed of 200 rpm. The extrudate was allowed to cool at room temperature, and it was then chopped into chips. The chips were milled in a Pulverisette 14 (supplied by Fritsch GmbH) equipped with a 0.5 mm ring sieve at 18000 rpm and then sieved in a vibratory sieve shaker sieving apparatus Analysette 3 model Spartan (supplied by Fritsch GmbH). The sieve fraction with particle size below 90 μm was collected. Each of the thermosetting powder coating compositions of Tables 1-5 had a R= 1.0, while Table 6 contains thermosetting powder coating compositions of varying R (ExD9 had a R= 0.55, ExC9 had a R= 0.90, ExC1 had a R= 1.0, ExC10 had a R= 1.2, ExC11 had a R= 1.4 and ExD10 had a R= 2.5).

### 6.11. Preparation of the powder coatings

#### 6.11.1. General Procedure

Once the thermosetting powder coating compositions of Tables 1-6 were prepared as mentioned in paragraph 6.10, they were electrostatically sprayed (corona, 60 kV) onto 0.81 mm thick (102 mm wide and 152 mm length) chromate aluminium Q-panels (type: AQT-46; 5005 H24 aluminium, trivalent chrome pretreated; supplied by Q-Lab Corporation) and cured at 220 °C for 15 minutes in an air-circulation oven (Heraeus Instruments UT6120) at atmospheric pressure to provide clear (non-pigmented) powder coatings having a coating thickness of 75 ± 10 microns.

**Table 1:** Composition and properties of inventive (EXC1) and comparative (ExD1- ExD4) thermosetting powder coating compositions and powder coatings thereof

| | Ex C1 | Ex D1 | Ex D2 | Ex D3 | Ex D4 |
|---|---|---|---|---|---|
| Thermosetting Powder Coating Composition | Inv-TPCC 1 | Comp-TPCC1 | Comp-TPCC2 | Comp-TPCC3 | Comp-TPCC4 |
| Polyester resin InvP1 (g) | 152 | | 250 | | 88 |
| Polyester resin CompP1 (g) | | 236 | | 129 | |
| Araldite® PT912 (g) (EEW= 149 g/eq) | | 64 | 50 | | |
| Araldite® GT 7004 N (g) (EEW= 730 g/eq) | 148 | | | 171 | |
| EPON™ Resin 1007F (g) (EEW= 1800 g/eq) | | | | | 212 |
| Resiflow® PV-5 (g) | 3.6 | 3.6 | 3.6 | 3.6 | 3.6 |
| Benzoin (g) | 1.8 | 1.8 | 1.8 | 1.8 | 1.8 |
| Properties of the thermosetting powder coating composition | | | | | |
| Physical Storage Stability (PSS) | 8 | 1 | 1 | 3 | 8 |
| | very good | very poor | very poor | poor | very good |
| Properties of the powder coating | Inv-PC1 | Comp-PC1 | Comp-PC2 | Comp-PC3 | Comp-PC4 |
| Chemical Resistance (ADR) | 120 | 150 | 150 | 170 | 20 |
| | good | good | good | good | very poor |

(continued)

| | Ex C1 | Ex D1 | Ex D2 | Ex D3 | Ex D4 |
|---|---|---|---|---|---|
| Adhesion | 0 | 2 | 0 | 0 | 0 |
| | excellent | good | excellent | excellent | excellent |

**Table 2:** Composition and properties of inventive (EXC2-ExC4) and comparative (ExD4 and ExD5) thermosetting powder coating compositions and powder coatings thereof- Influence of the $EEW_{EPX}$.

| | ExD5 | ExC2 | ExC3 | ExC4 | ExD4 |
|---|---|---|---|---|---|
| Thermosetting Powder Coating Composition | Comp-TPCC5 | Inv-TPCC2 | Inv-TPCC3 | Inv-TPCC4 | Comp-TPCC4 |
| Polyester resin InvP1 (g) | 184 | 159 | 149 | 144 | 88 |
| NAN YA Plastics Corporation NPES-901 (EEW=472 g/eq) | 116 | | | | |
| NAN YA Plastics Corporation NPES-904 (EEW=809 g/eq) | | | | 156 | |
| Olin™ D.E.R.™ 692 (EEW=665 g/eq) | | 141 | | | |
| Olin™ D.E.R.™ 663U(E) (EEW=755 g/eq) | | | 151 | | |
| EPONTM Resin 1007F (g) (EW= 1800 g/eq) | | | | | 212 |
| Resiflow ® PV-5 (g) | 3.6 | 3.6 | 3.6 | 3.6 | 3.6 |
| Benzoin (g) | 1.8 | 1.8 | 1.8 | 1.8 | 1.8 |
| Properties of the thermosetting powder coating composition | | | | | |
| Physical Storage Stability (PSS) | 1 | 7 | 9 | 8 | 8 |
| | very poor | very good | excellent | very good | very good |
| Properties of the coating | Comp-PC5 | Inv-PC2 | Inv-PC3 | Inv-PC4 | Comp-PC4 |
| Chemical Resistance (ADR) | 360 | 320 | 300 | 290 | 20 |
| | very good | very good | very good | very good | very poor |
| Adhesion | 0 | 0 | 0 | 0 | 0 |
| | excellent | excellent | excellent | excellent | excellent |

**Table 3:** Composition and properties of inventive (EXC1, ExC5, ExC6) and comparative (ExD3 and ExD6) thermosetting powder coating compositions and powder coatings thereof- Influence of the amount of $W_{A2}$, $W_{A2}$, and $W_{A2/A2'}$.

| | ExD6 | ExC5 | ExC6 | ExC1 | ExD3 |
|---|---|---|---|---|---|
| Thermosetting Powder Coating Composition | Comp-TPCC6 | Inv-TPCC5 | Inv-TPCC6 | Inv-TPCC1 | Comp-TPCC3 |
| Polyester resin InvP1 (g) | | | | 152 | |
| Polyester resin InvP4 (g) | | | 148 | | |
| Polyester resin InvP5 (g) | | 169 | | | |

(continued)

| | ExD6 | ExC5 | ExC6 | ExC1 | ExD3 |
|---|---|---|---|---|---|
| Polyester resin CompP1 (g) | | | | | 129 |
| Polyester resin CompP2 (g) | 157 | | | | |
| Araldite® GT 7004 N (g) (EEW=730 g/eq) | 143 | 131 | 152 | 148 | 171 |
| Resiflow® PV-5 (g) | 3.6 | 3.6 | 3.6 | 3.6 | 3.6 |
| Benzoin (g) | 1.8 | 1.8 | 1.8 | 1.8 | 1.8 |
| Properties of the thermosetting powder coating composition | | | | | |
| Physical Storage Stability (PSS) | 1 | 6 | 7 | 8 | 3 |
| | very poor | good | very good | very good | poor |
| Properties of the coating | Comp-PC6 | Inv-PC5 | Inv-PC6 | Inv-PC1 | Comp-PC3 |
| Chemical Resistance (ADR) | 28 | 110 | 120 | 120 | 170 |
| | very poor | good | good | good | good |
| Adhesion | 5 | 0 | 0 | 0 | 0 |
| | very poor | excellent | excellent | excellent | excellent |

**Table 4:** Composition and properties of inventive EXC7-ExC8 thermosetting powder coating compositions and powder coatings thereof.

| | ExC7 | ExC8 |
|---|---|---|
| Thermosetting Powder Coating Composition | Inv-TPCC7 | Inv-TPCC8 |
| Polyester resin InvP2 (g) | 152 | |
| Polyester resin InvP3 (g) | | 152 |
| Araldite® GT 7004 N (g) (EEW=730 g/eq) | 148 | 148 |
| Resiflow ® PV-5 (g) | 3.6 | 3.6 |
| Benzoin (g) | 1.8 | 1.8 |
| Properties of the thermosetting powder coating composition | | |
| Physical Storage Stability (PSS) | 6 | 8 |
| | good | very good |
| Properties of the coating | Inv-PC7 | Inv-PC8 |
| Chemical Resistance (ADR) | 360 | 360 |
| | very good | very good |
| Adhesion | 0 | 0 |
| | excellent | excellent |

**Table 5:** Composition and properties of comparative EXD7-ExD8 thermosetting powder coating compositions and powder coatings thereof.

| | ExD7 | ExD8 |
|---|---|---|
| Thermosetting Powder Coating Composition | Comp-TPCC7 | Comp-TPCC8 |
| Polyester resin CompP4 (g) | 206 | |
| Polyester resin CompP3 (g) | | 148 |
| Araldite® GT 7004 N (g) (EEW=730 g/eq) | 94 | 152 |
| Resiflow ® PV-5 (g) | 3.6 | 3.6 |
| Benzoin (g) | 1.8 | 1.8 |
| Properties of the thermosetting powder coating composition | | |
| Physical Storage Stability (PSS) | 1 | 1 |
| | very poor | very poor |
| Properties of the coating | Comp-PC7 | Comp-PC8 |
| Chemical Resistance (ADR) | 34 | 45 |
| | very poor | poor |
| Adhesion | 0 | 0 |
| | excellent | excellent |

**Table 6:** Composition and properties of inventive (EXC1, and ExC9-ExC11) and comparative (ExD9 and ExD10) thermosetting powder coating compositions and powder coatings thereof- Influence of the ratio R (see also paragraph 6.10.1).

| | ExD9 | ExC9 | ExC1 | ExC10 | ExC11 | ExD10 |
|---|---|---|---|---|---|---|
| Thermosetting Powder Coating Composition | Comp-TPCC9 | Inv-TPCC9 | Inv-TPCC1 | Inv-TPCC10 | Inv-TPCC11 | Comp-TPCC10 |
| Polyester resin InvP1 (g) | 195 | 159 | 152 | 138 | 126 | 87 |
| Araldite® GT 7004 N (g) (EEW=730 g/eq) | 105 | 141 | 148 | 162 | 174 | 213 |
| Resiflow ® PV-5 (g) | 3.6 | 3.6 | 3.6 | 3.6 | 3.6 | 3.6 |
| Benzoin (g) | 1.8 | 1.8 | 1.8 | 1.8 | 1.8 | 1.8 |
| Properties of the thermosetting powder coating composition | | | | | | |
| Physical Storage Stability (PSS) | 2 | 7 | 8 | 8 | 8 | 2 |
| | poor | very good | very good | very good | very good | poor |
| Properties of the coating | Comp-PC9 | Inv-PC9 | Inv-PC1 | Inv-PC10 | Inv-PC11 | Comp-PC10 |
| Chemical Resistance (ADR) | 90 | 115 | 120 | 280 | 280 | 20 |
| | insufficient | good | good | very good | very good | very poor |
| Adhesion | 0 | 0 | 0 | 0 | 0 | 0 |
| | excellent | excellent | excellent | excellent | excellent | excellent |

From the results shown in Tables 1-6, it is evident that only the claimed thermosetting powder coating compositions (ExC1-ExC11) provided a solution to the technical problem of providing thermosetting powder coating compositions comprising polyester resins which comprise reacted residues of citric acid, where said thermosetting powder coating compositions have at least good -preferably very good, more preferably excellent- physical storage stability at elevated temperature (40 °C) and for a prolonged storage time (28 days) and are able to produce upon heat-curing (at 220 °C for 15 min) powder coatings which have at least good chemical resistance and at least very good - preferably excellent- adhesion.

When comparative thermosetting powder coating compositions that did not have the combination of any and all technical features of the claimed thermosetting powder coating compositions (ExD1-ExD10), were used these thermosetting powder coating compositions failed to provide for thermosetting powder coating compositions comprising polyester resins which comprised reacted residues of citric acid, where said thermosetting powder coating compositions had at least good - preferably very good, more preferably excellent- physical storage stability at elevated temperature (40 °C) and for a prolonged storage time (28 days), and were unable to produce upon heat-curing (at 220 °C for 15 min) powder coatings which had at least good chemical resistance and at least very good -preferably excellent- adhesion. In other words, none of these comparative thermosetting powder coating compositions provided for thermosetting powder coating compositions that combined at least good -preferably very good, more preferably excellent- physical storage stability at elevated temperature (40 °C) and for a prolonged storage time (28 days) and are able to produce upon heat-curing (at 220 °C for 15 min) powder coatings which have at least good chemical resistance and at least very good -preferably excellent- adhesion. It must be noted that the comparative example ExD1 is a duplicate of the example 7 shown in Table 4-5 on p. 105 in Noordover. This thermosetting powder coating composition failed to provide a solution to the technical problem of providing thermosetting powder coating compositions comprising polyester resins which comprise reacted residues of citric acid, where said thermosetting powder coating compositions have at least good physical storage stability at elevated temperature (40 °C) and for a prolonged storage time (28 days), and was unable to produce upon heat-curing (at 220 °C for 15 min) powder coatings which have at least very good -preferably excellent- adhesion. The reason being this thermosetting powder coating composition had a very poor physical storage stability and the powder coating prepared thereof had only a good adhesion.

## Claims

1. A thermosetting powder coating composition (abbreviated as TPCC) comprising a constituent B (abbreviated as B) in an amount of at least 25 and at most 100 pph of TPCC, wherein the B consists of a polyester resin component (abbreviated as PRC) and an epoxy crosslinker (abbreviated as EPX) that is able to react with the PRC, wherein:

    - the PRC consists of one or more carboxylic acid functional polyester resins (each one of them abbreviated as CAPR), each of which has:

        - an acid value (abbreviated as AV) determined titrimetrically according to the ISO 2144:2000, of at least 38 and at most 84 mg KOH/g, and a hydroxyl value (abbreviated as OHV) determined titrimetrically according to the ISO 4629-2:2016, that is lower than the AV,
        - a glass transition temperature (abbreviated as $T_g$) determined according to the method described in the description, of at least 40 and at most 90 °C,
        - a number average molecular weight (abbreviated as $M_n$) determined via Size Exclusion Chromatography according to the method described in the description, of at least 1400 and at most 10000 Da, and
        wherein the CAPR is the polycondensation reaction product of:

            - at least components A1 and A2, and optionally one or any combination of components A2', A3 and A4, or
            - at least components A1, A2' and A3, and optionally one or any combination of components A2 and A4, and wherein the CAPR comprises polycondensed residues of the components A1, A2, A2', A3 and A4 as mentioned above, and as each one of the components A1, A2, A2', A3 and A4 is described below:
            - component A1 is selected from the group consisting of diols, and mixtures thereof,
            - component A2 is selected from the group consisting of citric acid, citric acid anhydride, and mixtures thereof,
            - component A2' is selected from the group consisting of C1-alkyl monoesters of citric acid, C2-alkyl monoesters of citric acid, C1-alkyl diesters of citric acid, C2-alkyl diesters of citric acid, C1-alkyl-C2-alkyl diesters of citric acid, C1-alkyl triester of citric acid, C2-alkyl triester of citric acid, C1-alkyl-C2-alkyl triesters of citric acid, and mixtures thereof,

- component A3 is selected from the group consisting of dicarboxylic acids, dicarboxylic acid anhydrides, and mixtures thereof, and
- component A4 is selected from the group consisting of tricarboxylic acids other than citric acid, tricarboxylic acid anhydrides other than citric acid anhydride, tetracarboxylic acids, tetracarboxylic acid anhydrides, trialcohols, tetralcohols, hexalcohols, and mixtures thereof,

wherein the total amount of the polycondensed residues of A2 (abbreviated as $W_{A2}$) when present in the CAPR, is at least 2.0 and at most 8.0 mol% based on CAPR, and wherein the total amount of the polycondensed residues of A2' (abbreviated as $W_{A2'}$) when present in the CAPR, is at least 2.0 and at most 8.0 mol% based on CAPR, and wherein the total amount of the polycondensed residues of A2 and A2' (abbreviated as $W_{A2/A2'}$) when both polycondensed residues of A2 and A2' are present in the CAPR, is at least 2.0 and at most 8.0 mol% based on CAPR, and wherein the total amount of monomers used for the preparation of the CAPR is 100 mol %, and
wherein the PRC has an acid value (abbreviated as $AV_{PRC}$) determined titrimetrically according to the ISO 2144:2000, of at least 38 and at most 84 mg KOH/g, and a hydroxyl value (abbreviated as $OHV_{PRC}$) determined titrimetrically according to the ISO 4629-2:2016, that is lower than the $AV_{PRC}$,
and

- the EPX consists of one or more epoxy compounds (abbreviated as CEPX) selected from the group consisting of i) epoxy resins and ii) epoxy monomers, wherein each of the epoxy resins and each of the epoxy monomers :

- is solid at 23±1 °C and atmospheric pressure,
- is able to react with the PRC,
- has more than one oxirane groups,
and

wherein the EPX has an epoxy equivalent weight (abbreviated as $EEW_{EPX}$) determined via manual titration according to the ASTM D1652-11 (2019), of at least 560 and at most 950 g/eq,
and

wherein the ratio R is at least 0.8 and at most 2.0, and wherein the ratio R is determined according to the following equation:

$$R= (56100 \times W_{EPX})/ (W_{PRC} \times AV_{PRC} \times EEW_{EPX})$$

wherein
each of the $EEW_{EPX}$ and $AV_{PRC}$ is as determined above,
$W_{EPX}$: is the amount of EPX in the constituent B (in pph of B),
$W_{PRC}$: is the amount of PRC in the constituent B (in pph of B),
and
wherein the aggregate of $W_{EPX}$ and $W_{PRC}$ is equal to 100 pph of B.

**2.** The thermosetting powder coating composition as claimed in claim 1, wherein the $EEW_{EPX}$ is at least 590 and at most 900, preferably at least 630 and at most 880, for example at least 650 and at most 850 g/eq.

**3.** The thermosetting powder coating composition as claimed in claim 1, wherein each of the epoxy resins and each of the epoxy monomers has an epoxy equivalent weight (abbreviated as $EEW_{CEPX}$) determined via manual titration according to the ASTM D1652-11 (2019), of at least 560 and at most 950 g/eq, preferably at least 590 and at most 900 g/eq, more preferably at least 630 and at most 880 g/eq, for example at least 650 and at most 850 g/eq.

**4.** The thermosetting powder coating composition as claimed in claim 1, wherein the $EEW_{EPX}$ is at least 560 and at most 950 g/eq and wherein each of the epoxy resins and each of the epoxy monomers has an epoxy equivalent weight (abbreviated as $EEW_{CEPX}$) determined via manual titration according to the ASTM D1652-11(2019), of at least 560 and at most 950 g/eq, preferably the $EEW_{EPX}$ is at least 590 and at most 900 g/eq and wherein each of the epoxy resins and each of the epoxy monomers has an epoxy equivalent weight (abbreviated as $EEW_{CEPX}$) determined via manual titration according to the ASTM D1652-11(2019), of at least 590 and at most 900 g/eq, more preferably the $EEW_{EPX}$ is at least 630 and at most 880 g/eq and wherein each of the epoxy resins and each of the

epoxy monomers has an epoxy equivalent weight (abbreviated as $EEW_{CEPX}$) determined via manual titration according to the ASTM D1652-11(2019), of at least 630 and at most 880 g/eq, for example the $EEW_{EPX}$ is at least 650 and at most 850 g/eq and wherein each of the epoxy resins and each of the epoxy monomers has an epoxy equivalent weight (abbreviated as $EEW_{CEPX}$) determined via manual titration according to the ASTM D1652-11(2019), of at least 650 and at most 850 g/eq.

**5.** The thermosetting powder coating composition as claimed in any one of the preceding claims, wherein each of the CEPX is selected from the group consisting of epoxy resins, preferably each of the CEPX is selected from the group consisting of bisphenol-A based epoxy resins, bisphenol-F based epoxy resins, novolac epoxy resins, and halogenated epoxy resins.

**6.** The thermosetting powder coating composition as claimed in any one of the preceding claims, wherein the ratio R is at least 0.9 and at most 2.0, preferably at least 0.9 and at most 1.8, for example at least 1.0 and at most 2.0, for example at least 1 and at most 1.8, for example at least 1.0 and at most 1.6.

**7.** The thermosetting powder coating composition as claimed in any one of the preceding claims, wherein

- the $W_{A2}$ is at least 2.0 and at most 7.8, and the $W_{A2'}$ is at least 2.0 and at most 7.8, and the $W_{A2/A2'}$ is at least 2.0 and at most 7.8 mol% based on CAPR.

**8.** The thermosetting powder coating composition as claimed in any one of the preceding claims, wherein:

- the thermosetting powder coating composition comprises the constituent B in an amount of at least 35 and at most 100, for example at least 45 and at most 100, for example at least 50 and at most 100, for example at least 60 and at most 100, for example at least 65 and at most 100 pph of TPCC,
and/or
- the AV is at least 38 and at most 84 and the $AV_{PRC}$ is at least 38 and at most 84, preferably the AV is at least 39 and at most 84 and the $AV_{PRC}$ is at least 39 and at most 84, for example the AV is at least 40 and at most 84 and the $AV_{PRC}$ is at least 40 and at most 84, for example the AV is at least 38 and at most 79 and the $AV_{PRC}$ is at least 38 and at most 79, preferably the AV is at least 39 and at most 79 and the $AV_{PRC}$ is at least 39 and at most 79, for example the AV is at least 40 and at most 79 and the $AV_{PRC}$ is at least 40 and at most 79 mg KOH/g,
and/or
- the $T_g$ is at least 45 and at most 90, for example at least 50 and at most 80 °C,
and/or
- the $M_n$ is at least 1400 and at most 10000, for example at least 1400 and at most 9000 Da.

**9.** The thermosetting powder coating composition as claimed in any one of the preceding claims 1 to 8, wherein the CAPR is the polycondensation reaction product of:

- only components A1, A2, A3, and optionally one or any combination of components A2' and A4,
or
- only components A1, A2' and A3, and optionally one or any combination of components A2 and A4.

**10.** The thermosetting powder coating composition as claimed in any one of preceding claims, wherein the amount of the polycondensed residue of A4 -when polycondensed residue of A4 is present in the CAPR-, is at most 5, preferably at most 3, for example at most 1 mol% based on CAPR.

**11.** The thermosetting powder coating composition as claimed in any one of the preceding claims, wherein the TPCC comprises the constituent B in an amount of at least 45 and at most 100 pph of TPCC, and wherein:

- the AV is at least 38 and at most 79 and the $AV_{PRC}$ is at least 38 and at most 79 mg KOH/g, preferably the AV is at least 40 and at most 79 and the $AV_{PRC}$ is at least 40 and at most 79 mg KOH/g,
- the $T_g$ is at least 50 and at most 85, preferably at least 50 and at most 80 °C,
- the $M_n$ is at least 1400 and at most 10000, preferably at least 1400 and at most 9000 Da,
- each of the epoxy resins and each of the epoxy monomers has an epoxy equivalent weight (abbreviated as $EEW_{CEPX}$) determined via manual titration according to the ASTM D1652-11(2019), of at least 650 and at most 850 g/eq, and wherein the EPX has an epoxy equivalent weight (abbreviated as $EEW_{EPX}$) of at least 650 and at most 850 g/eq, and

- the ratio R is at least 0.8 and at most 2.0, preferably at least 0.9 and at most 2.0, for example at least 1.0 and at most 2.0, for example at least 1.0 and at most 1.8, for example at least 1.0 and at most 1.6.

**12.** A cured thermosetting powder coating composition as the thermosetting powder coating composition is claimed in any one of the preceding claims 1 to 11.

**13.** A coating comprising a cured thermosetting powder coating composition as the cured thermosetting powder coating composition is claimed in claim 12.

**14.** An article having either i) coated thereon a thermosetting powder coating composition as the thermosetting powder coating composition is claimed in any one of claims 1 to 11, or ii) coated and cured thereon a thermosetting powder coating composition, as the thermosetting powder coating composition is claimed in any one of claims 1 to 11.

**15.** A process for making an object, wherein the process comprises the steps of i) providing a thermosetting powder coating composition as claimed in any one of claims 1 to 11, ii) providing a mould, iii) introducing the thermosetting powder coating composition into the mould, iv) applying pressure and/or vacuum and/or heating the mould at any temperature in the range of 70 to 250 °C, for at most 1 h to form the object, and v) collect the object from the mould.

**16.** A process for making a composition or a product suitable for any one of the applications selected from the group consisting of powder coatings, powder in-mould coatings, 3D-printing applications, automotive applications, marine applications, aerospace applications, medical compositions, medical products, medical devices, defence applications, sports/recreational applications, architectural applications, bottling applications, household applications, machinery applications, can applications, coil applications, energy applications, textile applications and electrical applications, wherein the process comprises the steps of providing a thermosetting powder coating composition as claimed in any one of claims 1 to 11, and reacting the PRC and EPX components of the constituent B of the thermosetting powder coating composition.

**17.** A use of:

i) a thermosetting powder coating composition as claimed in any one of claims 1 to 11; or
ii) a cured thermosetting powder coating composition as claimed in claim 12; or
iii) a coating as claimed in claim 13; or
iv) an article as claimed in claim 14;

in powder coatings, powder-in-mould coatings, 3D-printing, automotive applications, marine applications, aerospace applications, medical compositions, medical products, medical devices, defense applications, sports/recreational applications, architectural applications, bottling applications, household applications, machinery applications, can applications, coil applications, energy applications, textile applications and electrical applications.

## Patentansprüche

**1.** Wärmehartbare Pulverbeschichtungszusammensetzung (abgekürzt als TPCC), umfassend einen Bestandteil B (abgekürzt als B) in einer Menge von mindestens 25 und höchstens 100 pph von TPCC, wobei das B aus einer Polyesterharzkomponente (abgekürzt als PRC) und einem Epoxidvernetzer (abgekürzt als EPX) besteht, der mit dem PRC reagieren kann, wobei:

- das PRC aus einem oder mehreren Carbonsäurefunktionellen Polyesterharzen (jeweils abgekürzt als CAPR) besteht, die jeweils aufweisen:
- eine nach ISO 2144:2000 titrimetrisch ermittelte Säurezahl (abgekürzt AV) von mindestens 38 und höchstens 84 mg KOH/g und eine nach ISO 4629-2:2016 titrimetrisch ermittelte Hydroxylzahl (abgekürzt OHV), die niedriger ist als die AV,
- eine Glasübergangstemperatur (abgekürzt als $T_g$), die nach der in der Beschreibung beschriebenen Methode bestimmt wird, von mindestens 40 und höchstens 90 °C,
- ein zahlenmittleres Molekulargewicht (abgekürzt als $M_n$), bestimmt mittels Größenausschlusschromatographie nach der in der Beschreibung beschriebenen Methode, von mindestens 1400 und höchstens 10000 Da, und wobei das CAPR das Polykondensationsreaktionsprodukt ist von:

- mindestens den Komponenten A1 und A2 und gegebenenfalls einer oder einer beliebigen Kombination der Komponenten A2', A3 und A4, oder
- mindestens den Komponenten A1, A2' und A3, und wahlweise einer oder einer beliebigen Kombination der Komponenten A2 und A4,

und wobei das CAPR polykondensierte Reste der Komponenten A1, A2, A2', A3 und A4, wie oben erwähnt, umfasst, und jede der Komponenten A1, A2, A2', A3 und A4 im Folgenden beschrieben wird:

- Komponente A1 ist ausgewählt aus der Gruppe bestehend aus Diolen und Mischungen davon,
- Komponente A2 ist ausgewählt aus der Gruppe, bestehend aus Zitronensäure, Zitronensäureanhydrid und Mischungen davon,
- Komponente A2' ist ausgewählt aus der Gruppe bestehend aus C1-Alkylmonoestern der Zitronensäure, C2-Alkylmonoestern der Zitronensäure, C1-Alkyldiestern der Zitronensäure, C2-Alkyldiestern der Zitronensäure, C1-Alkyl-C2-Alkyldiestern der Zitronensäure, C1-Alkyltriestern der Zitronensäure, C2-Alkyltriestern der Zitronensäure, C1-Alkyl-C2-alkyltriestern der Zitronensäure und Mischungen davon,
- Komponente A3 ist ausgewählt aus der Gruppe bestehend aus Dicarbonsäuren, Dicarbonsäureanhydriden und Mischungen davon, und
- Komponente A4 ist ausgewählt aus der Gruppe bestehend aus anderen Tricarbonsäuren als Zitronensäure, anderen Tricarbonsäureanhydriden als Zitronensäureanhydrid, Tetracarbonsäuren, Tetracarbonsäureanhydriden, Trialkoholen, Tetralkoholen, Hexalkoholen und Mischungen davon,

wobei die Gesamtmenge der polykondensierten Reste von A2 (abgekürzt als$W_{A2}$), wenn sie in dem CAPR vorhanden sind, mindestens 2,0 und höchstens 8,0 Mol-%, bezogen auf CAPR, beträgt, und wobei die Gesamtmenge der polykondensierten Reste von A2' (abgekürzt als $W_{A2'}$), wenn sie in dem CAPR vorhanden sind, mindestens 2,0 und höchstens 8,0 Mol-%, bezogen auf CAPR, beträgt, und wobei die Gesamtmenge der polykondensierten Reste von A2 und A2' (abgekürzt als $W_{A2}/_{A2'}$), wenn beide polykondensierten Reste von A2 und A2' in dem CAPR vorhanden sind, mindestens 2,0 und höchstens 8,0 Mol-%, bezogen auf CAPR, beträgt, und wobei die Gesamtmenge der für die Herstellung des CAPR verwendeten Monomere 100 Mol-% beträgt, und

wobei die PRC eine Säurezahl (abgekürzt als $AV_{PRC}$) die titrimetrisch nach ISO 2144:2000 bestimmt wird, von mindestens 38 und höchstens 84 mg KOH/g und eine Hydroxylzahl (abgekürzt als $OHV_{PRC}$), die titrimetrisch nach ISO 4629-2:2016 bestimmt wird, aufweist, die niedriger als die $AV_{PRC}$ ist, und

- der EPX aus einer oder mehreren Epoxidverbindungen (abgekürzt als CEPX) besteht, die aus der Gruppe ausgewählt sind, die aus i) Epoxidharzen und ii) Epoxidmonomeren besteht, wobei jedes der Epoxidharze und jedes der Epoxidmonomere:

  - bei 23±1 °C und Atmosphärendruck fest ist,
  - in der Lage ist, mit der PRC zu reagieren,
  - mehr als eine Oxirangruppe aufweist, und

wobei der EPX ein Epoxid-Äquivalentgewicht (abgekürzt als $EEW_{EPX}$), bestimmt durch manuelle Titration gemäß ASTM D1652-11 (2019), von mindestens 560 und höchstens 950 g/Äq. aufweist und wobei das Verhältnis R mindestens 0,8 und höchstens 2,0 beträgt, und wobei das Verhältnis R nach der folgenden Gleichung bestimmt wird:

$$R = (56100 \text{ x } W_{EPX})/\ W_{PRC} \text{ x } AV_{PRC} \text{ x } EEW_{EPX})$$

wobei
$EEW_{EPX}$ und $AV_{PRC}$ jeweils wie oben bestimmt werden, $W_{EPX}$: die Menge an EPX in dem Bestandteil B (in pph von B) ist,
$W_{PRC}$: die Menge an PRC in dem Bestandteil B (in pph von B) ist,
und
wobei die Gesamtsumme von $W_{EPX}$ und $W_{PRC}$ gleich 100 pph von B ist.

**2.** Wärmehartbare Pulverbeschichtungszusammensetzung nach Anspruch 1, wobei das $EEW_{EPX}$ mindestens 590 und höchstens 900, vorzugsweise mindestens 630 und höchstens 880, zum Beispiel mindestens 650 und höchstens

850 g/Äq. beträgt.

3. Wärmehartbare Pulverbeschichtungszusammensetzung nach Anspruch 1, wobei jedes der Epoxidharze und jedes der Epoxidmonomere ein Epoxid-Äquivalentgewicht (abgekürzt als $EEW_{CEPX}$), bestimmt durch manuelle Titration gemäß ASTM D1652-11 (2019), von mindestens 560 und höchstens 950 g/Äq., vorzugsweise mindestens 590 und höchstens 900 g/Äq., noch bevorzugter mindestens 630 und höchstens 880 g/Äq., beispielsweise mindestens 650 und höchstens 850 g/Äq., aufweist.

4. Wärmehartbare Pulverbeschichtungszusammensetzung nach Anspruch 1, wobei das $EEW_{EPX}$ mindestens 560 und höchstens 950 g/Äq. beträgt und wobei jedes der Epoxidharze und jedes der Epoxidmonomere ein Epoxid-Äquivalentgewicht (abgekürzt als $EEW_{CEPX}$), das durch manuelle Titration gemäß ASTM D1652-11 (2019) bestimmt wird, von mindestens 560 und höchstens 950 g/Äq. aufweist, vorzugsweise beträgt das $EEW_{EPX}$ mindestens 590 und höchstens 900 g/Äq., und wobei jedes der Epoxidharze und jedes der Epoxidmonomere ein Epoxid-Äquivalentgewicht (abgekürzt als $EEW_{CEPX}$), das durch manuelle Titration gemäß ASTM D1652-11 (2019) bestimmt wird, von mindestens 590 und höchstens 900 g/Äq. aufweist, weiter bevorzugt beträgt das $EEW_{EPX}$ mindestens 630 und höchstens 880 g/Äq., und wobei jedes der Epoxidharze und jedes der Epoxidmonomere ein Epoxid-Äquivalentgewicht (abgekürzt $EEW_{CEPX}$), bestimmt durch manuelle Titration gemäß ASTM D1652-11 (2019), von mindestens 630 und höchstens 880 g/Äq. aufweist, beispielsweise beträgt das $EEW_{EPX}$ mindestens 650 und höchstens 850 g/Äq., und wobei jedes der Epoxidharze und jedes der Epoxidmonomere ein Epoxid-Äquivalentgewicht (abgekürzt als $EEW_{CEPX}$), bestimmt durch manuelle Titration gemäß ASTM D1652-11 (2019), von mindestens 650 und höchstens 850 g/Äq. aufweist.

5. Wärmehartbare Pulverbeschichtungszusammensetzung, wie in einem der vorangehenden Ansprüche beansprucht, wobei jedes der CEPX aus der Gruppe ausgewählt ist, die aus Epoxidharzen besteht, vorzugsweise ist jedes der CEPX aus der Gruppe ausgewählt, die aus Epoxidharzen auf Bisphenol-A-Basis, Epoxidharzen auf Bisphenol-F-Basis, Novolac-Epoxidharzen und halogenierten Epoxidharzen besteht.

6. Wärmehartbare Pulverbeschichtungszusammensetzung, wie in einem der vorangehenden Ansprüche beansprucht, wobei das Verhältnis R mindestens 0,9 und höchstens 2,0, vorzugsweise mindestens 0,9 und höchstens 1,8, beispielsweise mindestens 1,0 und höchstens 2,0, beispielsweise mindestens 1 und höchstens 1,8, beispielsweise mindestens 1,0 und höchstens 1,6 beträgt.

7. Wärmehartbare Pulverbeschichtungszusammensetzung, wie in einem der vorangehenden Ansprüche beansprucht, wobei

- $W_{A2}$ mindestens 2,0 und höchstens 7,8 ist und $W_{A2'}$ mindestens 2,0 und höchstens 7,8 ist und $W_{A2/A2'}$ mindestens 2,0 und höchstens 7,8 Mol-%, bezogen auf CAPR, beträgt.

8. Wärmehartbare Pulverbeschichtungszusammensetzung, wie in einem der vorangehenden Ansprüche beansprucht, wobei:

- die wärmehartbare Pulverbeschichtungszusammensetzung den Bestandteil B in einer Menge von mindestens 35 und höchstens 100, zum Beispiel mindestens 45 und höchstens 100, zum Beispiel mindestens 50 und höchstens 100, zum Beispiel mindestens 60 und höchstens 100, zum Beispiel mindestens 65 und höchstens 100 pph TPCC, umfasst,
und/oder
- der AV-Wert mindestens 38 und höchstens 84 und der $AV_{PRC}$-Wert mindestens 38 und höchstens 84 beträgt, vorzugsweise der AV-Wert mindestens 39 und höchstens 84 und der $AV_{PRC}$-Wert mindestens 39 und höchstens 84 beträgt, beispielsweise der AV-Wert mindestens 40 und höchstens 84 und der $AV_{PRC}$-Wert mindestens 40 und höchstens 84 beträgt, zum Beispiel beträgt der AV-Wert mindestens 38 und höchstens 79 und der $AV_{PRC}$-Wert beträgt mindestens 38 und höchstens 79, vorzugsweise beträgt der AV-Wert mindestens 39 und höchstens 79 und der $AV_{PRC}$-Wert beträgt mindestens 39 und höchstens 79, zum Beispiel beträgt der AV-Wert mindestens 40 und höchstens 79 und der $AV_{PRC}$-Wert beträgt mindestens 40 und höchstens 79 mg KOH/g,
und/oder
- die Tg mindestens 45 und höchstens 90, beispielsweise mindestens 50 und höchstens 80 °C beträgt, und/oder
- das $M_n$ mindestens 1400 und höchstens 10000, zum Beispiel mindestens 1400 und höchstens 9000 Da beträgt.

9. Wärmehartbare Pulverbeschichtungszusammensetzung nach einem der vorhergehenden Ansprüche 1 bis 8, wobei

das CAPR das Polykondensationsreaktionsprodukt ist von:

- nur den Komponenten A1, A2, A3 und gegebenenfalls einer oder einer beliebigen Kombination der Komponenten A2' und A4,
oder
- nur den Komponenten A1, A2' und A3 und wahlweise einer oder einer beliebigen Kombination der Komponenten A2 und A4.

10. Wärmehartbare Pulverbeschichtungszusammensetzung, wie in einem der vorangehenden Ansprüche beansprucht, wobei die Menge des polykondensierten Restes von A4 - wenn der polykondensierte Rest von A4 in dem CAPRvorhanden ist, höchstens 5, vorzugsweise höchstens 3, zum Beispiel höchstens 1 Mol-%, bezogen auf das CAPR, beträgt.

11. Wärmehartbare Pulverbeschichtungszusammensetzung, wie in einem der vorangehenden Ansprüche beansprucht, wobei die TPCC den Bestandteil B in einer Menge von mindestens 45 und höchstens 100 pph der TPCC umfasst, und wobei:

- der AV-Wert mindestens 38 und höchstens 79 beträgt und der $AV_{PRC}$-Wert mindestens 38 und höchstens 79 mg KOH/g beträgt, vorzugsweise beträgt der AV-Wert mindestens 40 und höchstens 79 und der $AV_{PRC}$-Wert beträgt mindestens 40 und höchstens 79 mg KOH/g,
- die $T_g$ mindestens 50 und höchstens 85, vorzugsweise mindestens 50 und höchstens 80 °C beträgt,
- das $M_n$ mindestens 1400 und höchstens 10000, vorzugsweise mindestens 1400 und höchstens 9000 Da beträgt,
- jedes der Epoxidharze und jedes der Epoxidmonomere ein Epoxid-Äquivalentgewicht (abgekürzt $EEW_{CEPX}$), bestimmt durch manuelle Titration gemäß ASTM D1652-11 (2019), von mindestens 650 und höchstens 850 g/Äq. aufweist, und wobei der EPX ein Epoxid-Äquivalentgewicht (abgekürzt $EEW_{EPX}$) von mindestens 650 und höchstens 850 g/Äq. aufweist, und
- das Verhältnis R mindestens 0,8 und höchstens 2,0, vorzugsweise mindestens 0,9 und höchstens 2,0, zum Beispiel mindestens 1,0 und höchstens 2,0, zum Beispiel mindestens 1,0 und höchstens 1,8, zum Beispiel mindestens 1,0 und höchstens 1,6 beträgt.

12. Gehärtete wärmehartbare Pulverbeschichtungszusammensetzung, wie die wärmehärtbare Pulverbeschichtungszusammensetzung nach einem der vorhergehenden Ansprüche 1 bis 11.

13. Beschichtung, umfassend eine gehärtete wärmehartbare Pulverbeschichtungszusammensetzung, wie die gehärtete wärmehartbare Pulverbeschichtungszusammensetzung nach Anspruch 12.

14. Gegenstand, der entweder i) mit einer wärmehartbaren Pulverbeschichtungszusammensetzung, wie der wärmehartbaren Pulverbeschichtungszusammensetzung gemäß einem der Ansprüche 1 bis 11, beschichtet ist, oder ii) mit einer wärmehartbaren Pulverbeschichtungszusammensetzung, wie der wärmehartbaren Pulverbeschichtungszusammensetzung gemäß einem der Ansprüche 1 bis 11, beschichtet und gehärtet ist.

15. Verfahren zur Herstellung eines Gegenstands, wobei das Verfahren die folgenden Schritte umfasst: i) Bereitstellen einer wärmehärtbaren Pulverbeschichtungszusammensetzung gemäß einem der Ansprüche 1 bis 11, ii) Bereitstellen einer Form, iii) Einbringen der wärmehärtbaren Pulverbeschichtungszusammensetzung in die Form, iv) Anwenden von Druck und/oder Vakuum und/oder Erhitzen der Form auf eine beliebige Temperatur im Bereich von 70 bis 250 °C für höchstens 1 h, um den Gegenstand zu formen, und v) Entnehmen des Gegenstands aus der Form.

16. Verfahren zur Herstellung einer Zusammensetzung oder eines Produkts, das für eine der Anwendungen geeignet ist, die aus der Gruppe ausgewählt sind, die aus Pulverbeschichtungen, In-Mould-Pulverbeschichtungen, 3D-Druckanwendungen, Automobilanwendungen, Schiffsanwendungen, Luft- und Raumfahrtanwendungen, medizinischen Zusammensetzungen, medizinischen Produkten, medizinischen Geräten, Verteidigungsanwendungen bzw. -applikationen, Sport-/Freizeit-Anwendungen, Architektur-Anwendungen, Abfüllanwendungen, Haushaltsanwendungen, Maschinenanwendungen, Dosenanwendungen, Spulenanwendungen, Energieanwendungen, Textilanwendungen und elektrischen Anwendungen besteht, wobei das Verfahren die Schritte des Bereitstellens einer wärmehartbaren Pulverbeschichtungszusammensetzung gemäß einem der Ansprüche 1 bis 11 und des Umsetzens der PRC- und EPX-Komponenten des Bestandteils B der wärmehartbaren Pulverbeschichtungszusammensetzung umfasst.

**17.** Verwendung von:

i) einer wärmehartbaren Pulverbeschichtungszusammensetzung nach einem der Ansprüche 1 bis 11; oder
ii) einer gehärteten wärmehartbaren Pulverbeschichtungszusammensetzung nach Anspruch 12; oder
iii) einer Beschichtung nach Anspruch 13; oder
iv) einen Gegenstand nach Anspruch 14;

in Pulverbeschichtungen, Pulver-In-Mould-Beschichtungen, 3D-Druck, Automobilanwendungen, Schiffsanwendungen, Luft- und Raumfahrtanwendungen, medizinischen Zusammensetzungen, medizinischen Produkten, medizinischen Geräten, Verteidigungsanwendungen, Sport-/Freizeit-Anwendungen, Architektur-Anwendungen, Abfüllanwendungen, Haushaltsanwendungen, Maschinenanwendungen, Dosenanwendungen, Spulenanwendungen, Energieanwendungen, Textilanwendungen und elektrischen Anwendungen.

## Revendications

**1.** Composition de revêtement en poudre thermodurcissable (abrégée en TPCC) comprenant un constituant B (abrégé en B) en une quantité d'au moins 25 et d'au plus 100 pph de TPCC, le B étant constitué d'un composant résine de polyester (abrégé comme PRC) et d'un agent de réticulation d'époxy (abrégé en EPX) qui est capable de réagir avec le PRC,

- le PRC étant constitué d'une ou plusieurs résines de polyester fonctionnalisé par un acide carboxylique (chacune d'elles abrégée en CAPR), chacune desquelles ayant :

◦ un indice d'acide (abrégé en AV) déterminé par titrimétrie selon la norme ISO 2144:2000, d'au moins 38 et d'au plus 84 mg de KOH/g, et un indice d'hydroxyle (abrégé en OHV) déterminé par titrimétrie selon la norme ISO 4629-2:2016, qui est inférieur à l'AV,
◦ une température de transition vitreuse (abrégée en $T_g$) déterminée selon le procédé décrit dans la description, d'au moins 40 et d'au plus 90 °C,
◦ un poids moléculaire moyen en nombre (abrégé en $M_n$) déterminé via une chromatographie d'exclusion stérique selon le procédé décrit dans la description, d'au moins 1 400 et d'au plus 10 000 Da, et
la CAPR étant le produit d'une réaction de polycondensation de :

- au moins des composants A1 et A2, et éventuellement l'un ou une quelconque combinaison de composants A2', A3 et A4, ou
- au moins des composants A1, A2' et A3, et éventuellement l'un ou une combinaison quelconque de composants A2 et A4,

et la CAPR comprenant des radicaux polycondensés des composants A1, A2, A2', A3 et A4 tels que mentionnés ci-dessus, et comme chacun des composants A1, A2, A2', A3 et A4 est décrit ci-dessous :

- le composant A1 est choisi dans le groupe constitué par des diols, et des mélanges correspondants,
- le composant A2 est choisi dans le groupe constitué par l'acide citrique, l'anhydride d'acide citrique et des mélanges correspondants,
- le composant A2' est choisi dans le groupe constitué par des monoesters d'alkyle en C1 d'acide citrique, des monoesters d'alkyle en C2 d'acide citrique, des diesters d'alkyle en C1 d'acide citrique, des diesters d'alkyle en C2 d'acide citrique, des diesters d'alkyle en C1-alkyle en C2 d'acide citrique, un triester d'alkyle en C1 d'acide citrique, un triester d'alkyle en C2 d'acide citrique, des triesters d'alkyle en C1-alkyle en C2 d'acide citrique, et des mélanges correspondants,
- le composant A3 est choisi dans le groupe constitué par des acides dicarboxyliques, des anhydrides d'acides dicarboxyliques et des mélanges correspondants, et
- le composant A4 est choisi dans le groupe constitué par des acides tricarboxyliques autres que l'acide citrique, des anhydrides d'acides tricarboxyliques autres que l'anhydride d'acide citrique, des acides tétracarboxyliques, des anhydrides d'acides tétracarboxyliques, des trialcools, des tétralcools, des hexalcools, et des mélanges correspondants,

la quantité totale des radicaux polycondensés de A2 (abrégés en $W_{A2}$) lorsqu'ils sont présents dans la CAPR, étant d'au moins 2,0 et d'au plus 8,0 % en moles basé sur CAPR, et la quantité totale des radicaux

polycondensés de A2' (abrégés en $W_{A2'}$) lorsqu'ils sont présents dans la CAPR, étant d'au moins 2,0 et d'au plus 8,0 % en moles basé sur CAPR, et la quantité totale des radicaux polycondensés de A2 et A2' (abrégés en $W_{A21A2'}$) lorsque les deux radicaux polycondensés de A2 et A2' sont présents dans la CAPR, étant d'au moins 2,0 et d'au plus 8,0 % en moles basé sur CAPR, et la quantité totale de monomères utilisés pour la préparation de la CAPR étant de 100 % en moles, et
le PRC ayant un indice d'acide (abrégé en $AV_{PRC}$) déterminé par titrimétrie selon la norme ISO 2144:2000, d'au moins 38 et d'au plus 84 mg de KOH/g, et un indice d'hydroxyle (abrégé en $OHV_{PRC}$) déterminé par titrimétrie selon la norme ISO 4629-2:2016, qui est inférieur à l'$AV_{PRC}$, et

- l'EPX étant constitué d'un ou plusieurs composés d'époxy (abrégés en CEPX) choisis dans le groupe constitué par i) des résines époxy et ii) des monomères d'époxy, chacune des résines époxy et chacun des monomères d'époxy :

  - étant solides à 23 $\pm$ 1 °C et à pression atmosphérique,
  - étant capables de réagir avec le PRC,
  - ayant plus d'un groupe oxirane, et l'EPX ayant un poids équivalent d'époxy (abrégé en $EEW_{EPX}$) déterminé par titrage manuel selon la norme ASTM D1652-11(2019), d'au moins 560 et d'au plus 950 g/éq,

et

le rapport R étant d'au moins 0,8 et d'au plus 2,0, et le rapport R étant déterminé selon l'équation suivante :

$$R= (56100 \times W_{EPX})/ (W_{PRC} \times AV_{PRC} \times EEW_{EPX})$$

chacun parmi l'$EEW_{EPX}$ et l'$AV_{PRC}$ étant tel que déterminé ci-dessus,
$W_{EPX}$ : étant la quantité d'EPX dans le constituant B (en pph de B),
$W_{PRC}$ : étant la quantité de PRC dans le constituant B (en pph de B),
et
l'ensemble de $W_{EPX}$ et $W_{PRC}$ étant égal à 100 pph de B.

**2.** Composition de revêtement en poudre thermodurcissable selon la revendication 1, l'$EEW_{EPX}$ étant d'au moins 590 et d'au plus 900, préférablement d'au moins 630 et d'au plus 880, par exemple au moins 650 et au plus 850 g/éq.

**3.** Composition de revêtement en poudre thermodurcissable selon la revendication 1, chacune des résines époxy et chacun des monomères d'époxy ayant un poids équivalent d'époxy (abrégé en $EEW_{CEPX}$) déterminé via titrage manuel selon la norme ASTM D1652-11(2019), d'au moins 560 et d'au plus 950 g/éq, préférablement au moins 590 et au plus 900 g/éq, plus préférablement au moins 630 et au plus 880 g/éq, par exemple au moins 650 et au plus 850 g/éq.

**4.** Composition de revêtement en poudre thermodurcissable selon la revendication 1, l'$EEW_{EPX}$ étant d'au moins 560 et d'au plus 950 g/éq et chacune des résines époxy et chacun des monomères d'époxy ayant un poids équivalent d'époxy (abrégé en $EEW_{CEPX}$) déterminé via titrage manuel selon la norme ASTM D1652-11(2019), d'au moins 560 et d'au plus 950 g/éq, préférablement l'$EEW_{EPX}$ étant d'au moins 590 et d'au plus 900 g/éq et chacune des résines époxy et chacun des monomères d'époxy ayant un poids équivalent d'époxy (abrégé en $EEW_{CEPX}$) déterminé via titrage manuel selon la norme ASTM D1652-11(2019), d'au moins 590 et d'au plus 900 g/éq, plus préférablement l'$EEW_{EPX}$ étant d'au moins 630 et d'au plus 880 g/éq et chacune des résines époxy et chacun des monomères d'époxy ayant un poids équivalent d'époxy (abrégé en $EEW_{CEPX}$) déterminé via titrage manuel selon la norme ASTM D1652-11(2019), d'au moins 630 et d'au plus 880 g/éq, par exemple l'$EEW_{EPX}$ étant d'au moins 650 et d'au plus 850 g/éq et chacune des résines époxy et chacun des monomères d'époxy ayant un poids équivalent d'époxy (abrégé en $EEW_{CEPX}$) déterminé via titrage manuel selon la norme ASTM D1652-11(2019), d'au moins 650 et d'au plus 850 g/éq.

**5.** Composition de revêtement en poudre thermodurcissable selon l'une quelconque des revendications précédentes, chacun parmi le CEPX étant choisi dans le groupe constitué par des résines époxy, préférablement chacun parmi le CEPX étant choisi dans le groupe constitué par des résines époxy à base de bisphénol A, des résines époxy à base de bisphénol F, des résines époxy novolaque et des résines époxy halogénées.

**6.** Composition de revêtement en poudre thermodurcissable selon l'une quelconque des revendications précédentes, le rapport R étant d'au moins 0,9 et d'au plus 2,0, préférablement au moins 0,9 et au plus 1,8, par exemple au moins 1,0 et au plus 2,0, par exemple au moins 1 et au plus 1,8, par exemple au moins 1,0 et au plus 1,6.

**7.** Composition de revêtement en poudre thermodurcissable selon l'une quelconque des revendications précédentes,

- le $W_{A2}$ étant d'au moins 2,0 et d'au plus 7,8, le $W_{A2'}$ étant d'au moins 2,0 et d'au plus 7,8 et le $W_{A2/A2'}$ étant d'au moins 2,0 et d'au plus 7,8 % en moles basé sur CAPR.

**8.** Composition de revêtement en poudre thermodurcissable selon l'une quelconque des revendications précédentes,

- la composition de revêtement en poudre thermodurcissable comprenant le constituant B en une quantité d'au moins 35 et d'au plus 100, par exemple au moins 45 et au plus 100, par exemple au moins 50 et au plus 100, par exemple au moins 60 et au plus 100, par exemple au moins 65 et au plus 100 pph de TPCC,
et/ou
- l'AV étant d'au moins 38 et d'au plus 84 et l'$AV_{PRC}$ étant d'au moins 38 et d'au plus 84, préférablement l'AV étant d'au moins 39 et d'au plus 84 et l'$AV_{PRC}$ étant d'au moins 39 et d'au plus 84, par exemple l'AV étant d'au moins 40 et d'au plus 84 et l'$AV_{PRC}$ étant d'au moins 40 et d'au plus 84, par exemple l'AV étant d'au moins 38 et d'au plus 79 et l'$AV_{PRC}$ étant d'au moins 38 et d'au plus 79, préférablement l'AV étant d'au moins 39 et d'au plus 79 et l'$AV_{PRC}$ étant d'au moins 39 et d'au plus 79, par exemple l'AV étant d'au moins 40 et d'au plus 79 et l'$AV_{PRC}$ étant d'au moins 40 et d'au plus 79 mg de KOH/g, et/ou
- la $T_g$ étant d'au moins 45 et d'eau plus 90, par exemple au moins 50 et au plus 80 °C,
et/ou
- le $M_n$ étant d'au moins 1 400 et d'au plus 10 000, par exemple au moins 1 400 et au plus 9 000 Da.

**9.** Composition de revêtement en poudre thermodurcissable selon l'une quelconque des revendications précédentes 1 à 8, la CAPR étant le produit d'une réaction de polycondensation de :

- seulement les composants A1, A2 A3, et éventuellement l'un ou une quelconque combinaison de composants A2' et A4, ou
- seulement les composants A1, A2' et A3, et éventuellement l'un ou une quelconque combinaison de composants A2 et A4.

**10.** Composition de revêtement en poudre thermodurcissable selon l'une quelconque des revendications précédentes, la quantité du radical polycondensé de A4 - lorsqu'un radical polycondensé de A4 est présent dans la CAPR -, étant d'au plus 5, préférablement au plus 3, par exemple au plus 1 % en moles basé sur CAPR.

**11.** Composition de revêtement en poudre thermodurcissable selon l'une quelconque des revendications précédentes, la TPCC comprenant le constituant B en une quantité d'au moins 45 et d'au plus 100 pph de TPCC, et :

- l'AV étant d'au moins 38 et d'au plus 79 et l'$AV_{PRc}$ étant d'au moins 38 et d'au plus 79 mg de KOH/g, préférablement l'AV étant d'au moins 40 et d'au plus 79 et l'$AV_{PRC}$ étant d'au moins 40 et d'au plus 79 mg de KOH/g,
- la $T_g$ étant d'au moins 50 et d'au plus 85, préférablement au moins 50 et au plus 80 °C,
- le $M_n$ étant d'au moins 1 400 et d'au plus 10 000, préférablement au moins 1 400 et au plus 9 000 Da,
- chacune des résines époxy et chacun des monomères d'époxy ayant un poids équivalent d'époxy (abrégé en $EEW_{CEPX}$) déterminé via titrage manuel selon la norme ASTM D1652-11(2019), d'au moins 650 et d'au plus 850 g/éq, et l'EPX ayant un poids équivalent d'époxy (abrégé en $EEW_{EPX}$) d'au moins 650 et d'au plus 850 g/éq, et
- le rapport R étant d'au moins 0,8 et d'au plus 2,0, préférablement au moins 0,9 et au plus 2,0, par exemple au moins 1,0 et au plus 2,0, par exemple au moins 1,0 et au plus 1,6.

**12.** Composition de revêtement en poudre thermodurcissable durcie comme la composition de revêtement en poudre thermodurcissable est revendiquée dans l'une quelconque des revendications précédentes 1 à 11.

**13.** Revêtement comprenant une composition de revêtement en poudre thermodurcissable durcie comme la composition de revêtement en poudre thermodurcissable durcie est revendiquée dans la revendication 12.

**14.** Article ayant soit i) revêtue sur celui-ci une composition de revêtement en poudre thermodurcissable comme la

composition de revêtement en poudre thermodurcissable est revendiquée dans l'une quelconque des revendications 1 à 11, ou ii) revêtue et durcie sur celui-ci une composition de revêtement en poudre thermodurcissable, comme la composition de revêtement en poudre thermodurcissable est revendiquée dans l'une quelconque des revendications 1 à 11.

**15.** Procédé pour la fabrication d'un objet, le procédé comprenant les étapes de i) fourniture d'une composition de revêtement en poudre thermodurcissable selon l'une quelconque des revendication 1 à 11, ii) fourniture d'un moule, iii) introduction de la composition de revêtement en poudre thermodurcissable dans le moule, iv) application de pression et/ou de vide et/ou de chauffage au moule à une quelconque température dans la plage de 70 à 250 °C, pendant au plus 1 h pour former l'objet, et v) collecte de l'objet du moule.

**16.** Procédé pour la fabrication d'une composition ou d'un produit approprié(e) pour l'une quelconque des applications choisies dans le groupe constitué par des revêtements en poudre, revêtements en moule en poudre, applications d'impression 3D, applications automobiles, applications marines, applications aérospatiales, compositions médicales, produits médicaux, dispositifs médicaux, applications de défense, applications sportives/récréatives, applications architecturales, applications d'embouteillage, applications domestiques, applications de machines, applications de canettes, applications de bobines, applications énergétiques, applications textiles et applications électriques, le procédé comprenant les étapes de fourniture d'une composition de revêtement en poudre thermodurcissable selon l'une quelconque des revendications 1 à 11, et la mise en réaction des composants PRC et EPX du constituant B de la composition de revêtement en poudre thermodurcissable.

**17.** Utilisation de :

i) une composition de revêtement en poudre thermodurcissable selon l'une quelconque des revendications 1 à 11 ; ou
ii) une composition de revêtement en poudre thermodurcissable durcie selon la revendication 12 ; ou
iii) un revêtement selon la revendication 13 ; ou
iv) un article selon la revendication 14 ;

dans des revêtements en poudre, revêtements en moule en poudre, applications d'impression 3D, applications automobiles, applications marines, applications aérospatiales, compositions médicales, produits médicaux, dispositifs médicaux, applications de défense, applications sportives/récréatives, applications architecturales, applications d'embouteillage, applications domestiques, applications de machines, applications de canettes, applications de bobines, applications énergétiques, applications textiles et applications électriques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6599993 B1
- WO 0250194 A


### Non-patent literature cited in the description


- **NOORDOVER, B. A. J.** Biobased step-growth polymers: Chemistry, Functionality and Applicability. TU/e Eindhoven University of Technology, 01 January 2008
- **WICKS, JR. Z. W. ; JONES, F. N. ; PAPPAS, S. P.** Organic Coatings, Science And Technology. 208-214
- *CHEMICAL ABSTRACTS,* 2273-43-0
- *CHEMICAL ABSTRACTS,* 3806-34-6
- *CHEMICAL ABSTRACTS,* 25036-25-3